# EUROPEAN PATENT APPLICATION

(11) **EP 2 451 168 A1**
(43) Date of publication of application: **09.05.2012**
(21) Application number: 10794024.9
(22) Date of filing: 22.06.2010
(51) Int. Cl.: H04N 13/00, H04N 7/173, H04N 7/26

(54) **THREE-DIMENSIONAL IMAGE DATA TRANSMISSION DEVICE, THREE-DIMENSIONAL IMAGE DATA TRANSMISSION METHOD, THREE-DIMENSIONAL IMAGE DATA RECEPTION DEVICE, AND THREE-DIMENSIONAL IMAGE DATA RECEPTION METHOD**

(30) Priority: 29.06.2009 JP 2009153686; 18.12.2009 JP 2009288433
(71) Applicant: Sony Corporation, Tokyo 108-0075 (JP)
(72) Inventor: TSUKAGOSHI, Ikuo, Tokyo 108-0075 (JP)
(74) Representative: Thévenet, Jean-Bruno
(86) International application number: PCT/JP2010/060582
(87) International publication number: WO 2011/001854

(57) **Abstract**

[Object] To maintain the consistency in perspective, in the display of subtitle information, graphics information, or the like, between the information and each object in an image.

[Solution] A video framing unit 112 modifies left-eye image data and right-eye image data into a state according to a transmission method, and obtains transmission stereo image data. A subtitle/graphics producing unit 118 produces data of superimposition information such as subtitle information. A Z data unit 127 outputs, for each piece of data of the superimposition information such as subtitle information, disparity information (disparity vectors) associated therewith. A subtitle/graphic encoder 119 embeds disparity information in a data stream including data of the subtitle information or the like. A multiplexer 122 multiplexes data streams from individual encoders, and obtains bit stream data BSD to be transmitted.

## Description

### Technical Field

The present invention relates to a stereo image data transmitting apparatus, a stereo image data transmitting method, a stereo image data receiving apparatus, and a stereo image data receiving method, and more specifically to a stereo image data transmitting apparatus and the like capable of displaying superimposition information such as subtitle information, graphics information, or text information as desired.

### Background Art

For example, in PTL 1, a transmission method of stereo image data using television broadcast airwaves is proposed. In this case, stereo image data including left-eye image data and right-eye image data is transmitted, and a television receiver performs stereo image display utilizing binocular disparity.

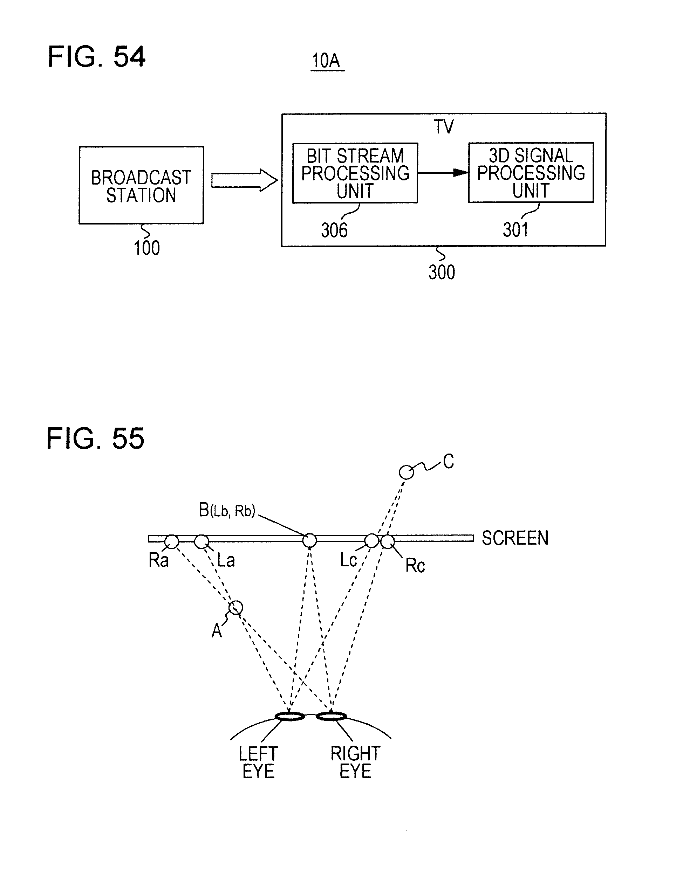

Fig. 55 illustrates a relationship in stereo image display utilizing binocular disparity between display positions of left and right images of an object on a screen and a reproduction position of a stereoscopic image. For example, for an object A of which a left image La and a right image Ra are displayed shifted to the right and to the left, respectively, on a screen in the manner as illustrated in the figure, the reproduction position of a stereoscopic image is located in front of the surface of the screen because left and right lines of sight intersect in front of the surface of the screen.

Also, for example, for an object B of which a left image Lb and a right image Rb are displayed at the same position on the screen in the manner as illustrated in the figure, the reproduction position of a stereoscopic image is located on the surface of the screen because left and right lines of sight intersect on the surface of the screen. Furthermore, for example, for an object C of which a left image Lc and a right image Rc are displayed shifted to the left and to the right, respectively, on the screen in the manner as illustrated in the figure, the reproduction position of a stereoscopic image is located behind the surface of the screen because left and right lines of sight intersect behind the surface of the screen.

### Citation List

### Patent Literature

PTL 1: Japanese Unexamined Patent Application Publication No. 2005-6114

### Summary of Invention

### Technical Problem

As described above, in stereo image display, in general, a viewer perceives the perspective of a stereo image by utilizing binocular disparity. It is desired that superimposition information to be superimposed on an image, such as, for example, subtitle information, graphics information, or text information, be rendered in association with the stereo image display not only in terms of two-dimensional space but also in terms of three-dimensional depth feeling.

For example, in a case where a subtitle that is subtitle information is to be superimposed and displayed (overlay displayed) on an image, if the subtitle is not displayed in front of the closest object in the image in terms of perspective, the viewer may feel inconsistency in perspective. Also, it is desired that also in a case where other graphics information or text information is to be superimposed and displayed on an image, disparity adjustment be performed in accordance with the perspective of each object in the image to maintain the consistency in perspective.

It is an object of the present invention to maintain the consistency in perspective, in the display of superimposition information such as subtitle information, graphics information, or text information, between the superimposition information and each object in an image.

### Solution to Problem

A concept of the present invention resides in a stereo image data transmitting apparatus including:
a first data stream generation unit that generates a first data stream including left-eye image data and right-eye image data for displaying a stereo image;
a disparity information output unit that outputs disparity information for giving disparity to superimposition information to be superimposed on an image that is based on the left-eye image data and the right-eye image data;
a second data stream generation unit that generates a second data stream including data of the superimposition information and having embedded therein the disparity information output from the disparity information output unit; and
a data transmitting unit that multiplexes the first data stream generated by the first data stream generation unit and the second data stream generated by the second data stream generation unit and that transmits a multiplexed stream.

In the present invention, a first data stream including left-eye image data and right-eye image data for displaying a stereo image is generated by a first data stream generation unit. Also, disparity information for giving disparity to superimposition information to be superimposed on an image that is based on the left-eye image data and the right-eye image data is output by a disparity information output unit.

For example, the disparity information output unit is configured to include a disparity information determination unit that determines the disparity information for each piece of data of the superimposition information in accordance with content of the image that is based on the left-eye image data and the right-eye image data, and to output the disparity information determined by the disparity information determination unit. In this case, for example, the disparity information determination unit is configured to include a disparity information detection unit that detects disparity information about one of a left-eye image and a right-eye image with respect to the other at a plurality of positions in an image on the basis of the left-eye image data and the right-eye image data, and to determine, for each piece of data of the superimposition information, disparity information detected at a detection position corresponding to a superimposed position among a plurality of pieces of disparity information detected by the disparity information detection unit.

Also, for example, the disparity information output unit is configured to include a disparity information setting unit that sets the disparity information for each piece of data of the superimposition information, and to output the disparity information set by the disparity information setting unit. In the disparity information setting unit, for example, disparity information is set for each piece of data of superimposition information through a predetermined program process or a manual operation of a user.

For example, different pieces of disparity information are set in accordance with the superimposed position, or common disparity information is set regardless of the superimposed position. Alternatively, a different piece of disparity information is set for each type of superimposition information. Here, the type of superimposition information is, for example, a type such as subtitle information, graphics information, or text information. Also, the type of superimposition information is, for example, a type categorized by superimposed position, superimposition duration, or the like.

Also, for example, the disparity information output unit is configured to include a disparity information determination unit that determines, for each piece of data of the superimposition information, the disparity information in accordance with content of the image that is based on the left-eye image data and the right-eye image data, and a disparity information setting unit that sets the disparity information for each piece of data of the superimposition information, and to selectively output the disparity information determined by the disparity information determination unit or the disparity information set by the disparity information setting unit.

Also, a second data stream including data of superimposition information and having embedded therein disparity information output from the disparity information output unit is generated by a second data stream generation unit. Then, the first data stream generated by the first data stream generation unit and the second data stream generated by the second data stream generation unit are multiplexed and are transmitted by a data transmitting unit.

In this manner, in the present invention, a first data stream including left-eye image data and right-eye image data for displaying a stereo image, and a second data stream including data of superimposition information and having disparity information embedded therein are transmitted. Thus, on the receiving side, superimposition information that has been subjected to disparity adjustment in accordance with the perspective of each object in an image can be used as the same superimposition information (such as subtitle information, graphics information, or text information) to be superimposed on a left-eye image and a right-eye image, and it is possible to maintain the consistency in perspective in the display of superimposition information between the superimposition information and each object in an image.

Also, another concept of the present invention resides in a stereo image data receiving apparatus including:
a data receiving unit that receives multiplexed data of a first data stream and a second data stream, the first data stream including left-eye image data and right-eye image data for displaying stereo image data, the second data stream including data of superimposition information to be superimposed on an image that is based on the left-eye image data and the right-eye image data and having embedded therein disparity information for giving disparity to the superimposition information to be superimposed on the image that is based on the left-eye image data and the right-eye image data;
an image data acquisition unit that acquires the left-eye image data and the right-eye image data from the first data stream received by the data receiving unit;
a superimposition information data acquisition unit that acquires the data of the superimposition information from the second data stream received by the data receiving unit;
a disparity information acquisition unit that acquires the disparity information from the second data stream received by the data receiving unit; and
an image data processing unit that gives disparity to the same superimposition information to be superimposed on a left-eye image and right-eye image using the left-eye image data and the right-eye image data acquired by the image data acquisition unit, the data of the superimposition information acquired by the superimposition information data acquisition unit, and the disparity information acquired by the disparity information acquisition unit, and that obtains left-eye image data on which the superimposition information has been superimposed and data of a right-eye image on which the superimposition information has been superimposed.

In the present invention, multiplexed data of a first data stream and a second data stream is received by a data receiving unit. The first data stream includes left-eye image data and right-eye image data for displaying stereo image data. The second data stream includes data of superimposition information to be superimposed on an image that is based on the left-eye image data and the right-eye image data, and has embedded therein disparity information for giving disparity to the superimposition information to be superimposed on the image that is based on the left-eye image data and the right-eye image data.

The left-eye image data and the right-eye image data are acquired by an image data acquisition unit from the first data stream received by the data receiving unit. Also, the data of the superimposition information is acquired by a superimposition information data acquisition unit from the second data stream received by the data receiving unit. Also, the disparity information is acquired by a disparity information acquisition unit from the second data stream received by the data receiving unit.

Then, disparity is given by an image data processing unit to the same superimposition information to be superimposed on a left-eye image and right-eye image using the left-eye image data, the right-eye image data, the data of the superimposition information, and the disparity information, and data of a left-eye image on which the superimposition information has been superimposed and data of a right-eye image on which the superimposition information has been superimposed are obtained. For example, stereo image data including the left-eye image data and the right-eye image data obtained by the image data processing unit is transmitted to an external device by an image data transmitting unit.

In this manner, disparity is given to the same superimposition information to be superimposed on a left-eye image and a right-eye image on the basis of disparity information. Thus, superimposition information that has been subjected to disparity adjustment in accordance with the perspective of each object in an image can be used as the same superimposition information to be superimposed on a left-eye image and a right-eye image, and it is possible to maintain the consistency in perspective in the display of superimposition information between the superimposition information and each object in an image.

Also, another concept of the present invention resides in a stereo image data transmitting apparatus including:
an image data acquisition unit that acquires left-eye image data and right-eye image data for displaying a stereo image;
a disparity information acquisition unit that acquires disparity information about one of a left-eye image and a right-eye image with respect to the other at a predetermined position in an image; and
a data transmitting unit that transmits the disparity information acquired by the disparity information acquisition unit together with stereo image data including the left-eye image data and the right-eye image data acquired by the image data acquisition unit.

In the present invention, left-eye image data and right-eye image data for displaying a stereo image are acquired by an image data acquisition unit. Also, disparity information about one of a left-eye image and a right-eye image with respect to the other at a predetermined position in an image is acquired by a disparity information acquisition unit. For example, the disparity information is designed such that a disparity vector is determined as disparity information using a block matching method or the like on the basis of the left-eye image data and the right-eye image data. Also, for example, the disparity information is designed to be recorded in advance on a storage medium. Also, for example, the disparity information is designed to be based on manual setting of a user.

For example, in the image data acquisition unit, the left-eye image data and the right-eye image data are acquired from a data recording medium on which the left-eye image data, the right-eye image data, and the disparity information are recorded in association with each other, and in the disparity information acquisition unit, the disparity information is acquired from the data recording medium. The disparity information acquired by the disparity information acquisition unit is transmitted by a data transmitting unit together with stereo image data including the left-eye image data and right-eye image data acquired by the image data acquisition unit.

In the present invention, for example, a superimposition information data acquisition unit that acquires data of superimposition information to be superimposed on an image that is based on the left-eye image data and the right-eye image data may be further provided, and the data transmitting unit may be configured to transmit the disparity information acquired by the disparity information acquisition unit and the data of the superimposition information acquired by the superimposition information data acquisition unit together with the stereo image data including the left-eye image data and the right-eye image data acquired by the image data acquisition unit.

In this manner, disparity information at a predetermined position in an image is transmitted together with stereo image data including left-eye image data and right-eye image data. Accordingly, on the receiving side, superimposition information that has been subjected to disparity adjustment in accordance with the perspective of each object in an image can be used as the same superimposition information to be superimposed on a left-eye image and a right-eye image, and it is possible to maintain the consistency in perspective in the display of superimposition information between the superimposition information and each object in an image.

Also, another concept of the present invention resides in a stereo image data receiving apparatus including:
a data receiving unit that receives disparity information about one of a left-eye image and a right-eye image with respect to the other at a predetermined position in an image, together with stereo image data including left-eye image data and right-eye image data; and
an image data processing unit that gives disparity to the same superimposition information to be superimposed on the left-eye image and the right-eye image using the left-eye image data and the right-eye image data included in the stereo image data and the disparity information, which are received by the data receiving unit, and that obtains left-eye image data on which the superimposition information has been superimposed and right-eye image data on which the superimposition information has been superimposed.

In the present invention, disparity information about one of a left-eye image and a right-eye image with respect to the other at a predetermined position in an image is received by a data receiving unit, together with stereo image data including left-eye image data and right-eye image data. Disparity is given by an image data processing unit to the same superimposition information to be superimposed on the left-eye image and the right-eye image on the basis of the disparity information. Then, data of a left-eye image on which the superimposition information has been superimposed and data of a right-eye image on which the superimposition information has been superimposed are obtained by an image data processing unit by an image data processing unit.

In this manner, disparity is given to the same superimposition information to be superimposed on a left-eye image and a right-eye image on the basis of disparity information about one of the left-eye image and the right-eye image with respect to the other. Thus, superimposition information that has been subjected to disparity adjustment in accordance with the perspective of each object in an image can be used as the same superimposition information to be superimposed on the left-eye image and the right-eye image, and it is possible to maintain the consistency in perspective, in the display of the superimposition information, between the superimposition information and each object in the image.

Also, another concept of the present invention resides in a data recording medium having stored therein left-eye image data and right-eye image data for displaying a stereo image, and having recorded thereon disparity information about one of a left-eye image and a right-eye image with respect to the other at a predetermined position in an image in association with the left-eye image data and the right-eye image data.

In the present invention, left-eye image data and right-eye image data for displaying a stereo image, and disparity information about one of a left-eye image and a right-eye image with respect to the other at a predetermined position in an image are recorded in association with each other. Thus, left-eye image data and right-eye image data to be transmitted can be acquired from a data recording medium, and, in addition, disparity information to be transmitted in association therewith can also be acquired from the same data recording medium.

In the present invention, for example, data of superimposition information to be superimposed on an image that is based on left-eye image data and right-eye image data may be further recorded in association with the left-eye image data and the right-eye image data. In this case, data of superimposition information to be transmitted in association with the left-eye image data and the right-eye image data can also be acquired from the same data recording medium.

### Advantageous Effects of Invention

According to the present invention, on the receiving side of stereo image data, superimposition information that has been subjected to disparity adjustment in accordance with the perspective of each object in an image can be used as the same superimposition information to be superimposed on a left-eye image and a right-eye image, and it is possible to maintain the consistency in perspective in the display of superimposition information (such as subtitle information, graphics information, or text information).

### Brief Description of Drawings

[Fig. 1] Fig. 1 is a block diagram illustrating an example configuration of a stereo image display system as an embodiment of the present invention.
[Fig. 2] Fig. 2 is a block diagram illustrating an example configuration of a transmission data generation unit in a broadcast station.
[Fig. 3] Fig. 3 is a diagram illustrating image data of a 1920 x 1080p pixel format.
[Fig. 4] Fig. 4 includes diagrams describing the "Top & Bottom" method, the "Side By Side" method, and the "Frame Sequential" method that are transmission methods of stereo image data (3D image data).
[Fig. 5] Fig. 5 is a diagram describing an example of detecting a disparity vector of a right-eye image with respect to a left-eye image.
[Fig. 6] is a diagram describing that a disparity vector is determined using a block matching method.
[Fig. 7] Fig. 7 includes diagrams illustrating an example of a disparity vector W at a predetermined position in an image, which is detected by a disparity vector detection unit.
[Fig. 8] Fig. 8 is a diagram illustrating the transmission content of disparity vectors.
[Fig. 9] Fig. 9 includes diagrams illustrating an example of disparity detection blocks and the transmission content of disparity vectors in this case.
[Fig. 10] Fig. 10 includes diagrams describing an example of the timing for detecting and transmitting disparity vectors.
[Fig. 11] Fig. 11 is a diagram describing an example of the timing for detecting and transmitting disparity vectors.
[Fig. 12] Fig. 12 is a diagram illustrating an example of data streams that are multiplexed in a transmission data generation unit.
[Fig. 13] Fig. 13 is a block diagram illustrating another example configuration of the transmission data generation unit in the broadcast station.
[Fig. 14] Fig. 14 includes diagrams describing superimposed positions and the like of left-eye graphics information and right-eye graphics information in a case where the transmission method is a first transmission method ("Top & Bottom" method).
[Fig. 15] Fig. 15 includes diagrams describing a method for generating left-eye graphics information and right-eye graphics information in a case where the transmission method is the first transmission method ("Top & Bottom" method).
[Fig. 16] Fig. 16 is a diagram describing a method for generating left-eye graphics information and right-eye graphics information in a case where the transmission method is a second transmission method ("Side By Side" method).
[Fig. 17] Fig. 17 is a diagram describing a method for generating left-eye graphics information and right-eye graphics information in a case where the transmission method is the second transmission method ("Side By Side" method).
[Fig. 18] Fig. 18 is a block diagram illustrating another example configuration of the transmission data generation unit in the broadcast station.
[Fig. 19] Fig. 19 is a block diagram illustrating another example configuration of the transmission data generation unit in the broadcast station.
[Fig. 20] Fig. 20 is a block diagram illustrating an example configuration of a Z data unit that outputs disparity information for each piece of superimposition information such as subtitle information or graphics information.
[Fig. 21] Fig. 21 is a diagram describing information of "Location" and "Region size".
[Fig. 22] Fig. 22 is a diagram illustrating a relationship among "Page", "Region", "Physical Display Size", "Subtitle_Display_Area", and the like.
[Fig. 23] Fig. 23 is a diagram illustrating the syntax of conventional "page_composion_segment".
[Fig. 24] Fig. 24 is a diagram illustrating the syntax of conventional "region_composion_segment".
[Fig. 25] Fig. 25 is a diagram illustrating the syntax of "page_composion_segment" in which "Region_Disparity_offset" is defined.
[Fig. 26] Fig. 26 is a diagram illustrating the syntax of "region_composion_segment" in which "region_disparity_offset_far1", "region_disparity_offset_far2", and "region_disparity_offset_far3" are defined.
[Fig. 27] Fig. 27 is a diagram illustrating a 15-bit area where disparity information composed of "Region_Disparity_offset", "region_disparity_offset_far1", "region_disparity_offset_far2", and "region_disparity_offset_far3" is to be embedded.
[Fig. 28] Fig. 28 is a diagram illustrating another example of bit arrangement of disparity information in the 15-bit area.
[Fig. 29] Fig. 29 is a diagram illustrating an example of an image data stream and a subtitle or graphics data stream that are multiplexed in the transmission data generation unit.
[Fig. 30] Fig. 30 includes diagrams illustrating superimposed positions of left-eye graphics information and right-eye graphics information in a case where the transmission method is the second transmission method ("Side By Side" method).
[Fig. 31] Fig. 31 includes diagrams illustrating a state where a graphics image that is based on graphics data extracted from bit stream data and transmitted using a conventional method is superimposed as it is on a left-eye image and a right-eye image.
[Fig. 32] Fig. 32 includes diagrams illustrating disparity vectors (View Vectors) at three object positions at times T0, T1, T2, and T3.
[Fig. 33] Fig. 33 is a diagram illustrating a display example of a subtitle (graphics information) on an image, and the perspective of a background, a foreground object, and the subtitle.
[Fig. 34] Fig. 34 includes diagrams illustrating a display example of a subtitle (graphics information) on an image, and left-eye graphics information LGI and right-eye graphics information RGI for displaying the subtitle.
[Fig. 35] Fig. 35 includes diagrams describing that a disparity vector corresponding to its superimposed position among disparity vectors detected at a plurality of positions in an image is used as a disparity vector.
[Fig. 36] Fig. 36 includes diagrams illustrating that objects A, B, and C are present in an image and that text information indicating the annotation of each object is superimposed at a position near the object.
[Fig. 37] Fig. 37 is a block diagram illustrating an example configuration of a set-top box.
[Fig. 38] Fig. 38 is a block diagram illustrating an example configuration of a bit stream processing unit included in a set-top box.
[Fig. 39] Fig. 39 is a diagram illustrating an example of speaker output control in a case where a video object on the left-hand side when viewed in the direction of a television display has a large disparity vector VV1.
[Fig. 40] Fig. 40 is a block diagram illustrating another example configuration of the bit stream processing unit included in the set-top box.
[Fig. 41] Fig. 41 is a block diagram illustrating another example configuration of the bit stream processing unit included in the set-top box.
[Fig. 42] Fig. 42 is a block diagram illustrating another example configuration of the bit stream processing unit included in the set-top box.
[Fig. 43] Fig. 43 is a block diagram illustrating an example configuration of a television receiver.
[Fig. 44] Fig. 44 is a block diagram illustrating an example configuration of an HDMI transmitting unit (HDMI source) and an HDMI receiving unit (HDMI sink).
[Fig. 45] Fig. 45 is a block diagram illustrating an example configuration of an HDMI transmitter included in the HDMI transmitting unit and an HDMI receiver included in the HDMI receiving unit.
[Fig. 46] Fig. 46 is a diagram illustrating an example structure of TMDS transmission data (in a case where image data having 1920 pixels in the horizontal direction and 1080 lines in the vertical direction is transmitted).
[Fig. 47] Fig. 47 is a diagram illustrating a pin array (type A) of HDMI terminals of the source device and the sink device between which an HDMI cable is connected.
[Fig. 48] Fig. 48 is a diagram illustrating an example of TMDS transmission data in the first transmission method ("Top & Bottom" method).
[Fig. 49] Fig. 49 is a diagram illustrating an example of TMDS transmission data in the second transmission method ("Side By Side" method).
[Fig. 50] Fig. 50 is a diagram illustrating an example of TMDS transmission data in the third transmission method ("Frame Sequential" method).
[Fig. 51] Fig. 51 includes diagrams describing the "Frame Sequential" method in HDMI 1.4 (New HDMI) and the "Frame Sequential" method in HDMI 1.3 (Legacy HDMI).
[Fig. 52] Fig. 52 is a block diagram illustrating another example configuration of the bit stream processing unit included in the set-top box.
[Fig. 53] Fig. 53 is a block diagram illustrating another example configuration of the transmission data generation unit in the broadcast station.
[Fig. 54] Fig. 54 is a diagram illustrating another example configuration of the stereo image display system.
[Fig. 55] Fig. 55 is a diagram illustrating a relationship in stereo image display utilizing binocular disparity between display positions of left and right images of an object on a screen and a reproduction position of a stereoscopic image.

### Description of Embodiments

Hereinafter, a mode for carrying out the invention (hereinafter, referred to as an "embodiment") will be described. Note that the description will be given in the following order.

### 1. Embodiment

### 2. Example modifications

### <1. Embodiment>

### [Example Configuration of Stereo Image Transmitting and Receiving System]

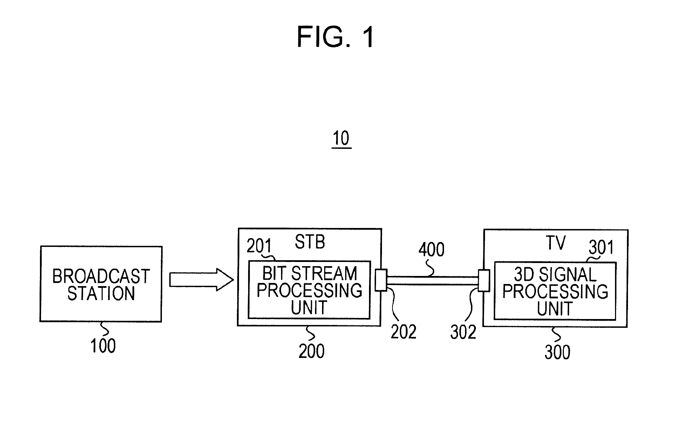

Fig. 1 illustrates an example configuration of a stereo image transmitting and receiving system 10 as an embodiment. The stereo image transmitting and receiving system 10 includes a broadcast station 100, a set-top box (STB: Set Top Box) 200, and a television receiver 300.

The set-top box 200 and the television receiver 300 are connected to each other via an HDMI (High Definition Multimedia Interface) cable 400. The set-top box 200 is provided with an HDMI terminal 202. The television receiver 300 is provided with an HDMI terminal 302. One of the HDMI cable 400 is connected to the HDMI terminal 202 of the set-top box 200, and the other end of the HDMI cable 400 is connected to the HDMI terminal 302 of the television receiver 300.

### [Description of Broadcast Station]

The broadcast station 100 transmits bit stream data carried on a broadcast wave. The bit stream data contains stereo image data including left-eye image data and right-eye image data, audio data, and superimposition information data, and also contains disparity information (disparity vectors) and the like. Here, the superimposition information data is subtitle data, graphics data, text data, or the like.

### [Example Configuration of Transmission Data Generation Unit]

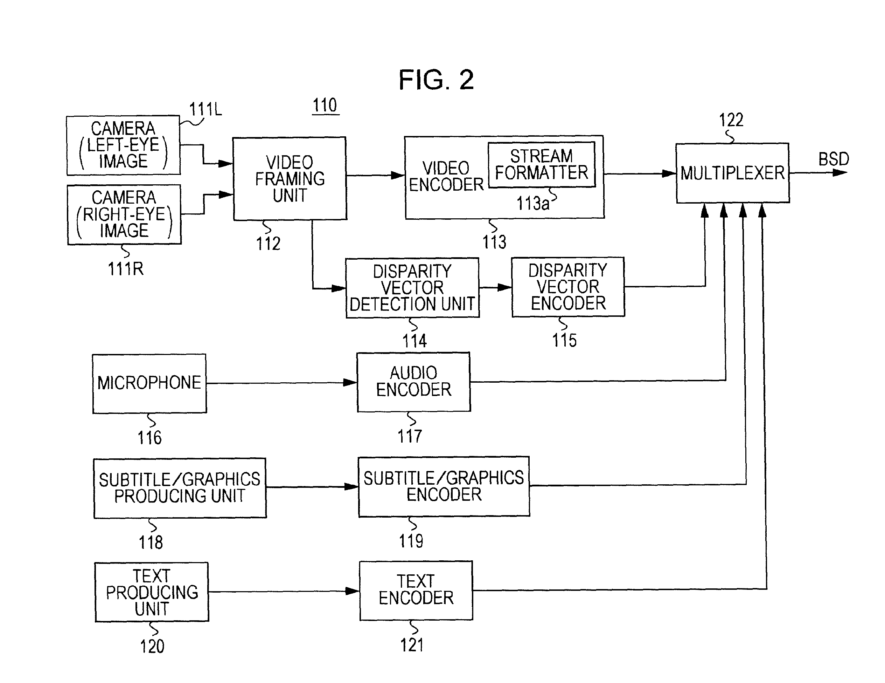

Fig. 2 illustrates an example configuration of a transmission data generation unit 110 in the broadcast station 100 that generates the bit stream data described above. This example configuration is an example of transmitting a disparity vector as numerical information. The transmission data generation unit 110 includes cameras 111L and 111R, a video framing unit 112, a video encoder 113, a disparity vector detection unit 114, and a disparity vector encoder 115.

Also, the transmission data generation unit 110 includes a microphone 116 and an audio encoder 117. Furthermore, the transmission data generation unit 110 includes a subtitle/graphics producing unit 118, a subtitle/graphic encoder 119, a text producing unit 120, a text encoder 121, and a multiplexer 122.

The camera 111L captures a left-eye image and obtains left-eye image data for stereo image display. The camera 111R captures a right-eye image and obtains right-eye image data for stereo image display. The video framing unit 112 modifies and processes the left-eye image data obtained by the camera 111L and the right-eye image data obtained by the camera 111R into a state according to the transmission method.

### [Example of Transmission Method of Stereo Image Data]

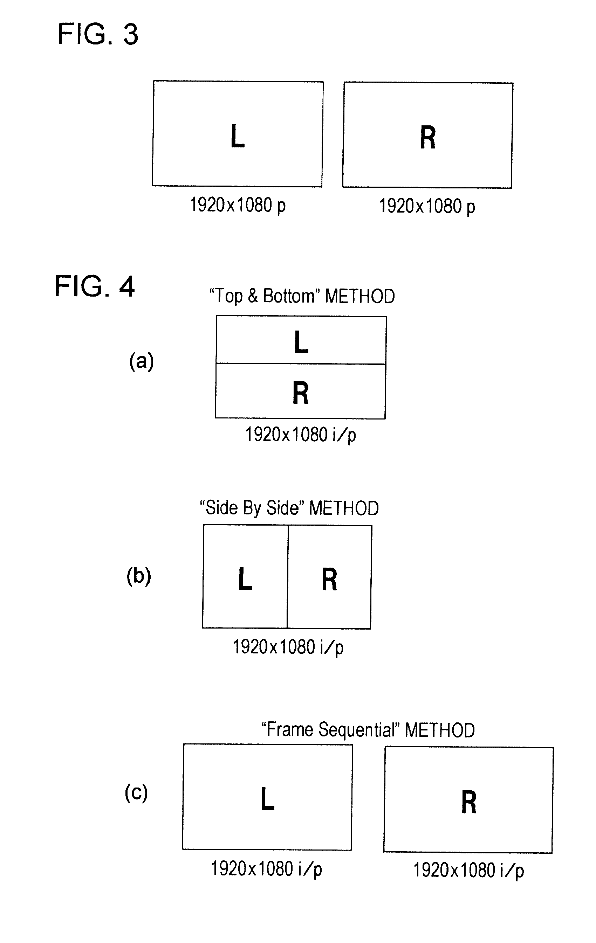

While the following first to third methods are given here as transmission methods of stereo image data (3D image data), any other transmission method may be used. The description will be given here in the context of a case where, as illustrated in Fig. 3, image data for each of the left eye (L) and the right eye (R) is image data having a determined resolution, for example, a 1920 x 1080p pixel format, by way of example.

A first transmission method is the "Top & Bottom" method that is a method in which, as illustrated in Fig. 4(a), data of each line of the left-eye image data is transmitted in the first half in the vertical direction and data of each line of the left-eye image data is transmitted in the second half in the vertical direction. In this case, since the lines of the left-eye image data and right-eye image data are decimated to 1/2, the vertical resolution is one half of that of the original signal.

A second transmission method is the "Side By Side" method that is a method in which, as illustrated in Fig. 4(b), pixel data of the left-eye image data is transmitted in the first half in the horizontal direction and pixel data of the right-eye image data is transmitted in the second half in the horizontal direction. In this case, the pixel data in the horizontal direction of each of the left-eye image data and the right-eye image data is decimated to 1/2. The horizontal resolution is one half of the current signal.

A third transmission method is the "Frame Sequential" method that is a method in which, as illustrated in Fig. 4(c), the left-eye image data and the right-eye image data are transmitted while being sequentially switched every field.

Referring back to Fig. 2, the video encoder 113 performs encoding using MPEG4-AVC, MPEG2, VC-1, or the like on the stereo image data modified and processed by the video framing unit 112 to obtain encoded video data. Also, the video encoder 113 includes a stream formatter 113a in the rear stage thereof. The stream formatter 113a allows the generation of an elementary stream of video including the encoded video data in the payload portion.

The disparity vector detection unit 114 detects a disparity vector that is disparity information about one of a left-eye image and a right-eye image with respect to the other at a predetermined position in an image on the basis of the left-eye image data and the right-eye image data. Here, a predetermined position in an image includes all pixel positions, a representative position of each area formed of a plurality of pixels, a representative position of an area where superimposition information, here, subtitle information, graphic information, or text information, is to be superimposed, or the like.

### [Detection of Disparity Vector]

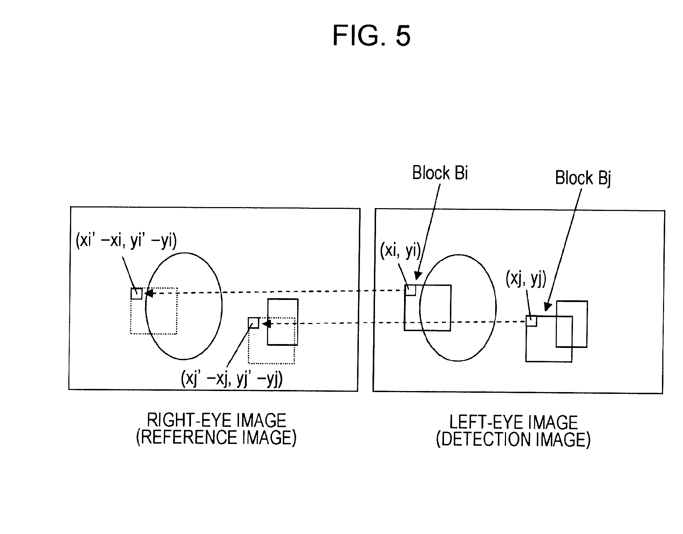

An example of detection of a disparity vector will be described. The description will be given here of an example of detecting a disparity vector of a right-eye image with respect to a left-eye image. As illustrated in Fig. 5, it is assumed that the left-eye image is a detection image and the right-eye image is a reference image. In this example, disparity vectors at positions (xi, yi) and (xj, yj) are detected.

A case where a disparity vector at the position (xi, yi) is detected will be described by way of example. In this case, for example, an 8 x 8 or 16 x 16 pixel block (disparity detection block) Bi whose upper left pixel is at the position (xi, yi) is set in the left-eye image. Then, a pixel block that matches the pixel block Bi is searched for in the right-eye image.

In this case, a search range centered on the position (xi, yi) is set in the right-eye image, and, for example, an 8 x 8 or 16 x 16 comparison block, which is similar to the pixel block Bi described above, is sequentially set using each of the pixels in the search range as the pixel of interest.

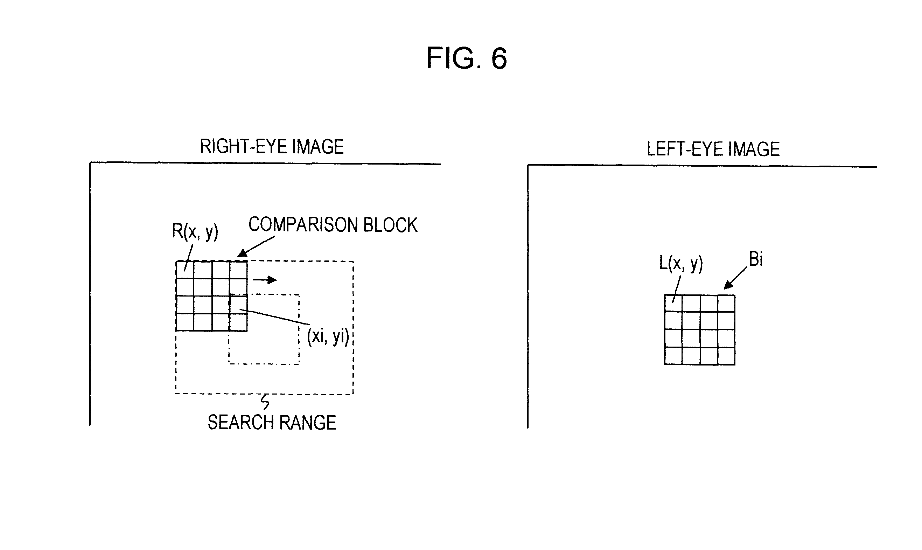

The sum total of the absolute difference values between the pixel block Bi and each of the comparison blocks sequentially set is determined for each corresponding pixel. Here, as illustrated in Fig. 6, when a pixel value of the pixel block Bi is denoted by L(x, y) and a pixel value of a comparison block is denoted by R(x, y), the sum total of the absolute difference value between the pixel block Bi and a certain comparison block is represented by Σ|L(x, y) - R (x, y)|.

When a search range set in the right-eye image includes n pixels, n sum totals S1 to Sn are finally determined, and the minimum sum total Smin among them is selected. Then, the position of (xi', yi') the upper left pixel of the comparison block for which the sum total Smin is obtained is obtained. Accordingly, the disparity vector at the position (xi, yi) is detected in a manner such as (xi'-xi, yi'-yi). The disparity vector at the position (xj, yj) is also detected using similar processing steps by setting in the left-eye image, for example, an 8 x 8 or 16 x 16 pixel block Bj whose upper left pixel is at the position (xj, yj) although the detailed description is omitted.

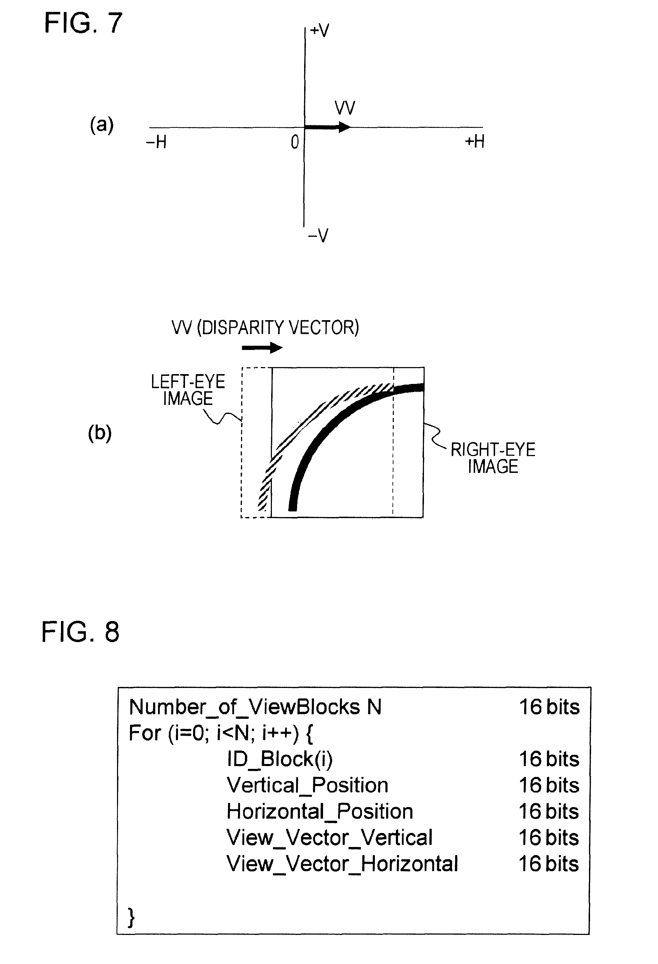

Fig. 7(a) illustrates an example of a disparity vector W at a predetermined position in an image, which is detected by the disparity vector detection unit 114. This case means that, as illustrated in Fig. 7(b), at the predetermined position in the image, the left-eye image (detection image) which is shifted by the disparity vector W overlaps the right-eye image (reference image).

Referring back to Fig. 2, the disparity vector encoder 115 generates an elementary stream of disparity vectors including the disparity vector detected by the disparity vector detection unit 114 and the like. Here, an elementary stream of disparity vectors includes the following content. That is, an ID (ID_Block), vertical position information (Vertical_Position), horizontal position information (Horizontal_Position), and a disparity vector (View_Vector) are set as one set. Then, this set is repeated N times, the number of which is equal to the number of disparity detection blocks. Fig. 8 illustrates the transmission content of disparity vectors. A disparity vector includes a vertical direction component (View_Vector_Vertical) and a horizontal direction component (View_Vector_Horizontal).

Note that the vertical and horizontal positions of a disparity detection block are offset values in the vertical direction and the horizontal direction from the upper left origin of the image to the upper left pixel of the block. The ID of a disparity detection block is assigned to the transmission of each disparity vector in order to ensure a link to the pattern of superimposition information to be superimposed and displayed on the image, such as subtitle information, graphics information, or text information.

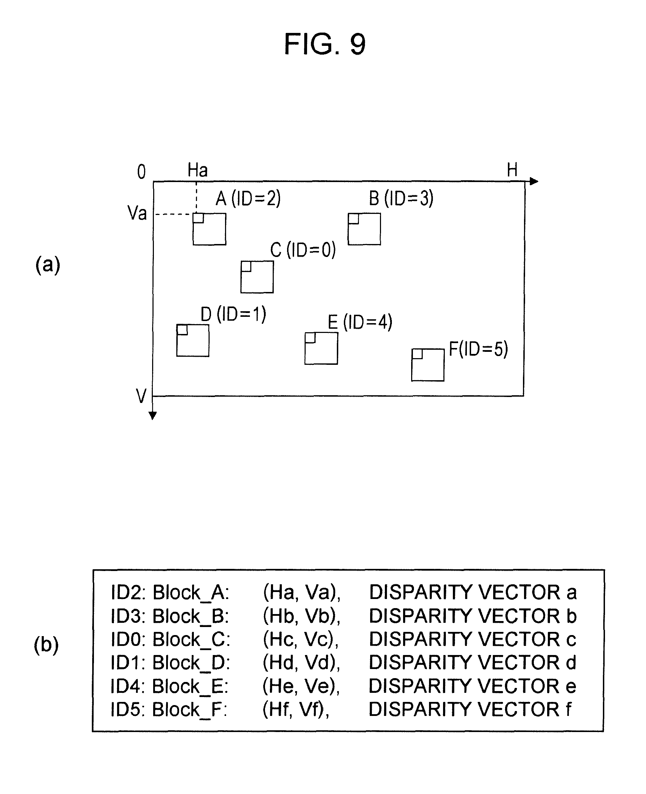

For example, as illustrated in Fig. 9(a), when disparity detection blocks A to F are present, as illustrated in Fig. 9(b), the transmission content includes the IDs of the disparity detection blocks A to F, vertical and horizontal position information, and disparity vectors. For example, in Fig. 9(b), for the disparity detection block A, ID 2 indicates the ID of the disparity detection block A, (Ha, Va) indicates the vertical and horizontal position information of the disparity detection block A, and disparity vector a indicates the disparity vector of the disparity detection block A.

Here, the timing for detecting and transmitting disparity vectors will be described. Regarding the timing, for example, the following first to fourth examples are conceivable.

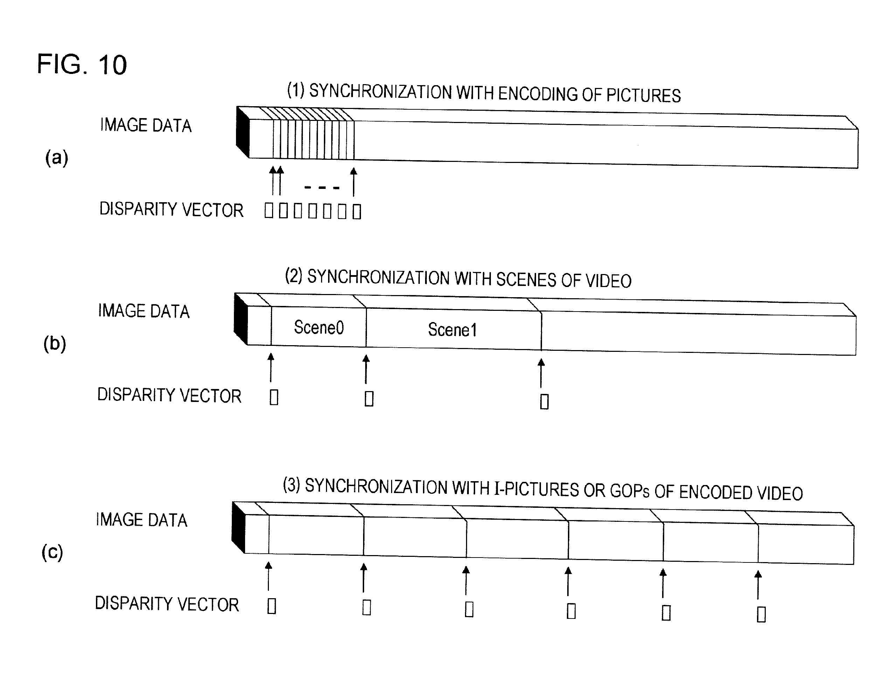

In the first example, as illustrated in Fig. 10(a), the timing is synchronized with the encoding of pictures. In this case, the disparity vectors are transmitted in units of pictures. The unit of picture is the smallest unit for the transmission of disparity vectors. In the second example, as illustrated in Fig. 10(b), the timing is synchronized with the scenes of video. In this case, the disparity vectors are transmitted in units of scenes.

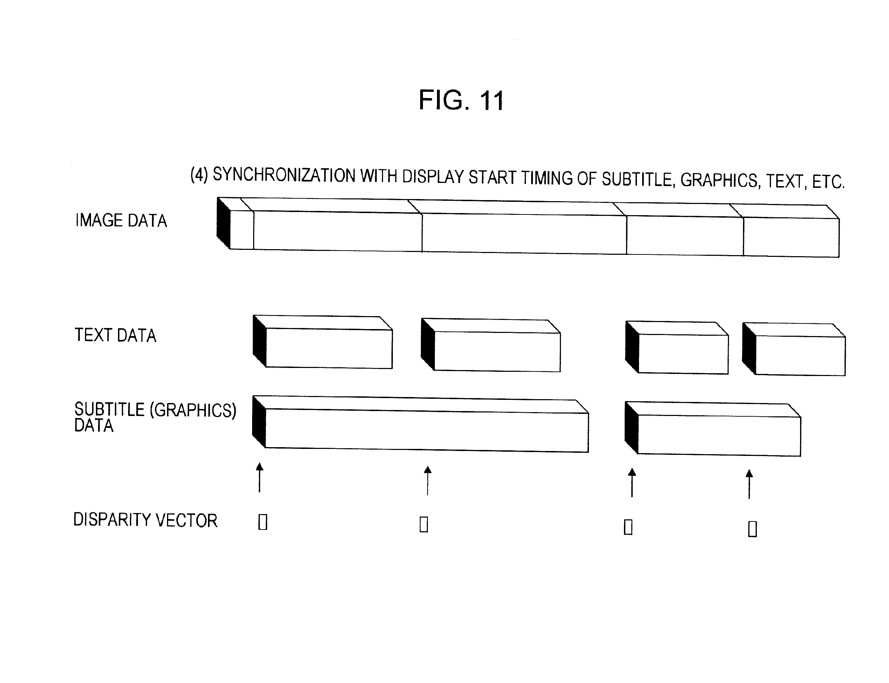

In the third example, as illustrated in Fig. 10(c), the timing is synchronized with the I-pictures (Intra pictures) or GOPs (Groups Of Pictures) of encoded video. In the fourth example, as illustrated in Fig. 11, the timing is synchronized with the timing at which the display of graphics information, text information, or the like to be superimposed and displayed on an image is started.

Referring back to Fig. 2, the microphone 116 detects audio corresponding to images photographed using the cameras 111L and 111R, and obtains audio data. The audio encoder 117 performs compression and encoding using MPEG-2 Audio AAC or the like on the audio data obtained by the microphone 116, and generates an elementary stream of audio.

The subtitle/graphics producing unit 118 produces data of subtitle information or graphics information (subtitle data, graphics data) to be superimposed on the image. The subtitle information is, for example, a subtitle. Also, the graphics information is, for example, a logo or the like. The subtitle data or the graphics data is bitmap data. The subtitle data or the graphics data is added with idling offset information indicating the superimposed position on the image.

The idling offset information indicates offset values in the vertical direction and horizontal direction from, for example, the upper left origin of the image to the upper left pixel at the superimposed position of the subtitle information or the graphics information. Note that the standard by which subtitle data is transmitted as bitmap data has been standardized as DVB_Subtitling by DVB, which is a digital broadcast standard in Europe, and is in operation.

The subtitle/graphic encoder 119 receives, as an input, the data of subtitle information or graphics information (subtitle data, graphics data) produced by the subtitle/graphics producing unit 118. Then, the subtitle/graphic encoder 119 generates an elementary stream including these pieces of data in the payload portion.

The text producing unit 120 produces data of text information (text data) to be superimposed on an image. The text information is, for example, an electronic program guide, the content of broadcast teletext, or the like. Similarly to the graphics data described above, the text data is added with idling offset information indicating the superimposed position on the image. The idling offset information indicates, for example, offset values in the vertical direction and horizontal direction from the upper left origin of the image to the upper left pixel at the superimposed position of the text information. Note that examples of the transmission of text data include EPG that is in operation for program reservation, and CC_data (Closed Caption) in ATSC, which is a digital terrestrial standard in the U.S.

The text encoder 121 receives, as an input, the text data text produced by the producing unit 120. Then, the text encoder 121 generates an elementary stream including these pieces of data in the payload portion.

The multiplexer 122 multiplexes packetized elementary streams output from the encoders 113, 115, 117, 119, and 121. Then, the multiplexer 122 outputs bit stream data (transport stream) BSD as transmission data.

The operation of the transmission data generation unit 110 illustrated in Fig. 2 will be described briefly. In the camera 111L, a left-eye image is photographed. Left-eye image data for stereo image display, which is obtained by the camera 111L, is supplied to the video framing unit 112. Also, in the camera 111R, a right-eye image is photographed. Right-eye image data for stereo image display, which is obtained by the camera 111R, is supplied to the video framing unit 112. In the video framing unit 112, the left-eye image data and the right-eye image data are modified and processed into a state according to the transmission method, and stereo image data is obtained (see Figs. 4(a) to 4(c)).

The stereo image data obtained by the video framing unit 112 is supplied to the video encoder 113. In the video encoder 113, encoding using MPEG4-AVC, MPEG2, VC-1, or the like is performed on the stereo image data, and a video elementary stream including the encoded video data is generated. The video elementary stream is supplied to the multiplexer 122.

Also, the left-eye image data and the right-eye image data obtained by the cameras 111L and 111R are supplied to the disparity vector detection unit 114 through the video framing unit 112. In the disparity vector detection unit 114, a disparity detection block is set at a predetermined position in an image on the basis of the left-eye image data and the right-eye image data, and a disparity vector that is disparity information about one of a left-eye image and a right-eye image with respect to the other is detected.

A disparity vector at a predetermined position in an image, which is detected by the disparity vector detection unit 114, is supplied to the disparity vector encoder 115. In this case, the ID of a disparity detection block, the vertical position information of the disparity detection block, the horizontal position information of the disparity detection block, and a disparity vector are passed as one set. In the disparity vector encoder 115, a disparity vector elementary stream including the transmission content of disparity vectors (see Fig. 8) is generated. The disparity vector elementary stream is supplied to the multiplexer 122.

Also, in the microphone 116, audio corresponding to the images photographed using the cameras 111L and 111R is detected. Audio data obtained by the microphone 116 is supplied to the audio encoder 117. In the audio encoder 117, encoding using MPEG-2 Audio AAC or the like is performed on the audio data, and an audio elementary stream including the encoded audio data is generated. The audio elementary stream is supplied to the multiplexer 122.

Also, in the subtitle/graphics producing unit 118, data of subtitle information or graphics information (subtitle data, graphics data) to be superimposed on an image is produced. This data (bitmap data) is supplied to the subtitle/graphic encoder 119. The subtitle data or the graphics data is added with idling offset information indicating the superimposed position on the image. In the subtitle/graphic encoder 119, predetermined encoding is performed on the subtitle data or the graphics data, and an elementary stream including the encoded data is generated. The elementary stream is supplied to the multiplexer 122.

Also, in the text producing unit 120, data of text information (text data) to be superimposed on an image is produced. The text data is supplied to the text encoder 121. Similarly to the graphics data described above, the text data is added with idling offset information indicating the superimposed position on the image. In the text encoder 121, predetermined encoding is performed on the text data, and an elementary stream including the encoded data is generated. The elementary stream is supplied to the multiplexer 122.

In the multiplexer 122, the packets of the elementary streams supplied from the respective encoders are multiplexed, and bit stream data (transport stream) BSD serving as transmission data is obtained.

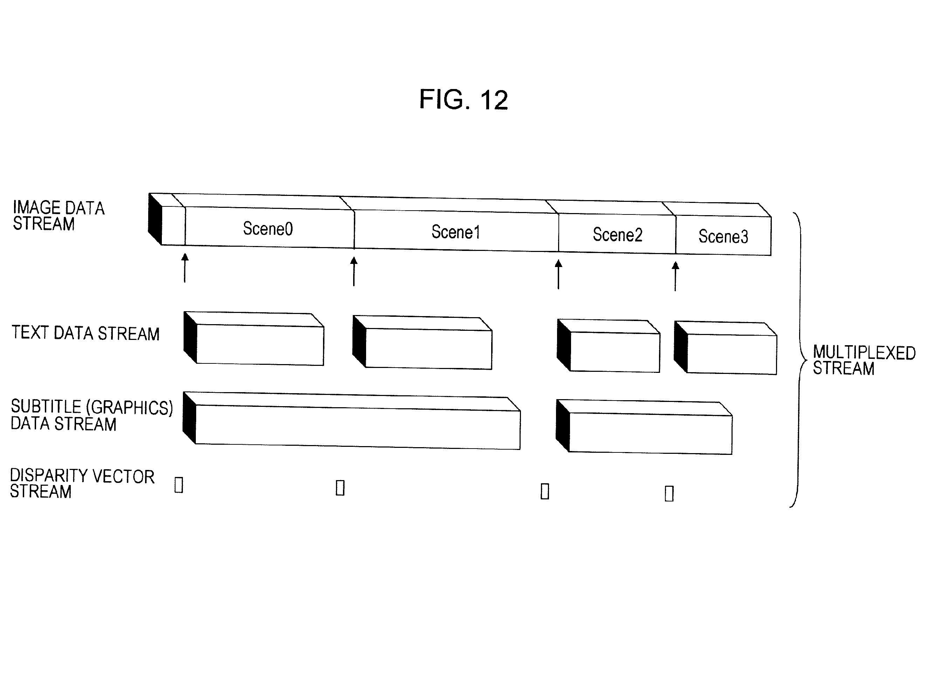

Fig. 12 illustrates an example of the respective data streams to be multiplexed in the transmission data generation unit 110 illustrated in Fig. 2. Note that this example indicates a case where disparity vectors are detected in units of scenes of video and are transmitted (see Fig. 10(b)). Note that a time stamp for synchronized display is added to the packets of each stream, and it is possible to control, on the receiving side, the timing at which subtitle information, graphics information, text information, or the like is superimposed on an image.

Note that in the transmission data generation unit 110 illustrated in Fig. 2, as disparity information, a disparity vector determined by the disparity vector detection unit 114 using a block matching method or the like is transmitted as disparity information. However, how to acquire disparity information is not limited to this method. For example, disparity information may be recorded on a storage medium in advance. Also, for example, the acquisition of disparity information may be based on user's manual setting. This is also similar to that in another example configuration of a transmission data generation unit which is illustrated hereinafter.

### [Another Example Configuration of Transmission Data Generation Unit]

Note that the transmission data generation unit 110 illustrated in Fig. 2 described above is configured to transmit the transmission content of disparity vectors (see Fig. 8) to the receiving side as an independent elementary stream. However, it is also conceivable that the transmission content of disparity vectors is transmitted in a state of being embedded in another stream. For example, the transmission content of disparity vectors is transmitted in a state of being embedded in a stream of video as user data. Also, for example, the transmission content of disparity vectors is transmitted in a state of being embedded in a stream of subtitle, graphics, or text.

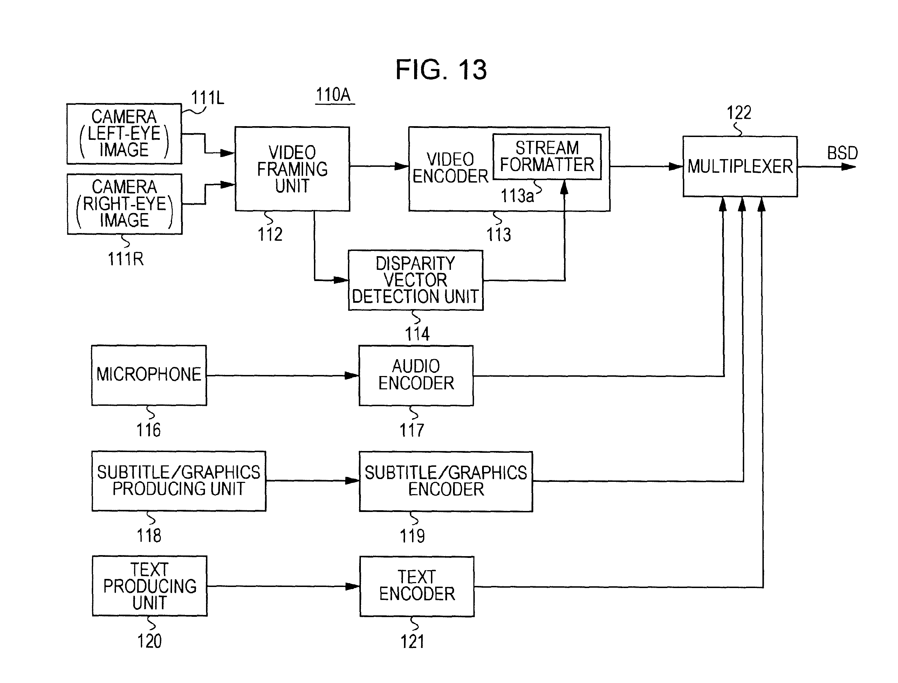

Fig. 13 illustrates an example configuration of a transmission data generation unit 110A. This example is also an example of transmitting a disparity vector as numerical information. The transmission data generation unit 110A is configured to transmit the transmission content of disparity vectors in a state of embedding it in a stream of video as user data. In Fig. 13, portions corresponding to those in Fig. 2 are assigned the same numerals, and the detailed description thereof is omitted.

In the transmission data generation unit 110A, a disparity vector at a predetermined position in an image detected by the disparity vector detection 114 is supplied to the stream formatter 113a in the video encoder 113. In this case, the ID of a disparity detection block, the vertical position information of the disparity detection block, the horizontal position information of the disparity detection block, and a disparity vector are passed as one set. In the stream formatter 113a, the transmission content of disparity vectors (see Fig. 8) is embedded in a stream of video as user data.

The other elements of the transmission data generation unit 110A illustrated in Fig. 13 are configured in a manner similar to that of the transmission data generation unit 110 illustrated in Fig. 2, and operate in a similar manner although the detailed description is omitted.

### [Another Example Configuration of Transmission Data Generation Unit]

Also, the transmission data generation unit 110 illustrated in Fig. 2 described above and the transmission data generation unit 110A illustrated in Fig. 13 described above transmit a disparity vector as numerical information (see Fig. 8). However, instead of a disparity vector being transmitted as numerical information, disparity information is transmitted on the transmitting side while being reflected in advance in data of superimposition information (such as, for example, subtitle information, graphics information, or text information) to be superimposed on an image.

For example, in a case where disparity information is reflected in data of graphics information, graphics data corresponding to both left-eye graphics information to be superimposed on a left-eye image and right-eye graphics information to be superimposed on a right-eye image is generated on the transmitting side. In this case, the left-eye graphics information and the right-eye graphics information are the same graphics information. However, the display position of, for example, the right-eye graphics information in the image is configured to be shifted in the horizontal direction by the horizontal direction component of the disparity vector corresponding to the display position with respect to the left-eye graphics information.

For example, a disparity vector corresponding to its superimposed position among disparity vectors detected at a plurality of positions in an image is used as a disparity vector. Also, for example, a disparity vector at the position recognized to be the closest in terms of perspective among disparity vectors detected at a plurality of positions in an image is used as a disparity vector. Note that a similar operation is performed in a case where disparity information is reflected in data of subtitle information or graphics information although the detailed description is omitted.

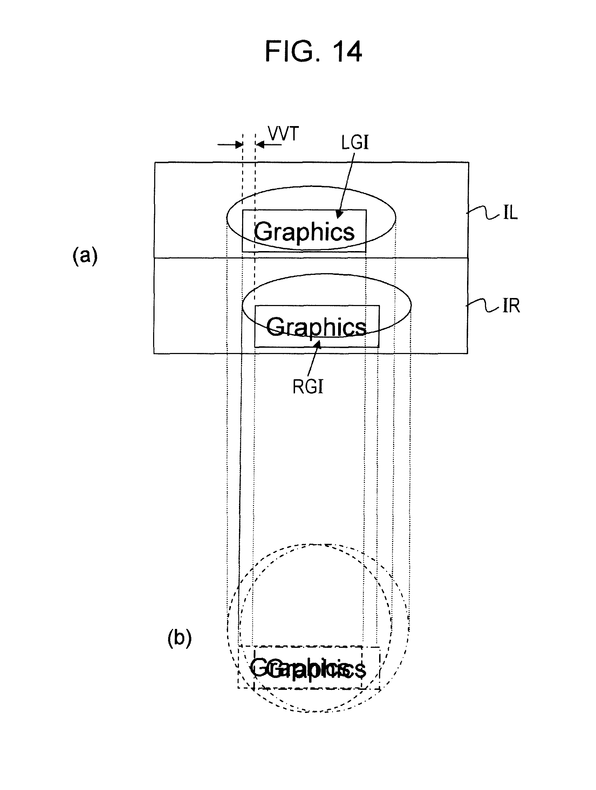

Fig. 14(a) illustrates superimposed positions of left-eye graphics information and right-eye graphics information in a case where the transmission method is the first transmission method described above ("Top & Bottom" method). The left-eye graphics information and the right-eye graphics information are the same information. However, right-eye graphics information RGI to be superimposed on a right-eye image IR is configured to be at a position shifted in the horizontal direction by a horizontal direction component VVT of a disparity vector with respect to left-eye graphics information LGI to be superimposed on a left-eye image IL.

As illustrated in Fig. 14(a), graphics data is generated so that the pieces of graphics information LGI and RGI are superimposed on the images IL and IR, respectively. Accordingly, as illustrated in Fig. 14(b), a viewer can observe the pieces of graphics information LGI and RGI with disparity, together with the images IL and IR, and is able to also perceive the perspective of the graphics information.

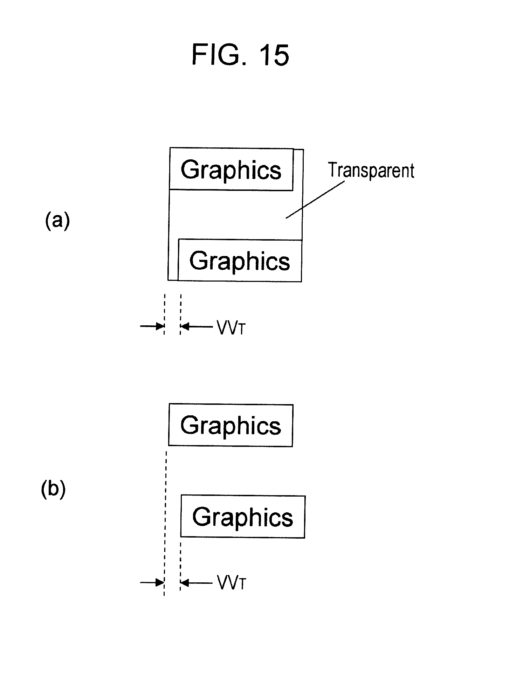

For example, as illustrated in Fig. 15(a), graphics data of the pieces of graphics information LGI and RGI are generated as data of a single area. In this case, data in the portion other than the pieces of graphics information LGI and RGI may be generated as transparent data. Also, for example, as illustrated in, Fig. 15(b), the graphics data of the pieces of graphics information LGI and RGI are generated as data of different areas.

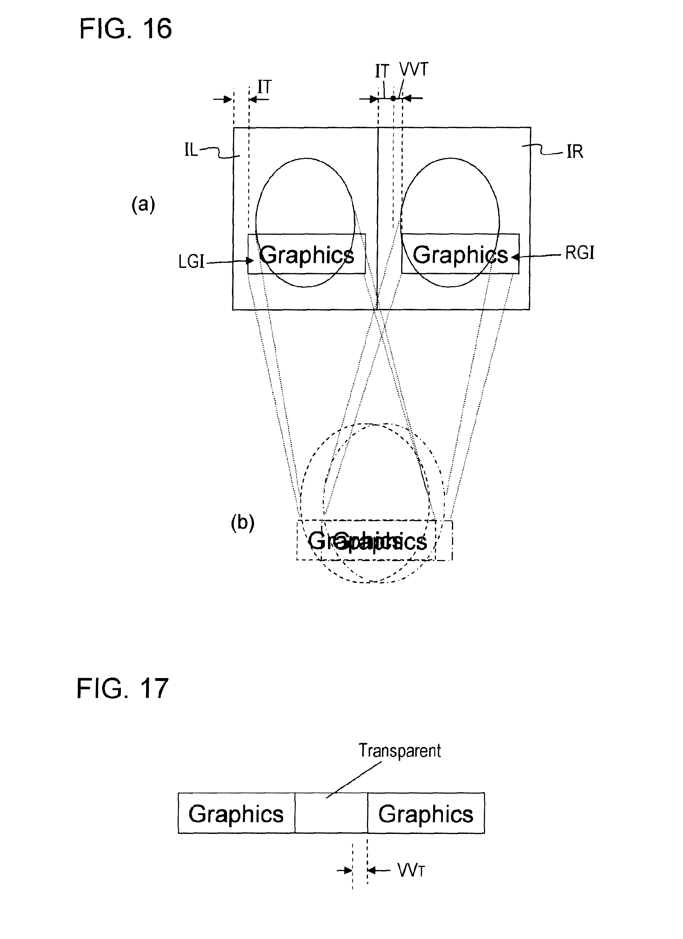

Fig. 16(a) illustrates superimposed positions of left-eye graphics information and right-eye graphics information in a case where the transmission method is the second transmission method described above ("Side By Side" method). The left-eye graphics information and the right-eye graphics information are the same information. However, right-eye graphics information RGI to be superimposed on a right-eye image IR is configured to be at a position shifted in the horizontal direction by a horizontal direction component VVT of a disparity vector with respect to left-eye graphics information LGI to be superimposed on a left-eye image IL. Note that IT is an idling offset value.

Graphics data is generated so that, as illustrated in Fig. 16(a), the pieces of graphics information LGI and RGI are superimposed on the images IL and IR, respectively. Accordingly, as illustrated in Fig. 16(b), a viewer can observe the pieces of graphics information LGI and RGI with disparity, together with the images IL and IR, and is able to also perceive the perspective of the graphics information.

For example, as illustrated in Fig. 17, graphics data of the pieces of graphics information LGI and RGI are generated as data of a single area. In this case, data in the portion other than the pieces of graphics information LGI and RGI may be generated as transparent data.

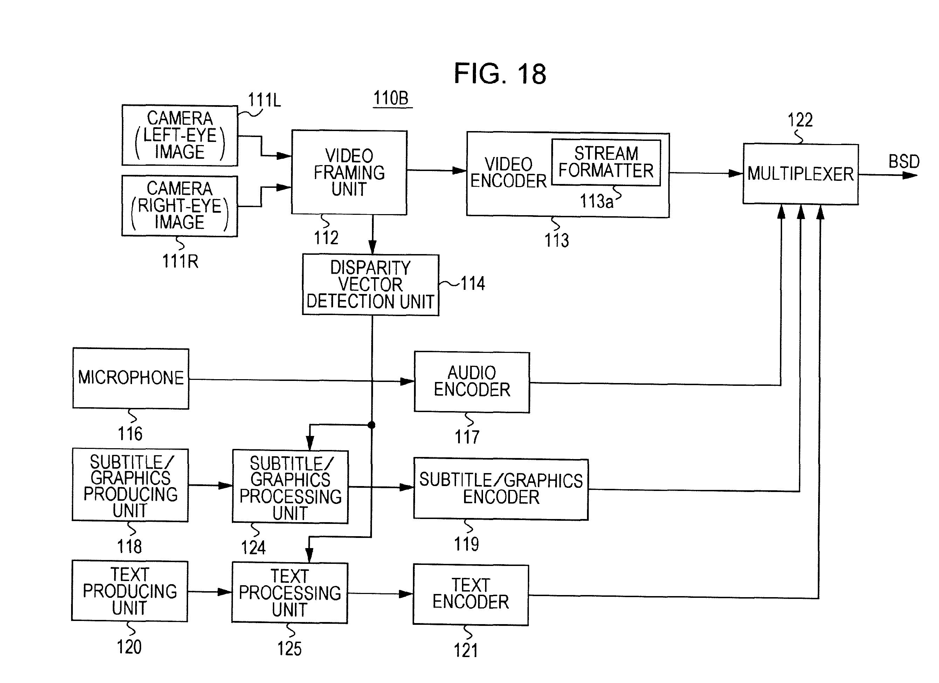

Fig. 18 illustrates an example configuration of a transmission data generation unit 110B. The transmission data generation unit 110B is configured to transmit disparity information while reflecting it in data of subtitle information, graphics information, or text information. In Fig. 18, portions corresponding to those in Fig. 2 are assigned the same numerals, and the detailed description thereof is omitted.

In the transmission data generation unit 110B, a subtitle/graphics processing unit 124 is inserted between the subtitle/graphics producing unit 118 and the subtitle/graphic encoder 119. Also, in the transmission data generation unit 110B, a text processing unit 125 is inserted between the text producing unit 120 and the text encoder 121. Then, a disparity vector at a predetermined position in an image, which is detected by the disparity vector detection unit 114, is supplied to the subtitle/graphics processing unit 124 and the text processing unit 125.

In the subtitle/graphics processing unit 124, data of left-eye and right-eye subtitle or graphics information items LGI and RGI to be superimposed on a left-eye image IL and a right-eye image IR are generated. In this case, the subtitle or graphics information items are produced on the basis of subtitle data or graphics data produced by the subtitle/graphics producing unit 118. The left-eye and right-eye subtitle information items or graphics information items are the same information. However, the superimposed position of, for example, the right-eye subtitle information or graphics information in the image is configured to be shifted in the horizontal direction by the horizontal direction component VVT of the disparity vector with respect to the left-eye subtitle information or graphics information (see Figs. 14(a) and 16(a)).

In this manner, the subtitle data or graphics data generated by the subtitle/graphics processing unit 124 is supplied to the subtitle/graphic encoder 119. Note that the subtitle data or graphics data is added with idling offset information indicating the superimposed position on the image. In the subtitle/graphic encoder 119, an elementary stream of the subtitle data or graphics data generated by the subtitle/graphics processing unit 124 is generated.

Also, in the text processing unit 125, data of left-eye text information to be superimposed on the left-eye image and data of right-eye text information to be superimposed on the right-eye image are generated on the basis of the text data produced by the text producing unit 120. In this case, the left-eye text information and the right-eye text information are the same text information. However, the superimposed position of, for example, the right-eye text information in the image is configured to be shifted in the horizontal direction by the horizontal direction component VVT of the disparity vector with respect to the left-eye text information.

In this manner, the text data generated by the text processing unit 125 is supplied to the text encoder 121. Note that the text data is added with idling offset information indicating the superimposed positions on the image. In the text encoder 121, an elementary stream of the text s data generated by the text processing unit is generated. The other elements of the transmission data generation unit 110B illustrated in Fig. 18 are configured in a manner similar to that of the transmission data generation unit 110 illustrated in Fig. 2, and operate in a similar manner although the detailed description is omitted.

### "Another Example Configuration of Transmission Data Generation Unit"

The transmission data generation unit 110 illustrated in Fig. 2 is configured to transmit the transmission content (see Fig. 8) that is based on disparity vectors detected by the disparity vector detection unit 114 to the receiving side as it is without associating it with each piece of data of superimposition information. Also, the transmission data generation unit 110A illustrated in Fig. 13 is configured to transmit the transmission content of disparity vectors (see Fig. 8) in a state of embedding it in an image data stream as user data. However, it is also conceivable that disparity information (disparity vector) associated with each piece of superimposition information data is transmitted in a state of being embedded in a subtitle or graphics data stream.

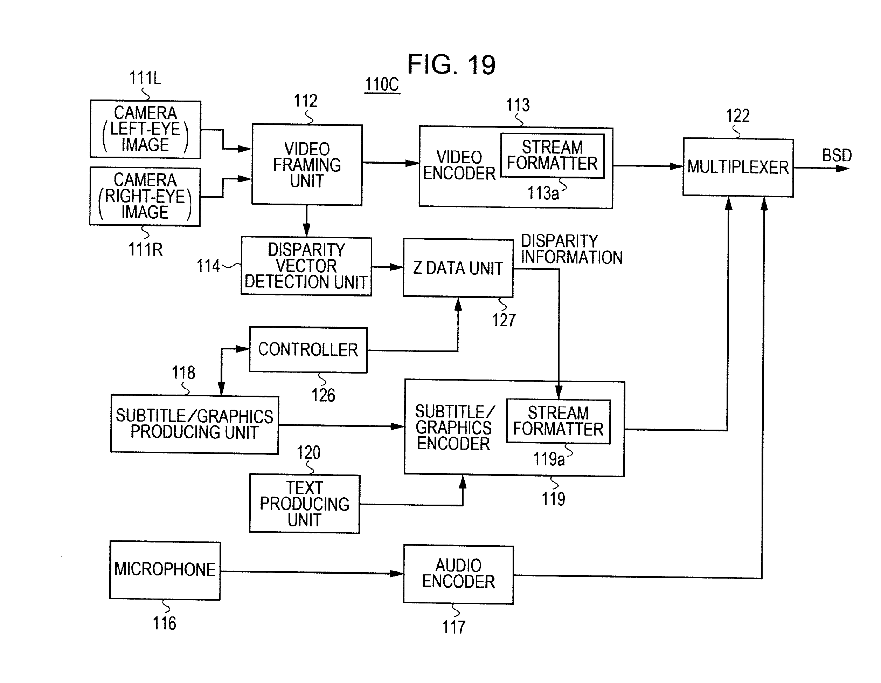

Fig. 19 illustrates an example configuration of a transmission data generation unit 110C. The transmission data generation unit 110C is configured to embed disparity information (disparity vector) associated with each piece of data of superimposition information (subtitle information, graphics information) in a subtitle or graphics data stream and to transmit the disparity information. In Fig. 19, portions corresponding to those in Fig. 2 are assigned the same numerals, and the detailed description thereof is omitted. The transmission data generation unit 110C includes a controller 126 and a Z data unit 127.

The Z data unit 127 outputs disparity information (disparity vector) associated with each piece of data of superimposition information (subtitle information, graphics information) produced by the subtitle/graphics producing unit 118. The Z data unit 127 outputs disparity information for each Region_ID to be associated with each piece of data of superimposition information. The controller 126 controls the operation of the Z data unit 127.

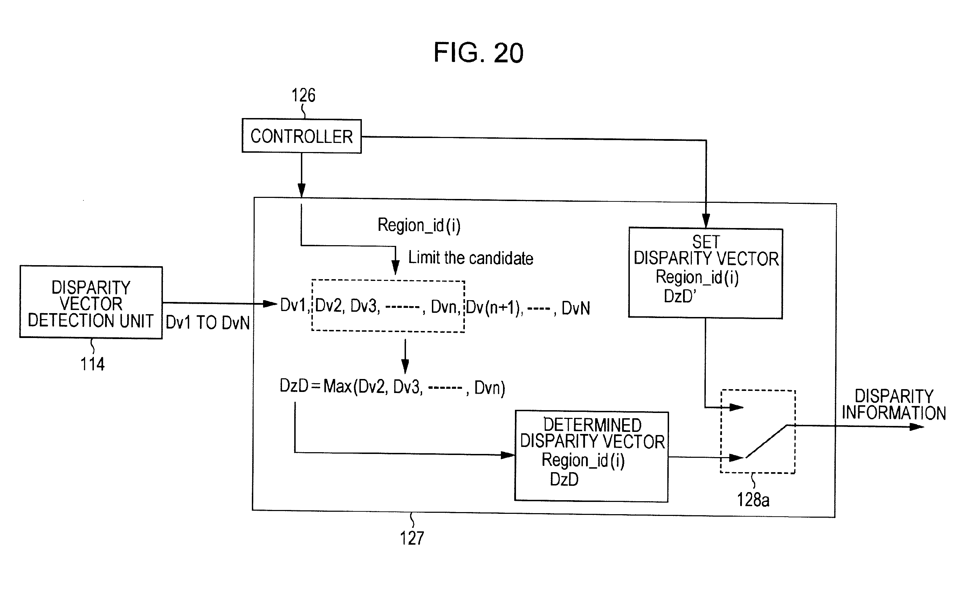

Fig. 20 illustrates an example configuration of the Z data unit 127. The Z data unit 127 outputs disparity information for each Region_id specified by the controller 126. Here, Region_id will be described. The Region_id serves as an identifier for associating superimposition information (subtitle information, graphics information) with disparity information. The subtitle data or graphics data produced by the subtitle/graphics producing unit 118 is assigned an identifier corresponding to the Region_id described above.

As described above, the Z data unit 127 outputs disparity information for each Region_id. The Z data unit 127 selectively outputs, as disparity information, a determined disparity vector or a set disparity vector by, for example, the switching control of the controller 126 based on a user operation. The determined disparity vector is a disparity vector that is determined on the basis of a plurality of disparity vectors detected by the disparity vector detection unit 114. The set disparity vector is a disparity vector that is set through a predetermined program process or a manual operation of a user.

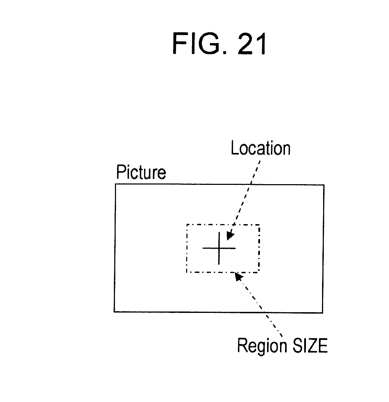

First, a case where a determined disparity vector is output as disparity information will be described. In this case, in connection with superimposition information (subtitle information, graphics information), an information set formed of the "Region_ID", described above, "Location", and "Region size" is supplied from the controller 126 to the Z data unit 127. Here, as illustrated in Fig. 21, the information "Location" indicates the position of an image (Picture) at which superimposition information (subtitle information, graphics information) identified by the "Region_ID" is to be displayed. Also, as illustrated in Fig. 21, the information "Region size" indicates the size of the area (Region) where superimposition information (subtitle information, graphics information) identified by the "Region_ID" is to be displayed.

Also, a plurality of, here, N, disparity vectors Dv0 to DvN are input from the disparity vector detection unit 114 to the Z data unit 127. The N disparity vectors Dv0 to DvN are disparity vectors detected by the disparity vector detection unit 114 at N positions in an image on the basis of left-eye image data and right-eye image data.

The Z data unit 127 extracts a disparity vector relating to a display area of the superimposition information (subtitle information, graphics information) determined by the information "Location" and "Region size", for each Region_id, from the N disparity vectors Dv0 to DvN. For example, if one or a plurality of disparity vectors for which detected positions are located in the display area are present, the disparity vector or disparity vectors are selected as a disparity vector relating to the display area. Also, for example, if a disparity vector for which the detected position is located in the display area is not present, one or a plurality of disparity vectors positioned near the display area are selected as disparity vectors relating to the display area. In the example illustrated in the figure, Dv2 to Dvn are selected as disparity vectors relating to the display area.

The Z data unit 127 selects, for example, a maximum signed value from the disparity vectors relating to the display area, and sets it as determined disparity vector DzD. As described above, a disparity vector is formed of a vertical direction component (View_Vector_Vertical) and a horizontal direction component (View_Vector_Horizontal). However, for example, only the value of the horizontal direction component is used as the signed value here. The reason is that a process for shifting superimposition information (subtitle information, graphics information) to be superimposed on a left-eye image and a right-eye image, in the horizontal direction on the basis of disparity information is performed on the receiving side, and the horizontal direction component is important.

Next, a case where a set disparity vector is output as disparity information will be described. In this case, the controller 126 sets a disparity vector for each Region_id through a predetermined program process or a manual operation of a user. For example, different disparity vectors are set in accordance with the superimposed position of superimposition information, or common disparity information is set regardless of the superimposed position. Alternatively, a different piece of disparity information is set for each type of superimposition information.

The Z data unit 127 sets the disparity vector set in this manner for each Region_id as a set disparity vector DzD'. Here, the type of superimposition information is, for example, a type such as subtitle information, graphics information, or text information. Also, the type of superimposition information is, for example, a type categorized by superimposed position, superimposition duration, or the like.

Note that a disparity vector may be set by the controller 126 for each Region_id by setting substantially only the horizontal direction component. The reason is that, as described above, a process for shifting superimposition information (subtitle information, graphics information) to be superimposed on a left-eye image and a right-eye image, in the horizontal direction on the basis of disparity information is configured to be performed on the receiving side, and the horizontal direction component is important.

Referring back to Fig. 19, the disparity information (DzD/DzD') output from the Z data unit 127 is sent to a stream formatter 119a of the subtitle/graphic encoder 119. In the stream formatter 119a, the disparity information is embedded in a subtitle or graphics data stream.

The data stream contains a plurality of types of segments, as standardized as DVB_Subtitling in DVB (Digital Video Broadcasting), which is a digital broadcast standard in Europe. Examples of the segments include "page_composition_segment", "region_composition_segment", "object_data_segment", and "display_definition_segment".

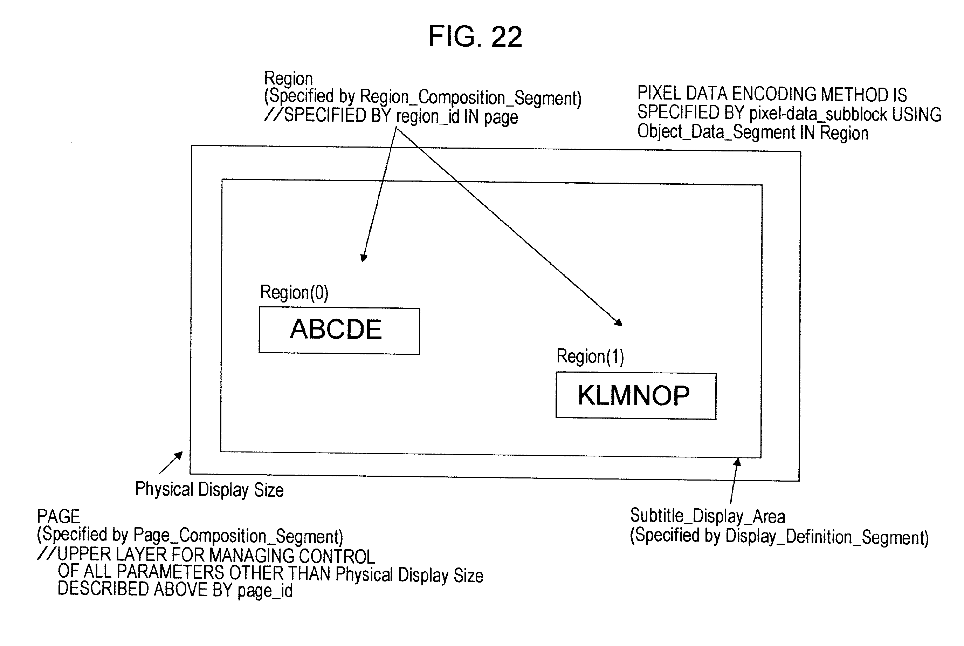

Fig. 22 illustrates a relationship among "Page", "Region", "Physical Display Size", "Subtitle_Display_Area", and the like. The "Region" is specified by region_id in Page, and is explicitly represented by "Region_Composition_Segment". The "Page" is explicitly represnted by "Page_Composition_Segment", and is an upper layer for managing the control of all parameters except for Physical Display Size by page_id. The "Subtitle_Display_Area" is explicitly indicated by "Display _Definition_Segment". Also, a pixel data encoding method is specified by pixel-data_subblock using "Object_Data_Segment" in Region.

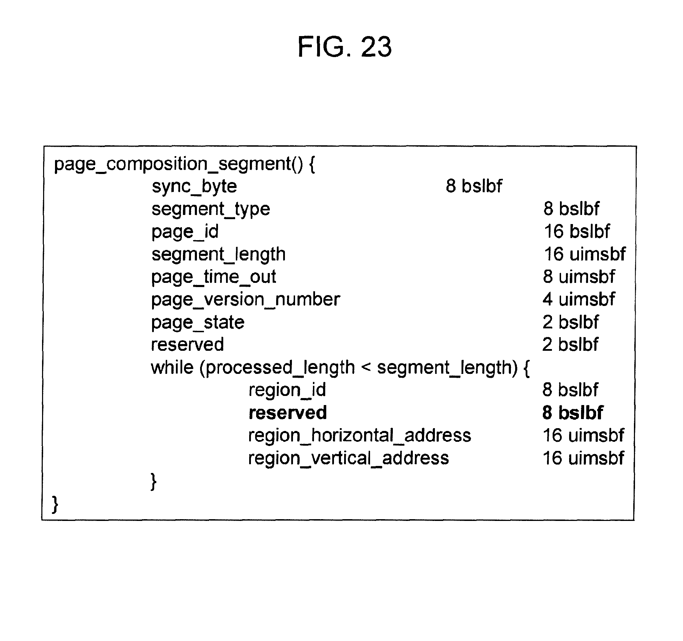

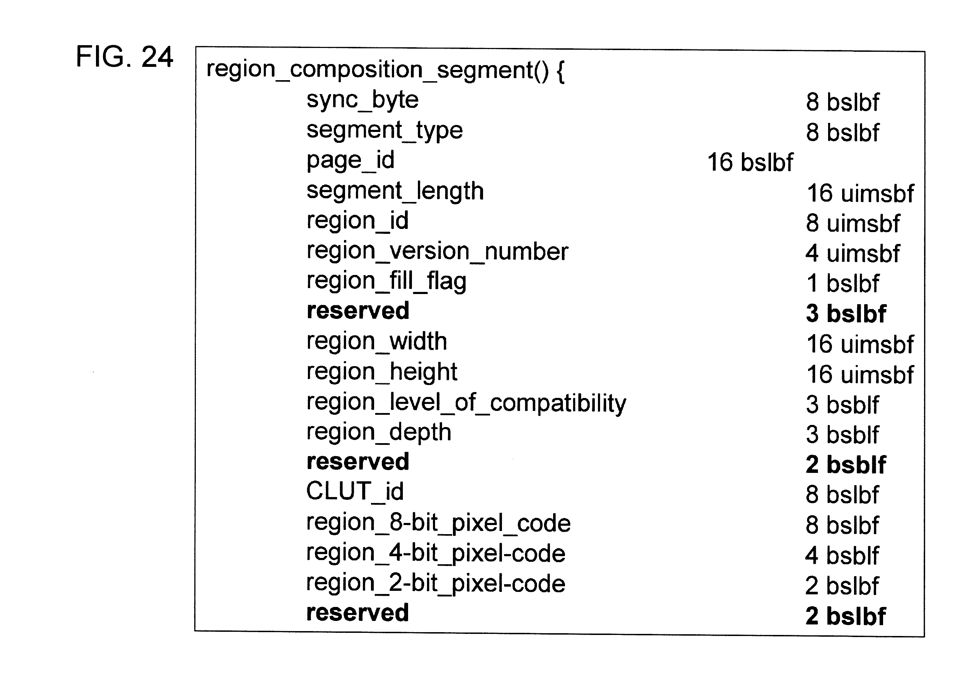

Fig. 23 illustrates the syntax of "page_composition_segment". Also, Fig. 24 illustrates the syntax of "region_composition_segment". Herein, disparity information for each Region_id is embedded utilizing a reserved area (8 bits) of the "page_composition_segment" and a reserved area (7 bits) of the "region_composition_segment".

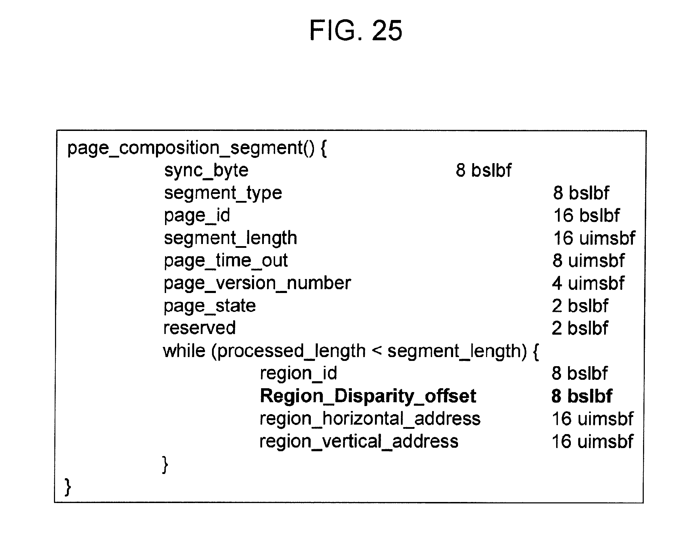

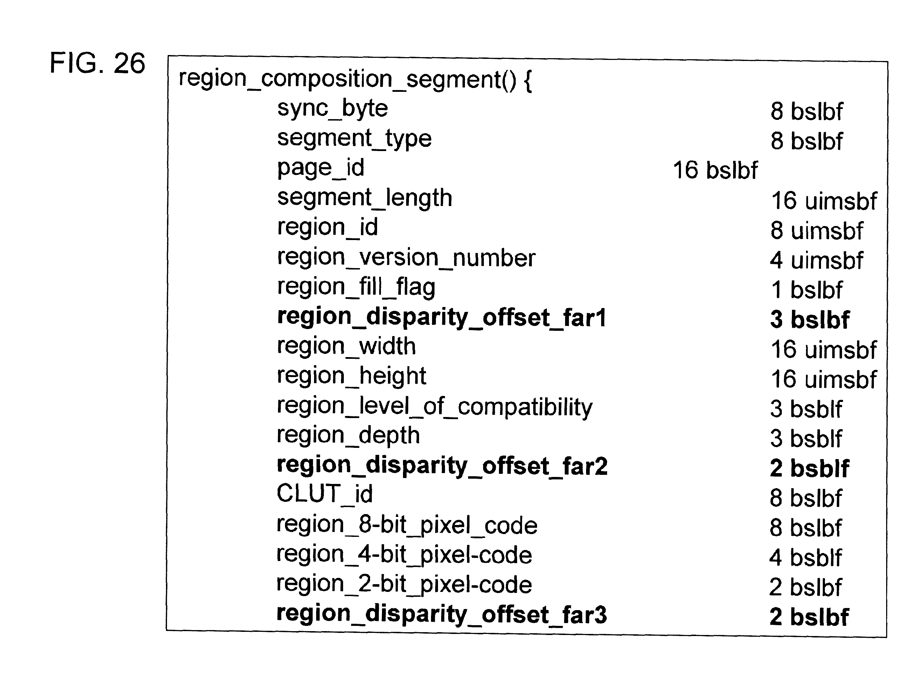

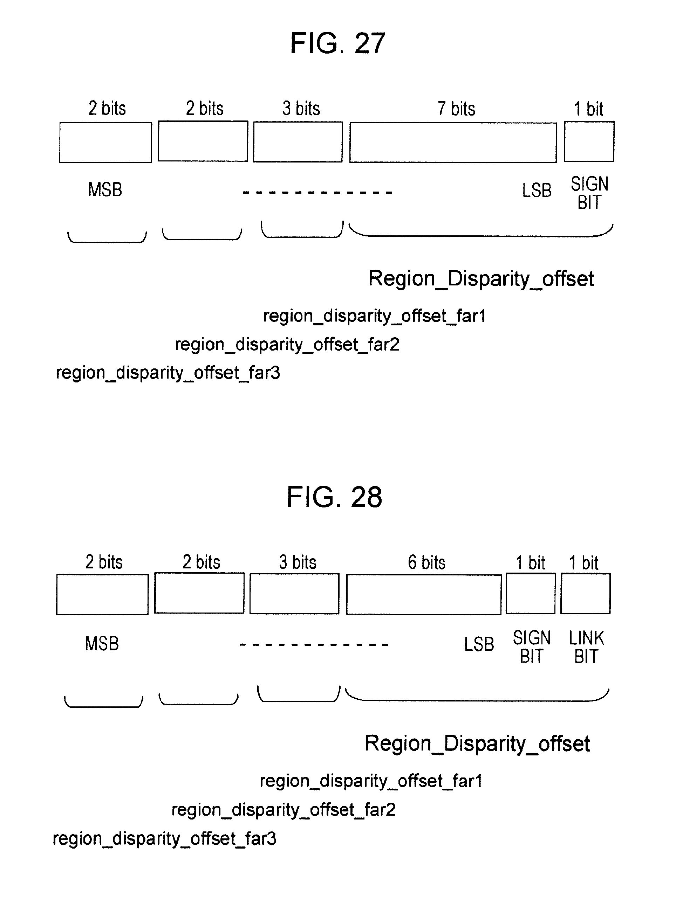

That is, as illustrated in Fig. 25, "Region_Disparity_offset" is defined in the "page_composition_segment". Also, as illustrated in Fig. 26, "region_disparity_offset_far1", "region_disparity_offset_far2", and "region_disparity_offset_far3" are defined in the "region_composition_segment". Accordingly, as illustrated in Fig. 27, a 15-bit area where disparity information is to be embedded is reserved.

A case is considered where, as described above, the disparity information (horizontal direction component of a disparity vector) output for each Region_id from the Z data unit 127 is represented by, for example, 11 bits including a 1-bit sign bit. In this case, the horizontal direction component of the disparity vector ranging from -1023 to +1023 can be represented. When an image display of 1920 x 1080 pixels is executed, with the disparity information, disparity up to approximately one half of the horizontal size can be given to the same superimposition information (subtitle information, graphics information) to be superimposed on a left-eye image and a right-eye image.

An example arrangement of bits in a case where the disparity information is represented by, as described above, a 11-bit signed representation will be described. As illustrated in Fig. 27, a 1-bit sign bit and the least significant 7 bits are arranged in the "Region_Disparity_offset" defined in the "page_composition_segment". Then, the most significant 3 bits are arranged in the "region_disparity_offset_far1" defined in the "region_composition_segment".

Note that in some cases, when image display in which the number of pixels in the horizontal direction is 2 x 1920 or 4 x 1920 is executed, the number of bits of disparity information may be larger than 11 bits. In such cases, the most significant bits are arranged in the "region_disparity_offset_far2" or also in the "region_disparity_offset_far3" defined in the "region_composition_segment".

Also, in a case where the number of bits of disparity information is small, all the bits representing the disparity information can be arranged in the "Region_Disparity_offset" defined in the "page_composition_segment". In such a case, on the receiving side, there is no need to read the "region_disparity_offset_far1" to the "region_disparity_offset_far3" defined in the "region_composition_segment".

Fig. 28 illustrates another example arrangement of bits of disparity information. A 1-bit link bit is arranged in the "Region_Disparity_offset" defined in the "page_composition_segment". The link bit indicates whether or not the most significant bits of the disparity information are arranged in the "region_disparity_offset_far1" to the "region_disparity_offset_far3" defined in the "region_composition_segment".

In a case where the number of bits of the disparity information including a sign bit is less than or equal to 7 bits, all the bits representing the disparity information can be arranged in the "Region_Disparity_offset" defined in the "page_composition_segment". In this case, the link bit is brought into a state where no most significant bits of the disparity information are arranged in the "region_disparity_offset_far1" to the "region_disparity_offset_far3" defined in the "region_composition_segment".

Referring back to Fig. 19, text data produced by the text producing unit 120 is sent to the subtitle/graphic encoder 119. In the subtitle/graphic encoder 119, data of the text information is embedded in graphics data. In this case, as described above, disparity information to be embedded in a graphics data stream is applicable to both the graphics information and the text information.

The data stream of subtitle data or graphics data having the disparity information embedded therein, which is output from the subtitle/graphic encoder 119, is supplied to the multiplexer 122. In the multiplexer 122, the data streams (elementary streams) supplied from the video encoder 113, the subtitle/graphic encoder 119, and the audio encoder 117 are multiplexed, and bit stream data BSD is obtained.

The other elements of the transmission data generation unit 110C illustrated in Fig. 19 are configured in a manner similar to that of the transmission data generation unit 110 illustrated in Fig. 2, and operate in a similar manner although the detailed description is omitted.

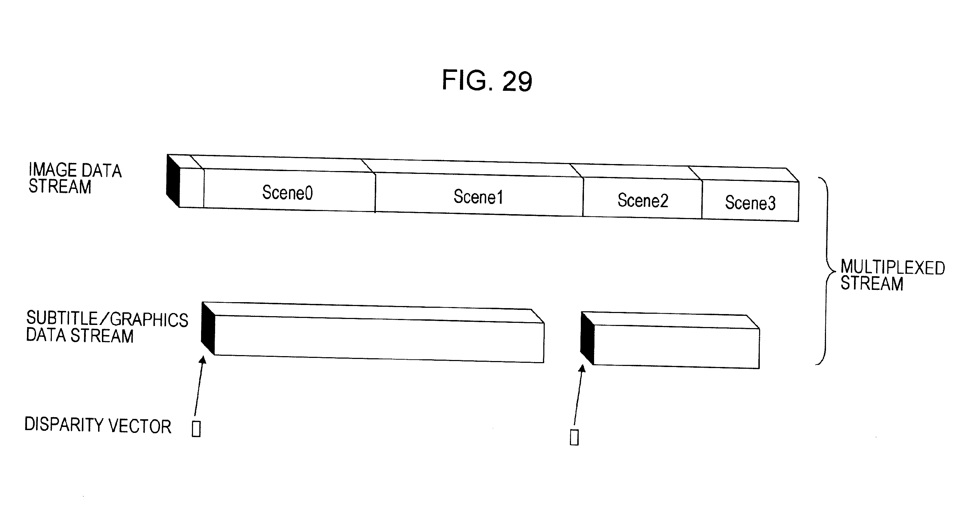

Fig. 29 illustrates an example of an image data stream and a subtitle or graphics data stream which are multiplexed in the transmission data generation unit 110C illustrated in Fig. 19. Disparity vectors (disparity information) are embedded in the subtitle or graphics data stream and are transmitted.

### [Description of Set-Top Box]

Referring back to Fig. 1, the set-top box 200 receives bit stream data (transport stream) carried on a broadcast wave and transmitted from the broadcast station 100. The bit stream data contains stereo image data including left-eye image data and right-eye image data, audio data, and superimposition information data, and also contains disparity information (disparity vector). Here, the superimposition information data is, for example, subtitle data, graphics data, text data, or the like.

The set-top box 200 includes a bit stream processing unit 201. The bit stream processing unit 201 extracts stereo image data, audio data, superimposition information data, disparity vectors, and the like from the bit stream data. The bit stream processing unit 201 generates data of a left-eye image and a right-eye image on which the superimposition information has been superimposed using the stereo image data, the superimposition information data (subtitle data, the graphics data, the text data, or the like.

Here, in a case where disparity vectors are transmitted as numerical information, left-eye superimposition information and right-eye superimposition information to be superimposed on the left-eye image and the right-eye image, respectively, are generated on the basis of the disparity vectors and the superimposition information data. In this case, the left-eye superimposition information and the right-eye superimposition information are the same superimposition information. However, the superimposed position of, for example, the right-eye superimposition g information in the image is configured to be shifted in the horizontal direction by the horizontal direction component of the disparity vector with respect to the left-eye superimposition information.

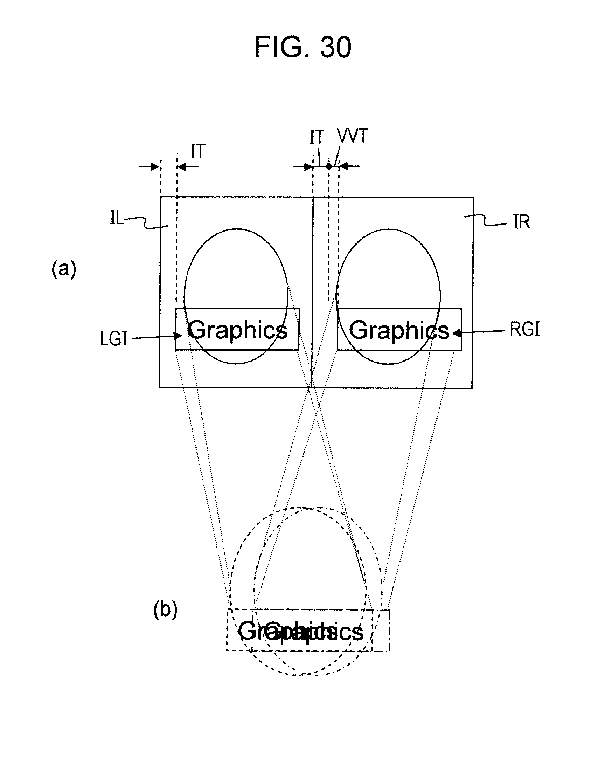

Fig. 30(a) illustrates superimposed positions of left-eye graphics information and right-eye graphics information in a case where the transmission method is the second transmission method described above ("Side By Side" method). Right-eye graphics information RGI to be superimposed on a right-eye image IR is configured to be at a position shifted in the horizontal direction by a horizontal direction component VVT of a disparity vector with respect to left-eye graphics information LGI to be superimposed on a left-eye image IL. Note that IT is an idling offset value.

In the bit stream processing unit 201, graphics data is generated so that the pieces of graphics information LGI and RGI are superimposed on the images IL and IR in the manner as illustrated in Fig. 30(a). The bit stream processing unit 201 combines the generated left-eye graphics data and right-eye graphics data with the stereo image data (left-eye image data, right-eye image data) extracted from the bit stream data, and acquires processed stereo image data. According to the stereo image data, as illustrated in Fig. 30(b), a viewer can observe the pieces of graphics information LGI and RGI with disparity, together with the images IL and IR, and is able to also perceive the perspective of the graphics information.

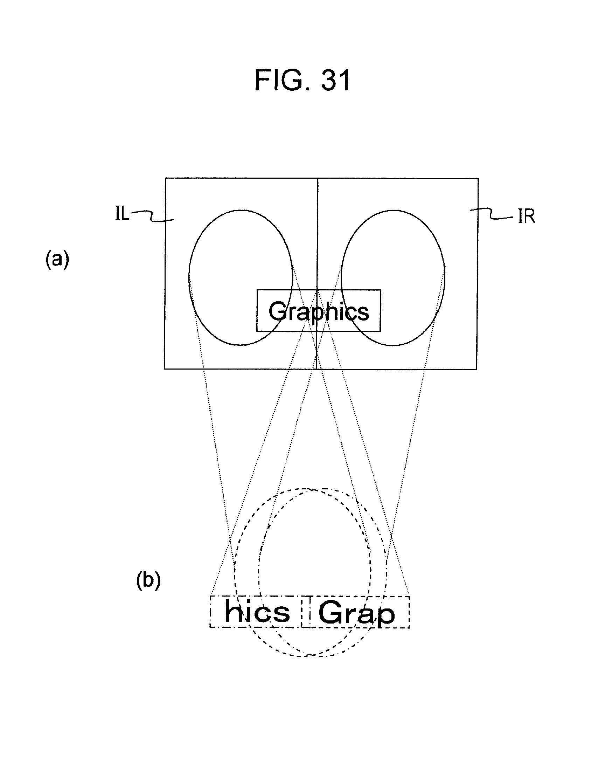

Note that Fig. 31(a) illustrates a state where a graphics image based on the graphics data extracted from the bit stream data is superimposed on the images IL and IR as it is. In this case, as illustrated in Fig. 31(b), a viewer observes the left half of the graphics information together with the left-eye image IL and the right half of the graphics information together with the right-eye image IR. Thus, the graphics information is not made correctly recognizable.

While Fig. 30 illustrates the case of graphics information, a similar operation is performed on other superimposition information (such as subtitle information or text information). That is, in a case where disparity vectors are transmitted as numerical information, left-eye superimposition information and right-eye superimposition information to be superimposed on the left-eye image and the right-eye image, respectively, are generated on the basis of the disparity vectors and the superimposition information data data. In this case, the left-eye superimposition information and the right-eye superimposition information are the same superimposition information. However, the superimposed position of, for example, the right-eye superimposition information in the image is configured to be shifted in the horizontal direction by the horizontal direction component of the disparity vector with respect to the left-eye superimposition information.

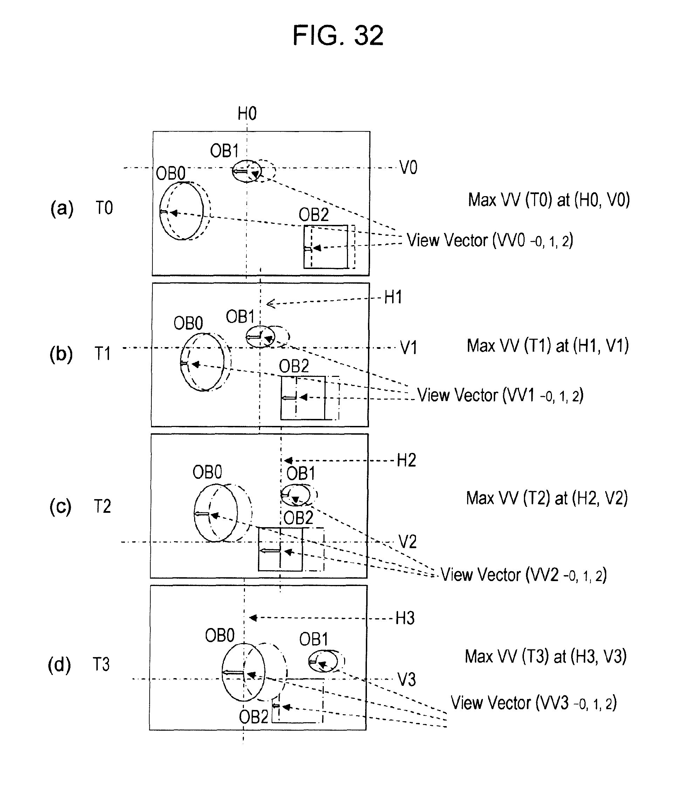

Here, it is conceivable that the following disparity vectors are used as disparity vectors that give disparity between left-eye superimposition information and right-eye superimposition information. For example, it is conceivable that a disparity vector at the position recognized to be the closest in terms of perspective among disparity vectors detected at a plurality of positions in an image is used as a disparity vector. Figs. 32(a), 32(b), 32(c), and 32(d) illustrate disparity vectors (View Vectors) at three object positions at times T0, T1, T2, and T3.

At time T0, a disparity vector VV0-1 at the position (H0, V0) corresponding to an object 1 is the maximum disparity vector Max VV(T0). At time T1, a disparity vector VV1-1 at the position (H1, V1) corresponding to the object 1 is the maximum disparity vector Max VV(T1). At time T2, a disparity vector VV2-2 at the position (H2, V2) corresponding to an object 2 is the maximum disparity vector Max VV(T2). At time T3, a disparity vector VV3-0 at the position (H3, V3) corresponding to the object 1 is the maximum disparity vector Max VV(T3).

In this manner, the disparity vector at the position recognized to be the closest in terms of perspective among disparity vectors detected at a plurality of positions in an image is used as a disparity vector, thus allowing superimposition information to be displayed in front of the object in the image closest in terms of perspective.

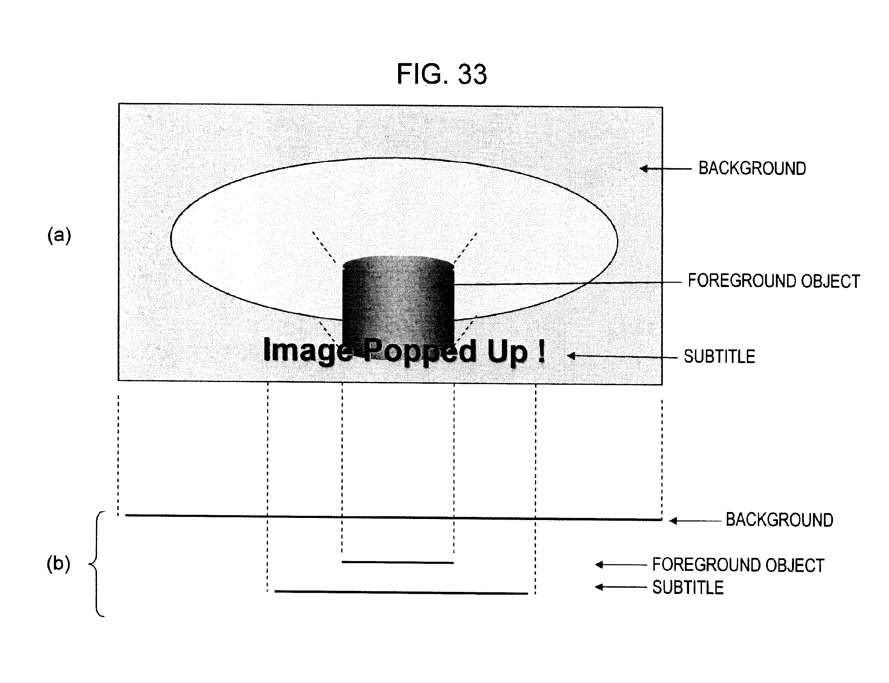

Fig. 33(a) illustrates a display example of a subtitle (for example, subtitle information) on an image. In this display example, a subtitle is superimposed on an image formed of a background and a foreground object, by way of example. Fig. 33(b) illustrates the perspective of the background, the foreground object, and the subtitle, and illustrates that the subtitle is recognized to be located closest.

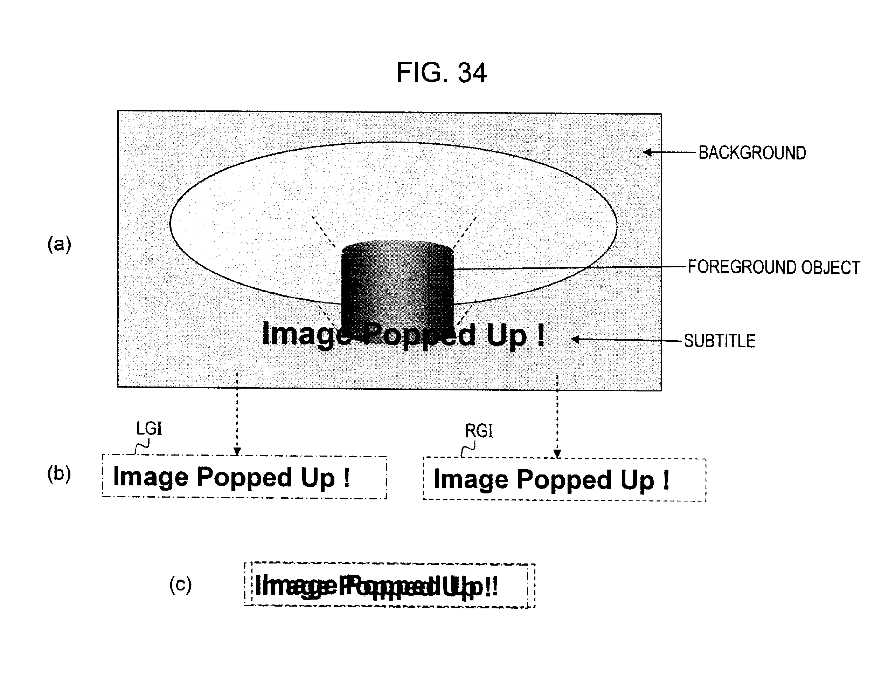

Fig. 34(a) illustrates a display example of a subtitle (for example, subtitle information) on an image, which is the same as that in Fig. 33(a). Fig. 34(b) illustrates left-eye subtitle information LGI and right-eye subtitle information RGI for displaying the subtitle. Fig. 34(c) illustrates that disparity is given to the pieces of subtitle information LGI and RGI in order to allow the subtitle to be recognized to be located closest.

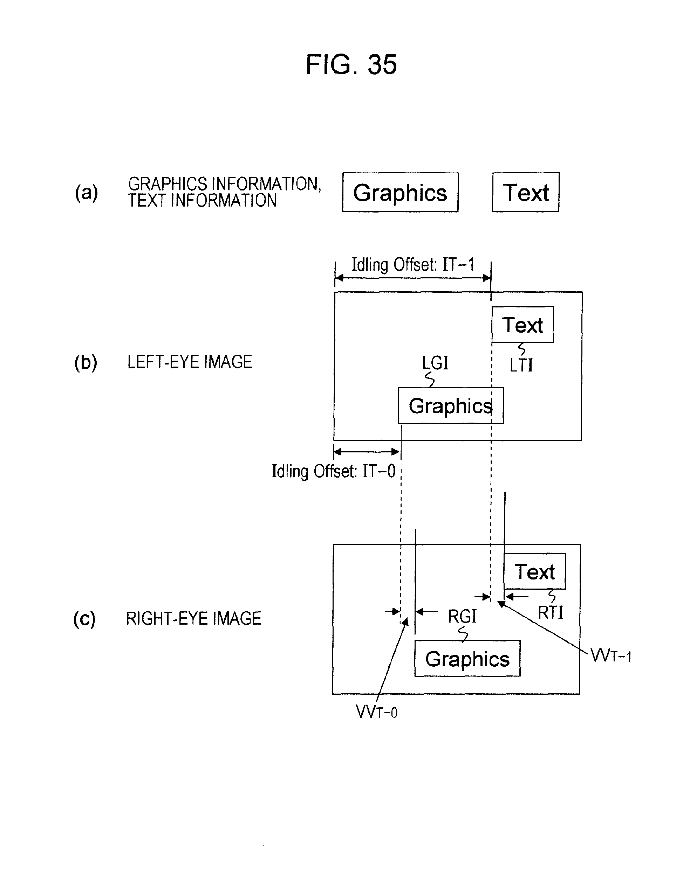

Also, it is conceivable that a disparity vector corresponding to its superimposed position among disparity vectors detected at a plurality of positions in an image is used as a disparity vector. Fig. 35(a) illustrates graphic information that is based on graphic data extracted from bit stream data, and text information that is based on text data extracted from the bit stream data.

Fig. 35(b) illustrates a state where left-eye graphics information LGI and left-eye text information LTI have been superimposed on a left-eye image. In this case, the superimposed position of the left-eye graphics information LGI is regulated by an idling offset value (IT-0) in the horizontal direction. Also, the superimposed position of the left-eye text information LTI is regulated by an idling offset value (IT-1) in the horizontal direction.

Fig. 35(c) illustrates a state where right-eye graphics information RGI and right-eye text information RTI have been superimposed on a right-eye image. In this case, the superimposed position of the right-eye graphics information RGI is regulated by an idling offset value (IT-0) in the horizontal direction, and is further shifted with respect to the superimposed position of the left-eye graphics information LGI by the horizontal direction component VVT-0 of the disparity vector corresponding to the superimposed position. Also, the superimposed position of the right-eye text information RTI is regulated by an idling offset value (IT-1) in the horizontal direction, and is further shifted with respect to the superimposed position of the left-eye text information LTI by the horizontal direction component VVT-1 of the disparity vector corresponding to the superimposed position.

The foregoing description has been given of a case where graphics information that is based on graphics data extracted from bit stream data or text information that is based on text data extracted from the bit stream data is superimposed on a left-eye image and a right-eye image. In addition to this, a case is also conceivable where graphics data or text data is produced in the set-top box 200 and where information that is based on the data is superimposed on a left-eye image and a right-eye image.

Even in this case, disparity can be introduced between left-eye graphics information and right-eye graphics information or between left-eye text information and right-eye text information by utilizing a disparity vector at a predetermined position in an image extracted from the bit stream data. Accordingly, appropriate perspective can be given in the display of graphics information or text information in order to maintain the consistency in perspective between the information and each object in the image.

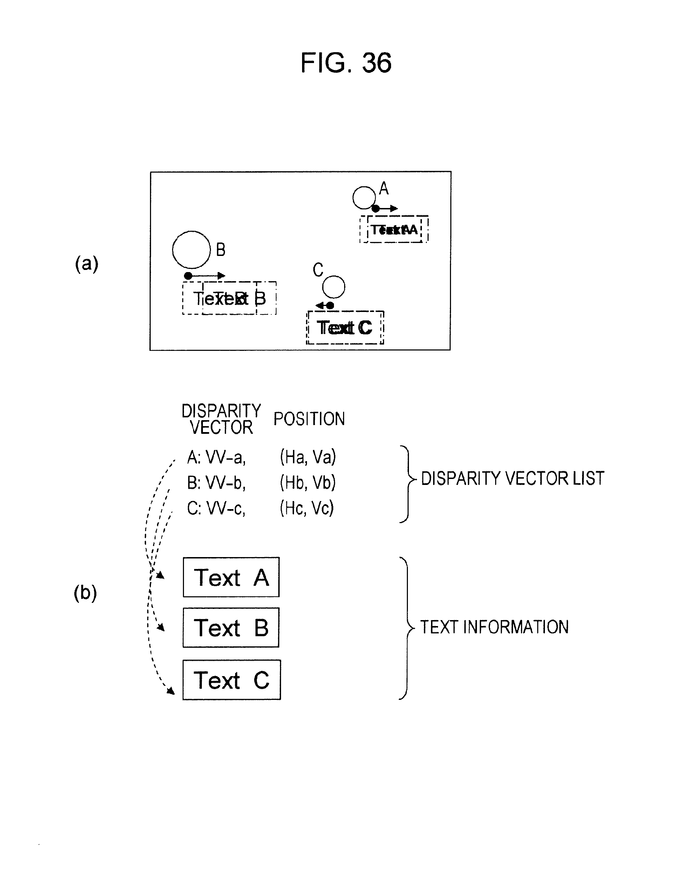

Fig. 36(a) illustrates the presence of objects A, B, and C in an image and the superimposition of text information indicating the annotation of each object at, for example, a position near the object. Fig. 36(b) illustrates that a disparity vector list indicating the correspondence between the positions of the objects A, B, and C and the disparity vectors at the positions, and the respective disparity vectors are utilized in a case where disparity is given to the text information indicating the annotation of the objecs A, B, and C. For example, while text information "Text" is superimposed near the object A, the disparity corresponding to a disparity vector VV-a at the position (Ha, Va) of the object A is given between the left-eye text information and the right-eye text information. Note that a similar operation is performed on text information to be superimposed near the objects B and C.

Note that Fig. 35 illustrates a case where the superimposition information includes graphics information and text information. Also, Fig. 36 illustrates a case where the imposition information includes text information. A similar operation is performed in the case of other superimposition information (such as subtitle information) although the detailed description is omitted.

Next, a case will be described where a disparity vector is transmitted while being reflected in advance in data of superimposition information (such as subtitle information, graphics information, or text information). In this case, superimposition information data extracted from bit stream data contains data of left-eye superimposition information and right-eye superimposition information to which disparity has been given using the disparity vector.

Thus, the bit stream processing unit 201 simply combines the superimposition information data extracted from the bit stream data on stereo image data (left-eye image data, right-eye image data) extracted from the bit stream data, and acquires processed stereo image data. Note that a process such as converting character code into bitmap data is necessary for text data.

### [Example Configuration of Set-Top Box]

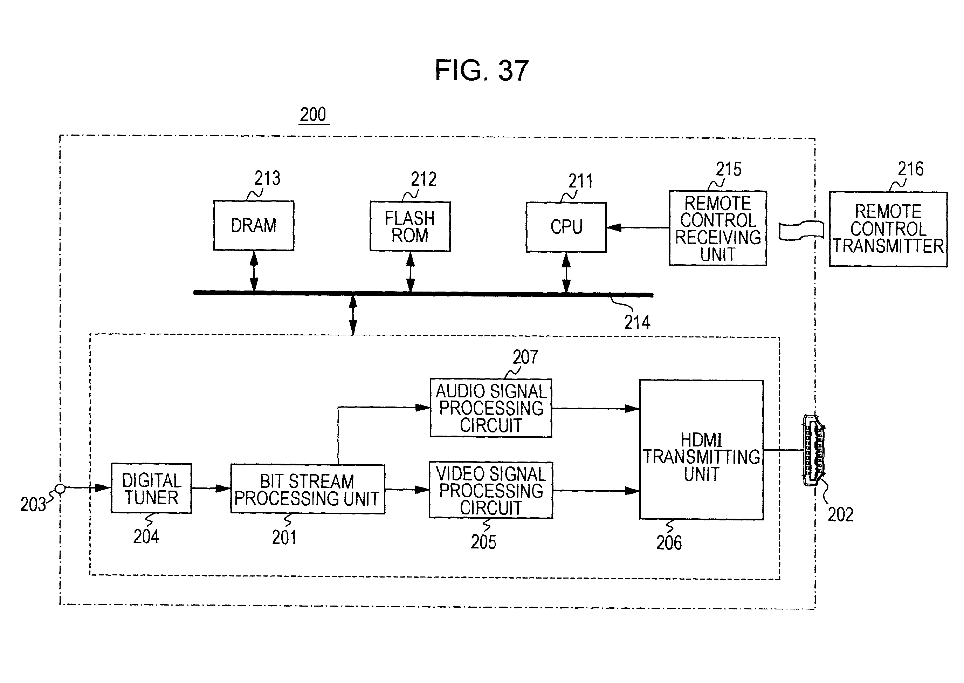

An example configuration of the set-top box 200 will be described. Fig. 37 illustrates an example configuration of the set-top box 200. The set-top box 200 includes a bit stream processing unit 201, an HDMI terminal 202, an antenna terminal 203, a digital tuner 204, a video signal processing circuit 205, an HDMI transmitting unit 206, and an audio signal processing circuit 207. Also, the set-top box 200 includes a CPU 211, a flash ROM 212, a DRAM 213, an internal bus 214, a remote control receiving unit 215, and a remote control transmitter 216.

The antenna terminal 203 is a terminal to which a television broadcast signal received by a receiving antenna (not illustrated) is input. The digital tuner 204 processes the television broadcast signal input to the antenna terminal 203, and outputs predetermined bit stream data (transport stream) corresponding to a channel selected by the user.

As described above, the bit stream processing unit 201 extracts stereo image data (left-eye image data, right-eye image data), audio data, superimposition information data, disparity information (disparity vectors), and the like from the bit stream data. The superimposition information data includes subtitle data, graphics data, text data, and the like. As described above, the bit stream processing unit 201 combines data of superimposition information (such as subtitle information, graphics information, or text information) with the stereo image data, and acquires display stereo image data. Also, the bit stream processing unit 201 outputs audio data. The detailed configuration of the bit stream processing unit 201 will be described below.

The video signal processing circuit 205 performs an image quality adjustment process and the like, in accordance with necessity, on the stereo image data output from the bit stream processing unit 201, and supplies processed stereo image data to the HDMI transmitting unit 206. The audio signal processing circuit 207 performs an audio quality adjustment process and the like, in accordance with necessity, on the audio data output from the bit stream processing unit 201, and supplies processed audio data to the HDMI transmitting unit 206.

The HDMI transmitting unit 206 delivers data of a baseband image (video) and audio from the HDMI terminal 202 using HDMI-compliant communication. In this case, the data of the image and audio is packed, and is output from the HDMI transmitting unit 206 to the HDMI terminal 202 for transmission through an HDMI TMDS channel. The details of the HDMI transmitting unit 206 will be described below.

The CPU 211 controls the operation of each unit of the set-top box 200. The flash ROM 212 stores control software and holds data. The DRAM 213 forms a work area for the CPU 211. The CPU 211 expands the software and data read from the flash ROM 212 onto the DRAM 213 to start the software, and controls each unit of the set-top box 200.

The remote control receiving unit 215 receives a remote control signal (remote control code) transmitted from the remote control transmitter 216, and supplies the remote control signal to the CPU 211. The CPU 211 controls each unit of the set-top box 200 on the basis of the remote control code. The CPU 211, the flash ROM 212, and the DRAM 213 are connected to the internal bus 214.

The operation of the set-top box 200 will be described briefly. The television broadcast signal input to the antenna terminal 203 is supplied to the digital tuner 204. In the digital tuner 204, the television broadcast signal is processed, and predetermined bit stream data (transport stream) corresponding to a channel selected by the user is output.

The bit stream data output from the digital tuner 204 is supplied to the bit stream processing unit 201. In the bit stream processing unit 201, stereo image data (left-eye image data, right-eye image data), audio data, graphics data, text data, disparity vectors, and the like are extracted from the bit stream data. Also, in the bit stream processing unit 201, data of superimposition information (such as subtitle information, graphics information, or text information) is combined with the stereo image data, and display stereo image data is generated.

The display stereo image data generated by the bit stream processing unit 201 is subjected to an image quality adjustment process and the like in accordance with necessity by the video signal processing circuit 205, and is thereafter supplied to the HDMI transmitting unit 206. Also, the audio data obtained by the bit stream processing unit 201 is subjected to an audio quality adjustment process and the like in accordance with necessity by the audio signal processing circuit 207, and is thereafter supplied to the HDMI transmitting unit 206. The stereo image data and audio data supplied to the HDMI transmitting unit 206 are delivered from the HDMI terminal 202 to the HDMI cable 400 through the HDMI TMDS channel.

### "Example Configuration of Bit Stream Processing Unit"

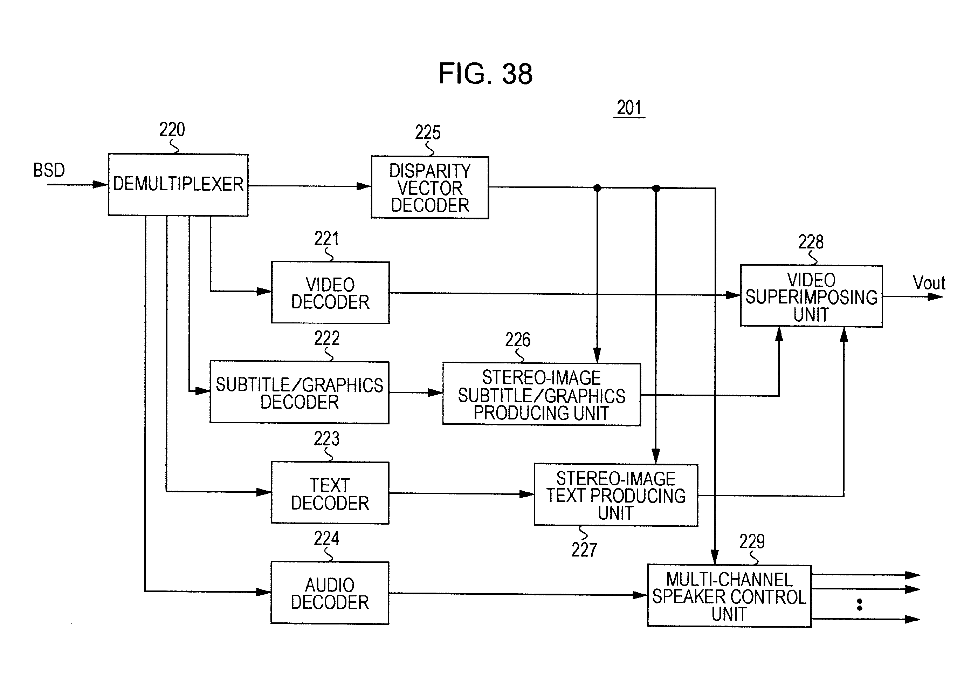

Fig. 38 illustrates an example configuration of the bit stream processing unit 201. The bit stream processing unit 201 has a configuration that is made to correspond to that of the transmission data generation unit 110 described above illustrated in Fig. 2. The bit stream processing unit 201 includes a demultiplexer 220, a video decoder 221, a subtitle/graphics decoder 222, a text decoder 223, an audio decoder 224, and a disparity vector decoder 225. Also, the bit stream processing unit 201 includes a stereo-image subtitle/graphics producing unit 226, a stereo-image text producing unit 227, a video superimposing unit 228, and a multi-channel speaker control unit 229.

The demultiplexer 220 extracts packets of video, audio, disparity vectors, subtitle, graphics, text, and the like from bit stream data BSD, and sends the packets to the respective decoders.

The video decoder 221 performs a process reverse to that of the video encoder 113 of the transmission data generation unit 110 described above. That is, the video decoder 221 reconfigures the elementary stream of video from the packets of video extracted by the demultiplexer 220, performs a decoding process, and obtains stereo image data including left-eye image data and right-eye image data. Examples of the transmission method of the stereo image data include the first transmission method ("Top & Bottom" method), the second transmission method ("Side By Side" method), the third transmission method ("Frame Sequential" method), and the like described above (see Figs. 4(a) to 4(c)).

The subtitle/graphics decoder 222 performs a process reverse to that of the subtitle/graphic encoder 119 of the transmission data generation unit 110 described above. That is, the subtitle/graphics decoder 222 reconfigures the elementary stream of subtitle or graphics from the packets of subtitle or graphics extracted by the demultiplexer 220. Then, the subtitle/graphics decoder 222 further performs a decoding process to obtain subtitle data or graphics data.

The text decoder 223 performs a process reverse to that of the text encoder 121 of the transmission data generation unit 110 described above. That is, the text decoder 223 reconfigures the elementary stream of text from the packets of text extracted by the demultiplexer 220, and performs a decoding process to obtain text data.

The audio decoder 224 performs a process reverse to that of the audio encoder 117 of the transmission data generation unit 110 described above. That is, the audio decoder 224 reconfigures the elementary stream of audio from the packets of audio extracted by the demultiplexer 220, and performs a decoding process to obtain audio data.

The disparity vector decoder 225 performs a process reverse to that of the disparity vector encoder 115 of the transmission data generation unit 110 described above. That is, the disparity vector decoder 225 reconfigures the elementary stream of disparity vectors from the packets of disparity vectors extracted by the demultiplexer 220, and performs a decoding process to obtain a disparity vector at a predetermined position in an image.

The stereo-image subtitle/graphics producing unit 226 generates left-eye and left-eye subtitle information or graphics information to be superimposed on the left-eye image and the right-eye image, respectively. This generation process is performed on the basis of the subtitle data or graphics data obtained by the decoder 222 and the disparity vectors obtained by the decoder 225. In this case, the left-eye and left-eye subtitle information or graphics information is the same information. However, the superimposed position of, for example, the right-eye btitle information or graphics information in the image is configured to be shifted in the horizontal direction by the horizontal direction component of the disparity vector with respect to the left-eye subtitle information or graphics information. Then, the stereo-image subtitle/graphics producing unit 226 outputs data (bitmap data) of the generated left-eye and left-eye subtitle information or graphics information.

The stereo-image text producing unit 227 generates left-eye text information and right-eye text information to be superimposed on the left-eye image and the right-eye image, respectively, on the basis of the text s data obtained by the decoder 223 and the disparity vectors obtained by the decoder 225. In this case, the left-eye text information and the right-eye text information are the same text information. However, the superimposed position of, for example, the right-eye text information in the image is configured to be shifted in the horizontal direction by the horizontal direction component of the disparity vector with respect to the left-eye text information. Then, the stereo-image text producing unit 227 outputs data (bitmap data) of the generated left-eye text information and right-eye text information.

The video superimposing unit 228 superimposes the data produced by the producing units 226 and 227 on the stereo image data (left-eye image data, right-eye image data) obtained by the video decoder 221, and obtains display stereo image data Vout. Note that the superimposition of the superimposition information data on the stereo image data (left-eye image data, right-eye image data) is started using a time stamp in the system layer.

The multi-channel speaker control unit 229 performs a process for generating audio data of a multi-channel speaker to implement, for example, 5.1-ch surround or the like, a process for giving predetermined sound field characteristics, and the like on the audio data obtained by the audio decoder 224. Also, the multi-channel speaker control unit 229 controls the output of the multi-channel speaker on the basis of the disparity vectors obtained by the decoder 225.

There is an effect that the higher the magnitude of the disparity vector is, the more noticeable the stereoscopic effect is. The output of the multi-channel speaker is controlled in accordance with the stereoscopic degree, thus making feasible further provision of the stereoscopic experience.

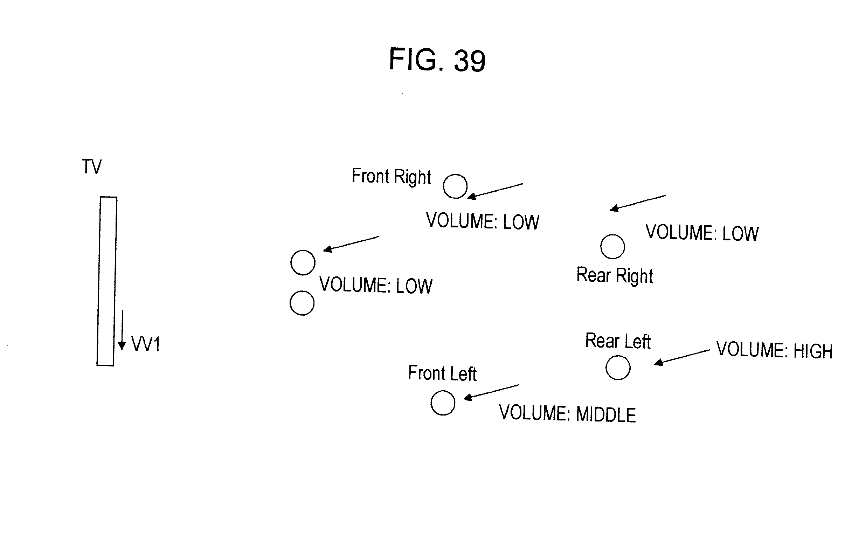

Fig. 39 illustrates an example of speaker output control in a case where a video object on the left-hand side when viewed in the direction of a television display has a large disparity vector VV1. In this control example, the volume of the Rear Left speaker of the multi-channel speaker is set high, the volume of the Front Left speaker is set about middle, and further the volume of the Front Right and Rear Right speakers are set low. In this manner, the disparity vector of video content (stereo image data) is applied to other media data such as audio data on the receiving side, thus making it possible to allow the viewer to experience the overall stereoscopic effect.

The operation of the bit stream processing unit 201 illustrated in Fig. 38 will be described briefly. The bit stream data BSD output from the digital tuner 204 (see Fig. 37) is supplied to the demultiplexer 220. In the demultiplexer 220, packets of video, audio, disparity vectors, subtitle or graphics, and text are extracted from the bit stream data BSD, and are supplied to the respective decoders.

In the video decoder 221, an elementary stream of video is reconfigured from the packets of video extracted from the demultiplexer 220, and a decoding process is further performed to obtain stereo image data including left-eye image data and right-eye image data. The stereo image data is supplied to the video superimposing unit 228. Also, in the disparity vector decoder 225, an elementary stream of disparity vectors is reconfigured from the packets of disparity vectors extracted by the demultiplexer 220, and a decoding process is further performed to obtain a disparity vector at a predetermined position in an image (see Fig. 8).

In the subtitle/graphics decoder 222, an elementary stream of subtitle or graphics is reconfigured from the packets of subtitle or graphics extracted by the demultiplexer 220. In the subtitle/graphics decoder 222, a decoding process is further performed on the elementary stream of subtitle or graphics, and subtitle data or graphics data is obtained. The subtitle data or graphics data is supplied to the stereo-image subtitle/graphics producing unit 226. The disparity vectors obtained by the disparity vector decoder 225 are also supplied to the stereo-image subtitle/graphics producing unit 226.

In the stereo-image subtitle/graphics producing unit 226, data of left-eye and right-eye subtitle information items or graphics information items to be superimposed respectively on the left-eye image and the right-eye image is generated. This generation process is performed on the basis of the subtitle data or graphics data obtained by the decoder 222 and the disparity vectors obtained by the decoder 225. In this case, the superimposed position of, for example, the right-eye subtitle information or graphics information in the image is configured to be shifted in the horizontal direction by the horizontal direction component of the disparity vector with respect to the left-eye subtitle information or left-eye graphics information. The data (bitmap data) of the generated left-eye and right-eye subtitle information items or graphics information items is output from the stereo-image subtitle/graphics producing unit 226.

Also, in the text decoder 223, an elementary stream of text is reconfigured from the packets of text extracted by the demultiplexer 220, and a decoding process is further performed to obtain text data. The text data is supplied to the stereo-image text producing unit 227. The disparity vectors obtained by the disparity vector decoder 225 are also supplied to the stereo-image text producing unit 227.

In the stereo-image text producing unit 227, left-eye text information and right-eye text information to be superimposed on the left-eye image and the right-eye image, respectively, are generated on the basis of the text s data obtained by the decoder 223 and the disparity vectors obtained by the decoder 225. In this case, the left-eye text information and the right-eye text information are the same text information. However, the superimposed position of, for example, the right-eye text information in the image is configured to be shifted in the horizontal direction by the horizontal direction component of the disparity vector with respect to the left-eye text information. The data (bitmap data) of the generated left-eye text information and right-eye text information is output from the stereo-image text producing unit 227.

In addition to the stereo image data (left-eye image data, right-eye image data) from the video decoder 221 described above, the data output from the subtitle/graphics producing unit 226 and the text producing unit 227 is supplied to the video superimposing unit 228. In the video superimposing unit 228, the data produced by the subtitle/graphics producing unit 226 and the text producing unit 227 is superimposed on the stereo image data (left-eye image data, right-eye image data), and display stereo image data Vout is obtained. The display stereo image data Vout is supplied as transmission image data to the HDMI transmitting unit 206 (see Fig. 37) via the video signal processing circuit 205.

Also, in the audio decoder 224, an elementary stream of audio is reconfigured from the packets of audio extracted by the demultiplexer 220, and a decoding process is further performed to obtain audio data. The audio data is supplied to the multi-channel speaker control unit 229. In the multi-channel speaker control unit 229, a process for generating audio data of the multi-channel speaker to implement, for example, 5.1-ch surround or the like, a process for giving predetermined sound field characteristics, and the like are performed on the audio data.

The disparity vectors obtained by the disparity vector decoder 225 are also supplied to the multi-channel speaker control unit 229. Then, in the multi-channel speaker control unit 229, the output of the multi-channel speaker is controlled on the basis of the disparity vector. The multi-channel audio data obtained by the multi-channel speaker control unit 229 is supplied as transmission audio data to the HDMI transmitting unit 206 (see Fig. 37) via the audio signal processing circuit 207.

### "Another Example Configuration of Bit Stream Processing Unit"

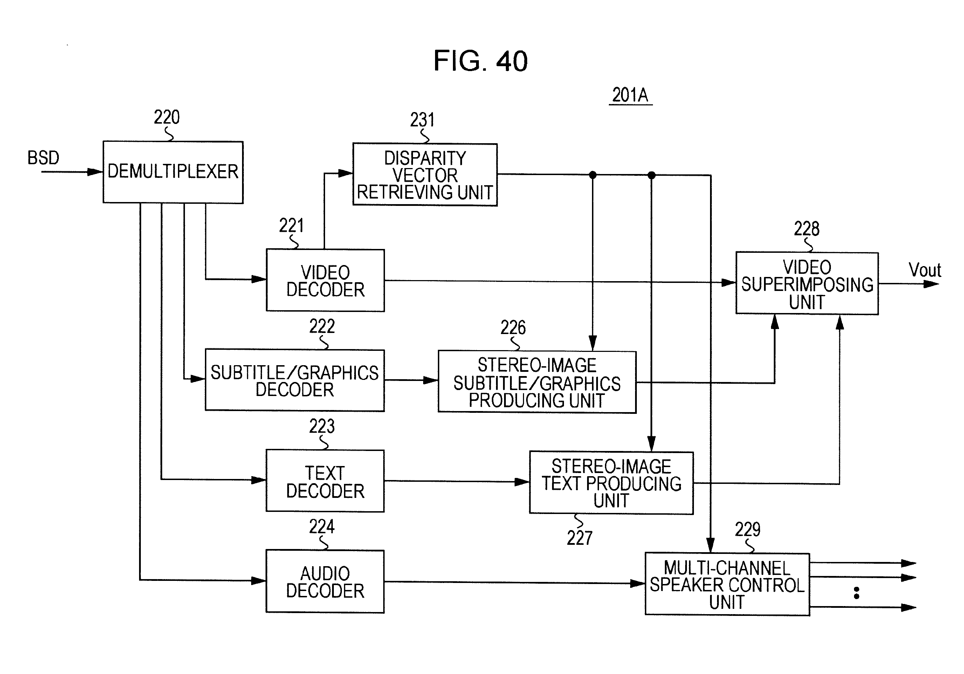

A bit stream processing unit 201A illustrated in Fig. 40 has a configuration that is made to correspond to that of the transmission data generation unit 110A described above illustrated in Fig. 13. In Fig. 40, portions corresponding to those in Fig. 38 are assigned the same numerals, and the detailed description thereof is omitted.

The bit stream processing unit 201A is provided with a disparity vector retrieving unit 231 in place of the disparity vector decoder 225 of the bit stream processing unit 201 illustrated in Fig. 38. The disparity vector retrieving unit 231 retrieves from the stream of video obtained through the video decoder 221 the disparity vector embedded in the user data area thereof. Then, the disparity vector retrieving unit 231 supplies the retrieved disparity vector to the stereo-image subtitle/graphics producing unit 226, the stereo-image text producing unit 227, and the multi-channel speaker control unit 229.

The other elements of the bit stream processing unit 201A illustrated in Fig. 40 are configured in a manner similar to that of the bit stream processing unit 201 illustrated in Fig. 38, and operate in a similar manner although the detailed description is omitted.

### "Another Example Configuration of Bit Stream Processing Unit"

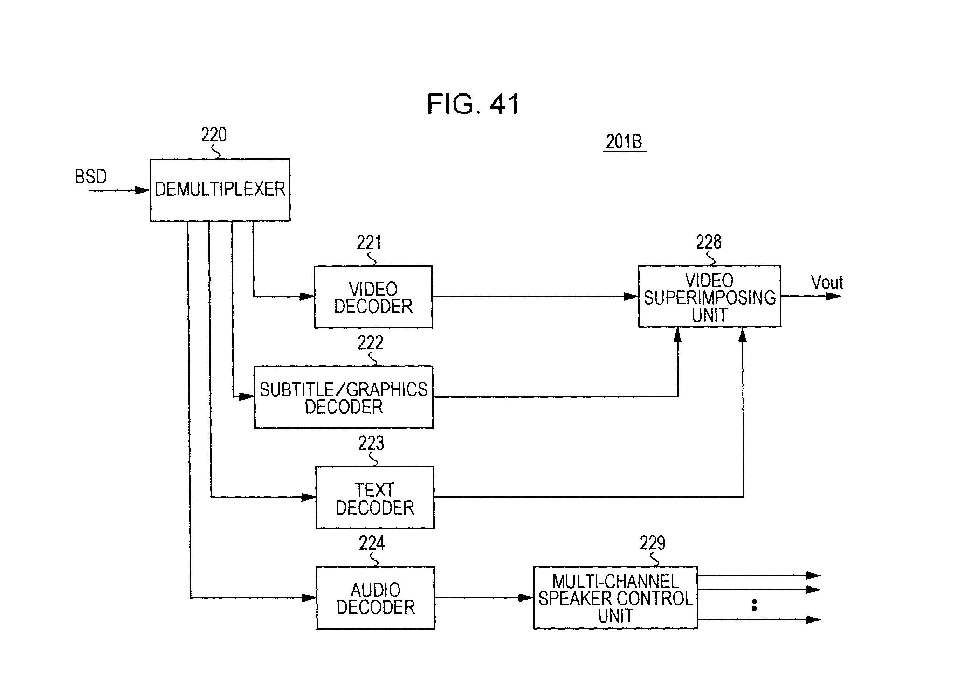

Also, a bit stream processing unit 201B illustrated in Fig. 41 has a configuration that is made to correspond to that of the transmission data generation unit 110B described above illustrated in Fig. 18. In Fig. 41, portions corresponding to those in Fig. 38 are assigned the same numerals, and the detailed description thereof is omitted.

The bit stream processing unit 201B is configured such that the disparity vector decoder 225, the stereo-image subtitle/graphics producing unit 226, and the stereo-image text producing unit 227 are removed from the bit stream processing unit 201 illustrated in Fig. 38. In this case, the disparity vector is reflected in advance in the data of the subtitle information, graphics information, and text information.

As described above, the subtitle data or graphics data that is transmitted contains data of left-eye subtitle information or graphics information to be superimposed on the left-eye image, and data of right-eye subtitle information or graphics information to be superimposed on the right-eye image. Similarly, as described above, the text data that is transmitted contains data of left-eye text information to be superimposed on the left-eye image and data of right-eye text information to be superimposed on the right-eye image. Therefore, the disparity vector decoder 225, the stereo-image subtitle/graphics producing unit 226, and the stereo-image text producing unit 227 are not necessary.

Note that since the text data obtained by the text decoder 223 is code data (character code), a process for converting it into bitmap data is necessary. This process is performed in, for example, the last stage of the text decoder 223 or the input stage of the video superimposing unit 228.

### "Another Example Configuration of Bit Stream Processing Unit"

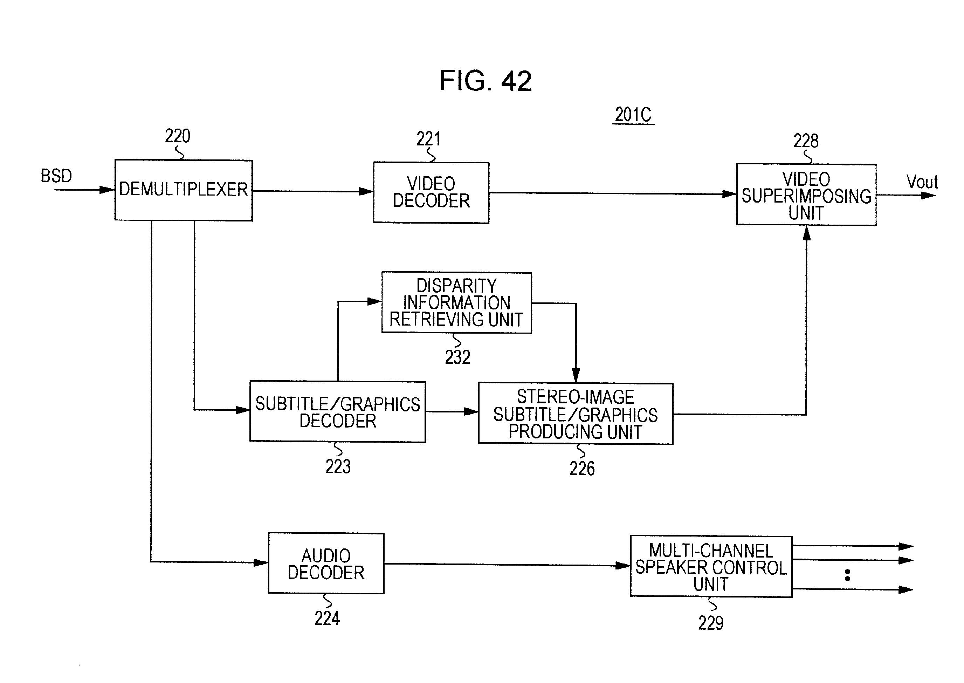

Also, a bit stream processing unit 201C illustrated in Fig. 42 has a configuration that is made to correspond to that of the transmission data generation unit 110C described above illustrated in Fig. 19. In Fig. 42, portions corresponding to those in Fig. 38 are assigned the same numerals, and the detailed description thereof is omitted.

The bit stream processing unit 201C includes a disparity information retrieving unit 232. As described above, the subtitle or graphics data stream output from the subtitle/graphic encoder 119 of the transmission data generation unit 110C illustrated in Fig. 19 has embedded therein disparity information (disparity vectors) associated with the subtitle data or graphics data.

In the subtitle/graphics decoder 223, as described above, a data stream (elementary stream) of subtitle or graphics is reconfigured from the packets of subtitle or graphics extracted by the demultiplexer 220. Then, in the subtitle/graphics decoder 223, a decoding process is performed on the data stream, and subtitle data or graphics data is obtained. The subtitle data or graphics data is supplied to the stereo-image subtitle/graphics producing unit 226.

In the disparity information retrieving unit 232, the disparity information (disparity vectors) associated with the subtitle data or graphics data, which is embedded in the data stream reconfigured by the subtitle/graphics decoder 223, is retrieved. The disparity information is supplied to the stereo-image subtitle/graphics producing unit 226. In this case, the disparity information retrieving unit 232 reads disparity information from the "Region_Disparity_offset" defined in the "page_composition_segment" and also from the "region_disparity_offset_far1" to "region_disparity_offset_far3" defined in the "region_composition_segment" (see Figs. 25 to 28).

Also, in the stereo-image subtitle/graphics producing unit 226, as described above, left-eye and left-eye subtitle information or graphics information to be superimposed on the left-eye image and the right-eye image, respectively, are generated. This generation process is performed on the basis of the subtitle data or graphics data obtained by the subtitle/graphics decoder 223 and the disparity information (disparity vectors) supplied from the disparity information retrieving unit 232.

In this case, the left-eye and left-eye subtitle information items or graphics information items are the same information. However, the superimposed position of, for example, the right-eye btitle information or graphics information in the image is configured to be shifted in the horizontal direction by the horizontal direction component of the disparity vector with respect to the left-eye subtitle information or graphics information.

In this manner, the data (bitmap data) of the left-eye and right-eye subtitle information items or graphics information items generated by the stereo-image subtitle/graphics producing unit 226 is supplied to the video superimposing unit 228. Note that, as described above, in the subtitle/graphic encoder 119 of the transmission data generation unit 110C illustrated in Fig. 19, in some cases, text information may be embedded in graphics data. In such cases, the data of the left-eye and right-eye graphics information items generated by the stereo-image subtitle/graphics producing unit 226 is configured such that text information is displayed together with text information.

In the video superimposing unit 228, the data of the subtitle information or graphics information produced by the stereo-image subtitle/graphics producing unit 226 is superimposed on the stereo image data (left-eye image data, right-eye image data) obtained by the video decoder 221. With this superimposition process, the video superimposing unit 228 can obtain display stereo image data Vout. Note that the superimposition of the data of the subtitle information or graphics information on the stereo image data (left-eye image data, right-eye image data) is started using a time stamp in the system layer. Also, the superimposition duration is controlled on the basis of display time information.

The other elements of the bit stream processing unit 201C illustrated in Fig. 42 are configured in a manner similar to that of the bit stream processing unit 201 illustrated in Fig. 38, and operate in a similar manner although the detailed description is omitted.

### [Description of Television Receiver]

Referring back to Fig. 1, the television receiver 300 receives stereo image data that is sent from the set-top box 200 via the HDMI cable 400. The television receiver 300 includes a 3D signal processing unit 301. The 3D signal processing unit 301 performs a process (decoding process) corresponding to the transmission method on the stereo image data, and generates left-eye image data and right-eye image data. That is, the 3D signal processing unit 301 performs a process reverse to that of the video framing unit 112 in the transmission data generation units 110, 110A, 110B, and 110C illustrated in Figs. 2, 13, 18, and 19, and acquires left-eye image data and right-eye image data that form the stereo image data.

### [Example Configuration of Television Receiver]

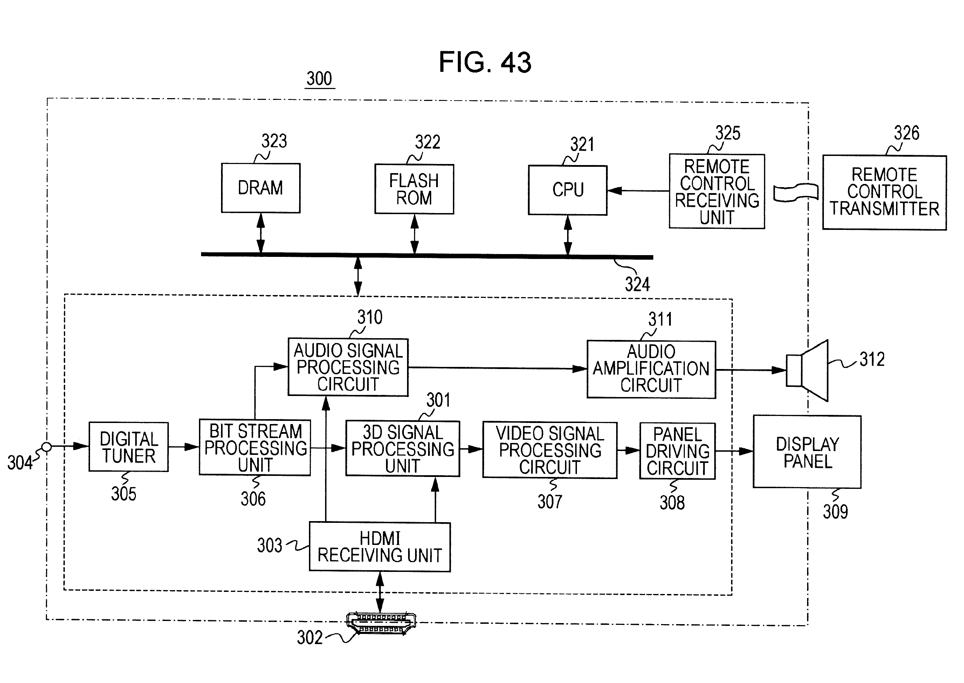

An example configuration of the television receiver 300 will be described. Fig. 43 illustrates an example configuration of the television receiver 300. The television receiver 300 includes a 3D signal processing unit 301, an HDMI terminal 302, an HDMI receiving unit 303, an antenna terminal 304, a digital tuner 305, and a bit stream processing unit 306. Also, the television receiver 300 includes a video signal processing circuit 307, a panel driving circuit 308, a display panel 309, an audio signal processing circuit 310, an audio amplification circuit 311, and a speaker 312. Also, the television receiver 300 includes a CPU 321, a flash ROM 322, a DRAM 323, an internal bus 324, a remote control receiving unit 325, and a remote control transmitter 326.

The antenna terminal 304 is a terminal to which a television broadcast signal received by a receiving antenna (not illustrated) is input. The digital tuner 305 processes the television broadcast signal input to the antenna terminal 304, and outputs predetermined bit stream data (transport stream) corresponding to a channel selected by a user.

The bit stream processing unit 306 is configured to have a configuration similar to that of the bit stream processing units 201 to 201C of the set-top box 200 illustrated in Fig. 37. The bit stream processing unit 306 extracts stereo image data (left-eye image data, right-eye image data), audio data, superimposition information data, disparity vectors (disparity information), and the like from the bit stream data. The superimposition information data includes subtitle data, graphics data, text data, and the like. Then, the bit stream processing unit 306 combines the superimposition information data with the stereo image data, and acquires display stereo image data. Also, the bit stream processing unit 306 outputs audio data.

The HDMI receiving unit 303 receives uncompressed image data (stereo image data) and audio data supplied to the HDMI terminal 302 via the HDMI cable 400 using HDMI-compliant communication. The details of the HDMI receiving unit 303 will be described below. The 3D signal processing unit 301 performs a process (decoding process) corresponding to the transmission method on the stereo image data received by the HDMI receiving unit 303 or obtained by the bit stream processing unit 306, and generates left-eye image data and right-eye image data.

The video signal processing circuit 307 generates image data for displaying a stereo image on the basis of the left-eye image data and right-eye image data generated by the 3D signal processing unit 301. Also, the video signal processing circuit performs an image quality adjustment process on the image data in accordance with necessity. The panel driving circuit 308 drives the display panel 309 on the basis of the image data output from the video signal processing circuit 307. The display panel 309 is composed of, for example, an LCD (Liquid Crystal Display), a PDP (Plasma Display Panel), or the like.

The audio signal processing circuit 310 performs a necessary process such as D/A conversion on the audio data received by the HDMI receiving unit 303 or obtained by the bit stream processing unit 306. The audio amplification circuit 311 amplifies the audio signal output from the audio signal processing circuit 310 and supplies a resulting signal to the speakers 312.

The CPU 321 controls the operation of each unit of the television receiver 300. The flash ROM 322 stores control software and holds data. The DRAM 323 forms a work area for the CPU 321. The CPU 321 expands the software and data read from the flash ROM 322 onto the DRAM 323 to start the software, and controls each unit of the television receiver 300.

The remote control receiving unit 325 receives a remote control signal (remote control code) transmitted from the remote control transmitter 326, and supplies the remote control signal to the CPU 321. The CPU 321 controls each unit of the television receiver 300 on the basis of the remote control code. The CPU 321, the flash ROM 322, and the DRAM 323 are connected to the internal bus 324.

The operation of the television receiver 300 illustrated in Fig. 43 will be described briefly. In the HDMI receiving unit 303, stereo image data and audio data, which are transmitted from the set-top box 200 connected to the HDMI terminal 302 via the HDMI cable 400, are received. The stereo image data received by the HDMI receiving unit 303 is supplied to the 3D signal processing unit 301. Also, the audio data received by the HDMI receiving unit 303 is supplied to the audio signal processing circuit 310.

The television broadcast signal input to the antenna terminal 304 is supplied to the digital tuner 305. In the digital tuner 305, the television broadcast signal is processed, and predetermined bit stream data (transport stream) corresponding to a channel selected by the user is output.

The bit stream data output from the digital tuner 305 is supplied to the bit stream processing unit 306. In the bit stream processing unit 306, stereo image data (left-eye image data, right-eye image data), audio data, superimposition information data, disparity vectors (disparity information), and the like are extracted from the bit stream data. Also, in the bit stream processing unit 306, data of superimposition information (subtitle information, graphics information, text information) is combined with the stereo image data, and display stereo image data is generated.

The display stereo image data generated by the bit stream processing unit 306 is supplied to the 3D signal processing unit 301. Also, the audio data obtained by the bit stream processing unit 306 is supplied to the audio signal processing circuit 310.

In the 3D signal processing unit 301, a process (decoding process) corresponding to the transmission method is performed on the stereo image data received by the HDMI receiving unit 303 or obtained by the bit stream processing unit 306, and left-eye image data and right-eye image data are generated. The left-eye image data and the right-eye image data are supplied to the video signal processing unit circuit 307. In the video signal processing circuit 307, image data for displaying a stereo image is generated on the basis of the left-eye image data and the right-eye image data. Thus, a stereo image is displayed by using the display panel 309.

Also, in the audio signal processing circuit 310, a necessary process such as D/A conversion is performed on the audio data received by the HDMI receiving unit 303 or obtained by the bit stream processing unit 306. The audio data is amplified by the audio amplification circuit 311, and is thereafter supplied to the speaker 312. Thus, audio is output from the speaker 312.

### [Example Configuration of HDMI Transmitting Unit and HDMI Receiving Unit]

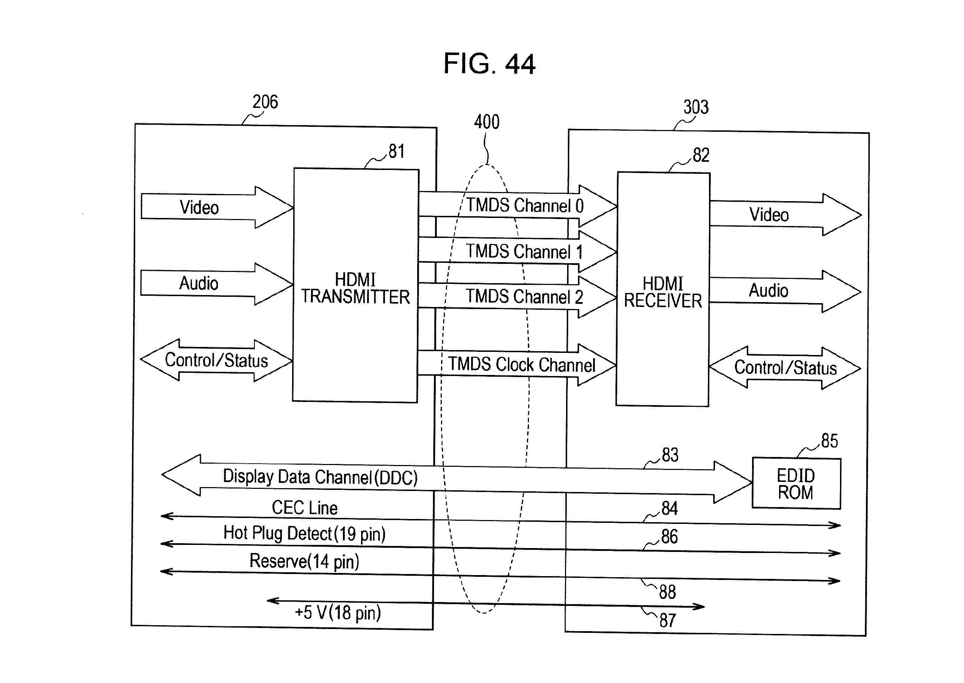

Fig. 44 illustrates an example configuration of the HDMI transmitting unit (HDMI source) 206 of the set-top box 200 and the HDMI receiving unit (HDMI sink) 303 of the television receiver 300 in the stereo image display system 10 in Fig. 1.

In an effective image interval (hereinafter, also referred to as an active video interval, as appropriate), the HDMI transmitting unit 206 transmits a differential signal corresponding to pixel data of an uncompressed image for one screen to the HDMI receiving unit 303 one-way through a plurality of channels. Here, the effective image interval is the interval from one vertical synchronization signal to the next vertical synchronization signal from which a horizontal blanking interval and a vertical blanking interval are removed. Also, in the horizontal blanking interval or the vertical blanking interval, the HDMI transmitting unit 206 transmits a differential signal corresponding to at least audio data to be attached to an image, control data, other auxiliary data, and the like to the HDMI receiving unit 303 one-way through a plurality of channels.

Transmission channels of an HDMI system formed of the HDMI transmitting unit 206 and the HDMI receiving unit 303 include the following transmission channels. That is, there are three TMDS channels #0 to #2 serving as transmission channels for one-way serial transmission of pixel data and audio data from the HDMI transmitting unit 206 to the HDMI receiving unit 303 in synchronization with pixel clocks. Also, there is a TMDS clock channel serving as a transmission channel that transmits a pixel clock.

The HDMI transmitting unit 206 includes an HDMI transmitter 81. The transmitter 81 converts, for example, pixel data of an uncompressed image into a corresponding differential signal, and serially transmits the differential signal one-way to the HDMI receiving unit 303, which is connected via the HDMI cable 400, through the three TMDS channels #0, #1, and #2 that are a plurality of channels.

Also, the transmitter 81 converts audio data to be attached to the uncompressed image and also necessary data, other auxiliary data, and the like to corresponding differential signals, and serially transmits the differential signals one-way to the HDMI receiving unit 303 through the three TMDS channels #0, #1, and #2.

Furthermore, the transmitter 81 transmits a pixel clock synchronized with the pixel data to be transmitted through the three TMDS channels #0, #1, and #2 to the HDMI receiving unit 303, which is connected via the HDMI cable 400, through the TMDS clock channel. Here, 10-bit pixel data is transmitted through one TMDS channel #i (i = 0, 1, 2) during one clock of the pixel clocks.

The HDMI receiving unit 303 receives a differential signal corresponding to pixel data that is transmitted one-way from the HDMI transmitting unit 206 through a plurality of channels in the active video interval. Also, the HDMI receiving unit 303 receives a differential signal corresponding to audio data or control data that is transmitted one-way from the HDMI transmitting unit 206 through a plurality of channels in the horizontal blanking interval or the vertical blanking interval.

That is, the HDMI receiving unit 303 includes an HDMI receiver 82. The HDMI receiver 82 receives a differential signal corresponding to pixel data and a differential signal corresponding to audio data or control data, which are transmitted one-way from the HDMI transmitting unit 206 through the TMDS channels #0, #1, and #2. In this case, the differential signals are received in synchronization with the pixel clocks transmitted from the HDMI transmitting unit 206 through the TMDS clock channel.

Transmission channels of an HDMI system formed of the HDMI transmitting unit 206 and the HDMI receiving unit 303 include, in addition to the TMDS channels #0 to #2 and TMDS clock channel described above, transmission channels called a DDC (Display Data Channel) 83 and a CEC line 84. The DDC 83 is formed of two signal lines that are not illustrated in the figure, which are included in the HDMI cable 400, and is used for the HDMI transmitting unit 206 to read E-EDID (Enhanced Extended Display Identification Data) from the HDMI receiving unit 303 connected via the HDMI cable 400.

That is, the HDMI receiving unit 303 includes, in addition to the HDMI receiver 81, an EDID ROM (Read Only Memory) 85 having stored therein E-EDID that is performance information regarding the performance thereof (Configuration/capability). The HDMI transmitting unit 206 reads the E-EDID of the HDMI receiving unit 303 connected via the HDMI cable 400 from the HDMI receiving unit 303 via the DDC 83 in accordance with, for example, a request from the CPU 211 (see Fig. 37). The HDMI transmitting unit 206 sends the read E-EDID to the CPU 211. The CPU 211 stores the E-EDID in the flash ROM 212 or the DRAM 213.

The CPU 211 can recognize the setting of the performance of the HDMI receiving unit 303 on the basis of the E-EDID. For example, the CPU 211 recognizes the image data format (such as resolution, frame rate, and aspect) that can be supported by the television receiver 300 including the HDMI receiving unit 303.

The CEC line 84 is formed of one signal line that is not illustrated in the figure, which is included in the HDMI cable 400, and is used for two-way communication of control-use data between the HDMI transmitting unit 206 and the HDMI receiving unit 303. The CEC line 84 forms a control data line.

Also, the HDMI cable 400 contains a line (HPD line) 86 to be connected to a pin called HPD (Hot Plug Detect). A source device can detect the connection of a sink device by utilizing the line 86. Also, the HDMI cable 400 contains a line 87 that is used for supplying power from the source device to the sink device. Furthermore, the HDMI cable 400 contains a reserved line 88.

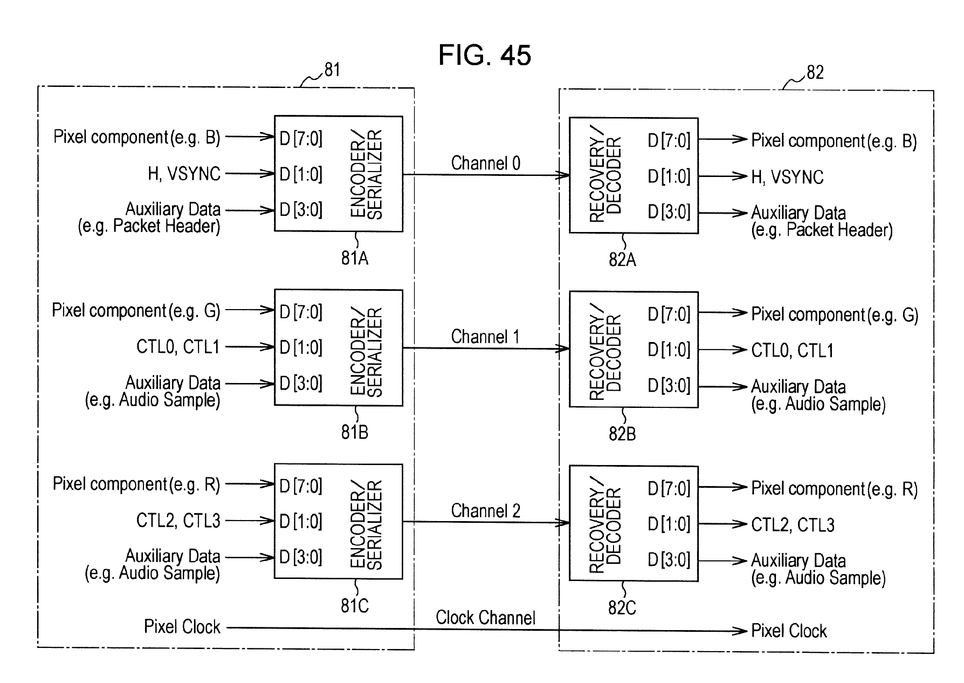

Fig. 45 illustrates an example configuration of the HDMI transmitter 81 and the HDMI receiver 82 in Fig. 44. The HDMI transmitter 81 includes three encoders/serializers 81A, 81B, and 81C corresponding to the three TMDS channels #0, #1, and #2, respectively. Then, each of the encoders/serializers 81A, 81B, and 81C encodes image data, auxiliary data, and control data supplied thereto, converts them from parallel data to serial data, and transmits resulting data using a differential signal. Here, in a case where the image data includes, for example, three R, G, and B components, the B component is supplied to the encoder/serializer 81A, the G component is supplied to the encoder/serializer 81B, and the R component is supplied to the encoder/serializer 81C.

Also, examples of the auxiliary data include audio data and a control packet. For example, the control packet is supplied to the encoder/serializer 81A, and the audio data is supplied to the encoders/serializers 81B and 81C. Furthermore, the control data includes a 1-bit vertical synchronization signal (VSYNC), a 1-bit horizontal synchronization signal (HSYNC), and 1-bit control bits CTL0, CTL1, CTL2, and CTL3. The vertical synchronization signal and the horizontal synchronization signal are supplied to the encoder/serializer 81A. The control bits CTL0 and CTL1 are supplied to the encoder/serializer 81B, and the control bits CTL2 and CTL3 are supplied to the encoder/serializer 81C.

The encoder/serializer 81A transmits the B component of the image data, the vertical synchronization signal, the horizontal synchronization signal, and the auxiliary data, which are supplied thereto, in a time division manner. That is, the encoder/serializer 81A sets the B component of the image data supplied thereto as parallel data in a units of 8 bits, which is a fixed number of bits. Furthermore, the encoder/serializer 81A encodes the parallel data, converts it into serial data, and transmits the serial data through the TMDS channel #0.

Also, the encoder/serializer 81A encodes the vertical synchronization signal and horizontal synchronization signal, i.e., 2-bit parallel data, which are supplied thereto, converts the data into serial data, and transmits the serial data through the TMDS channel #0. Furthermore, the encoder/serializer 81A sets the auxiliary data supplied thereto as parallel data in a units of 4 bits. Then, the encoder/serializer 81A encodes the parallel data, converts it into serial data, and transmits the serial data through the TMDS channel #0.

The encoder/serializer 81B transmits the G component of the image data, the control bits CTL0 and CTL1, and the auxiliary data, which are supplied thereto, in a time division manner. That is, the encoder/serializer 81B sets the G component of the image data supplied thereto as parallel data in a units of 8 bits, which is a fixed number of bits. Furthermore, the encoder/serializer 81B encodes the parallel data, converts it into serial data, and transmits the serial data through the TMDS channel #1.

Also, the encoder/serializer 81B encodes the control bits CTL0 and CTL1, i.e., 2-bit parallel data, which are supplied thereto, converts the data into serial data, and transmits the serial data through the TMDS channel #1. Furthermore, the encoder/serializer 81B sets the auxiliary data supplied thereto as parallel data in a units of 4 bits. Then, the encoder/serializer 81B encodes the parallel data, converts it into serial data, and transmits the serial data through the TMDS channel #1.

The encoder/serializer 81C transmits the R component of the image data, the control bits CTL2 and CTL3, and the auxiliary data, which are supplied thereto, in a time division manner. That is, the encoder/serializer 81C sets the R component of the image data supplied thereto as parallel data in a units of 8 bits, which is a fixed number of bits. Furthermore, the encoder/serializer 81C encodes the parallel data, converts it into serial data, and transmits the serial data through the TMDS channel #2.

Also, the encoder/serializer 81C encodes the control bits CTL2 and CTL3, i.e., 2-bit parallel data, which are supplied thereto, converts the data into serial data, and transmits the serial data through the TMDS channel #2. Furthermore, the encoder/serializer 81C sets the auxiliary data supplied thereto as parallel data in a units of 4 bits. Then, the encoder/serializer 81C encodes the parallel data into serial data, and transmits the serial data through the TMDS channel #2.

The HDMI receiver 82 includes three recovery/decoders 82A, 82B, and 82C corresponding to the three TMDS channels #0, #1, and #2, respectively. Then, each of the recovery/decoders 82A, 82B, and 82C receives the image data, the auxiliary data, and the control data which are transmitted using a differential signal through the corresponding one of the TMDS channels #0, #1, and #2. Furthermore, each of the recovery/decoders 82A, 82B, and 82C converts the image data, the auxiliary data, and the control data from serial data to parallel data, and further decodes and outputs them.

That is, the recovery/decoder 82A receives the B component of the image data, the vertical synchronization signal, the horizontal synchronization signal, and the auxiliary data, which are transmitted using a differential signal through the TMDS channel #0. Then, the recovery/decoder 82A converts the B component of the image data, the vertical synchronization signal, the horizontal synchronization signal, and the auxiliary data from serial data to parallel data, and decodes and outputs them.

The recovery/decoder 82B receives the G component of the image data, the control bits CTL0 and CTL1, and the auxiliary data, which are transmitted using a differential signal through the TMDS channel #1. Then, the recovery/decoder 82B converts the G component of the image data, the control bits CTL0 and CTL1, and the auxiliary data from serial data to parallel data, and decodes and outputs them.

The recovery/decoder 82C receives the R component of the image data, the control bits CTL2 and CTL3, and the auxiliary data, which are transmitted using a differential signal through the TMDS channel #2. Then, the recovery/decoder 82C converts the R component of the image data, the control bits CTL2 and CTL3, and the auxiliary data from serial data to parallel data, and decodes and outputs them.

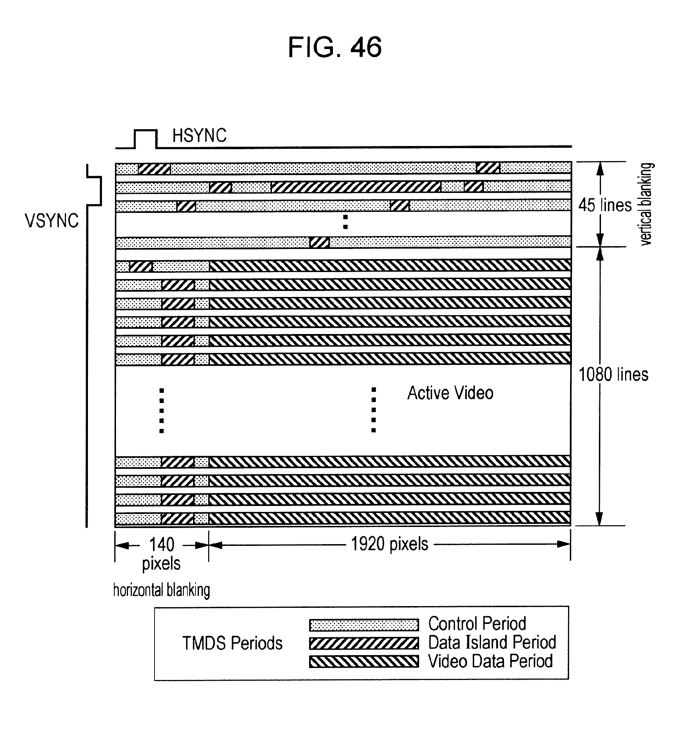

Fig. 46 illustrates an example structure of TMDS transmission data. Fig. 46 illustrates various transmission data intervals in a case where image data having 1920 pixels in the horizontal direction and 1080 lines in the vertical direction is transmitted through TMDS channels #0, #1, and #2.

A video field (Video Field) in which transmission data is transmitted through three TMDS channels #0, #1, and #2 of HDMI includes three types of intervals in accordance with the type of transmission data. The three types of intervals are a video data interval (Video Data period), a data island interval (Data Island period), and a control interval (Control period).

Here, a video field interval is an interval from the rising edge (active edge) of a certain vertical synchronization signal to the rising edge of the next vertical synchronization signal. This video field interval can be separated into a horizontal blanking period (horizontal blanking), a vertical blanking period (vertical blanking), and an active video interval (Active Video). The active video interval is an interval obtained by removing the horizontal blanking period and the vertical blanking period from the video field interval.

The video data interval is assigned in the active video interval. In the video data interval, data of effective pixels (Active pixels) having 1920 pixels × 1080 lines, which form uncompressed image data for one screen, is transmitted.

The data island interval and the control interval are assigned in the horizontal blanking period and the vertical blanking period. In the data island interval and the control interval, auxiliary data (Auxiliary data) is transmitted. That is, the data island interval is assigned in a portion of the horizontal blanking period and the vertical blanking period. In the data island interval, data that is not related to control within the auxiliary data, such as, for example, packets of audio data, is transmitted.

The control interval is assigned in the other portion of the horizontal blanking period and the vertical blanking period. In the control interval, data that is related to control within the auxiliary data, such as, for example, the vertical synchronization signal, the horizontal synchronization signal, and the control packet, is transmitted.

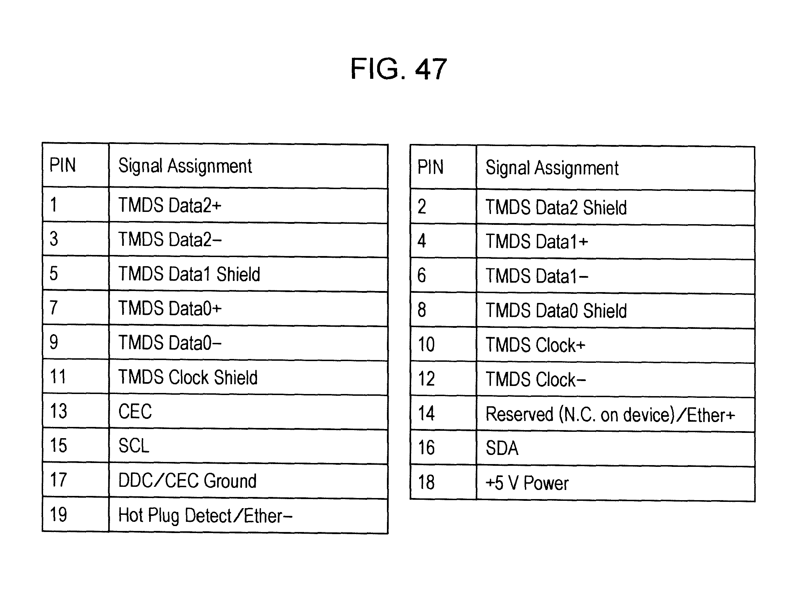

Fig. 47 illustrates an example pin array of the HDMI terminals 211 and 251. The pin array illustrated in Fig. 47 is called type A (type-A).

Two lines that are differential lines via which TMDS Data #i+ and TMDS Data #i-that are differential signals on the TMDS channel #i are transmitted are connected to pins (pins with pin numbers 1, 4, and 7) to which the TMDS Data #i+ is assigned, and pins (pins with pin numbers 3, 6, and 9) to which the TMDS Data #i- is assigned.

Also, the CEC line 84 via which a CEC signal that is control-use data is transmitted is connected to a pin with pin number 13, and a pin with pin number 14 is an empty (Reserved) pin. Also, a line via which an SDA (Serial Data) signal such as E-EDID is transmitted is connected to a pin with pin number 16, and a line via which an SCL (Serial Clock) signal that is a clock signal used for synchronization during transmission and reception of the SDA signal is transmitted is connected to a pin with pin number 15. The DDC 83 described above is composed of a line via which the SDA signal is transmitted and a line via which the SCL signal is transmitted.

Also, as described above, the HPD line 86 used by the source device to detect the connection of the sink device is connected to a pin with pin number 19. Also, as described above, the line 87 via which power is supplied is connected to a pin with pin number 18.

### [Example of TMDS Transmission Data in Each Method of Stereo Image Data]

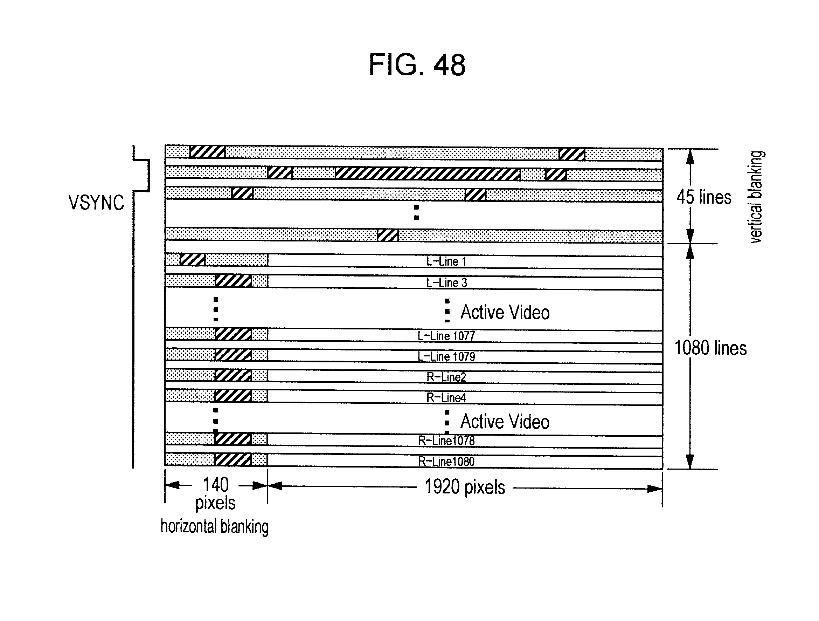

Here, an example of TMDS transmission data in each method of stereo image data will be described. Fig. 48 illustrates an example of TMDS transmission data in the first transmission method ("Top & Bottom" method). In this case, data (composite data of left-eye (L) image data and right-eye (R) image data) of effective pixels (Active pixels) having 1920 pixels × 1080 lines is arranged in the active video interval of 1920 pixels × 1080 lines. In the case of the first method, as described above, the lines in the vertical direction of each of the left-eye image data and the right-eye image data are decimated to 1/2. Here, the left-eye image data to be transmitted is that of the odd lines or even lines, and, similarly, the right-eye image data to be transmitted is that of the odd lines or even lines.

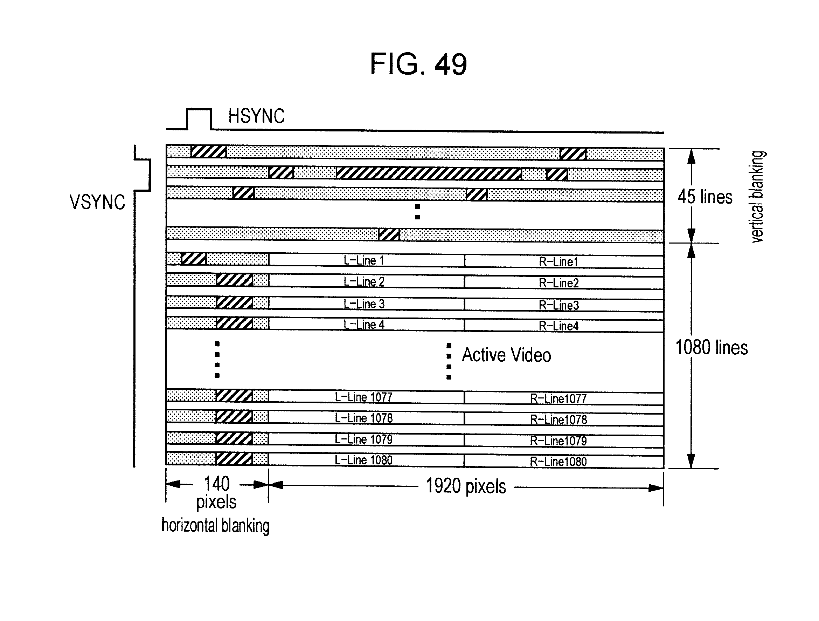

Fig. 49 illustrates an example of TMDS transmission data in the second transmission method ("Side By Side" method). In this case, data (composite data of left-eye (L) image data and right-eye (R) image data) of effective pixels (Active pixels) having 1920 pixels × 1080 lines is arranged in the active video interval of 1920 pixels × 1080 lines. In the case of the second transmission method, as described above, the pixel data in the horizontal direction of each of the left-eye image data and the right-eye image data is decimated to 1/2.

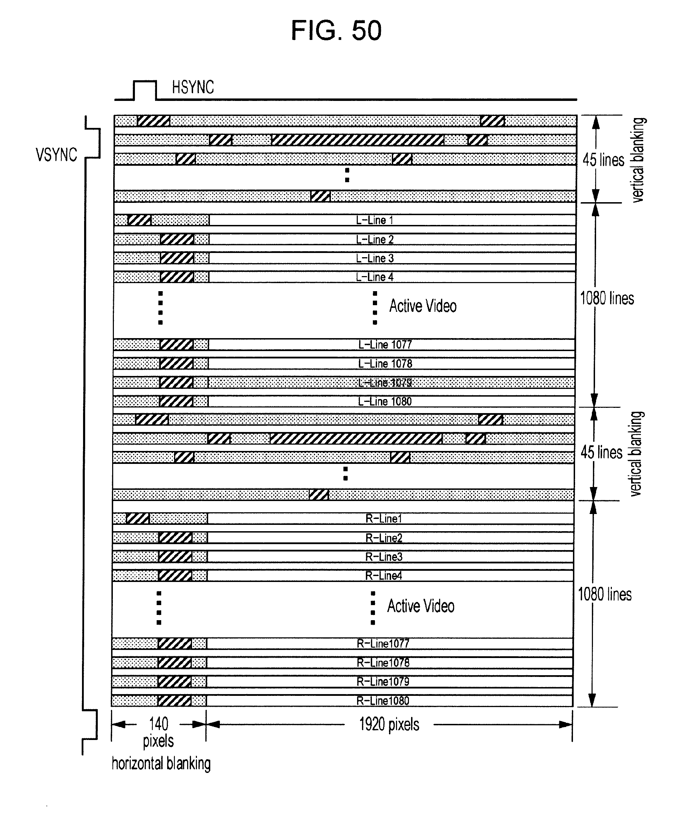

Fig. 50 illustrates an example of TMDS transmission data in the third transmission method ("Frame Sequential" method). In this case, left-eye (L) image data of effective pixels (Active pixels) having 1920 pixels × 1080 lines is arranged in the active video interval of 1920 pixels × 1080 lines of the odd field. Also, right-eye (R) image data of effective pixels (Active pixels) having 1920 pixels × 1080 lines is arranged in the active video interval of 1920 pixels × 1080 lines of the even field.

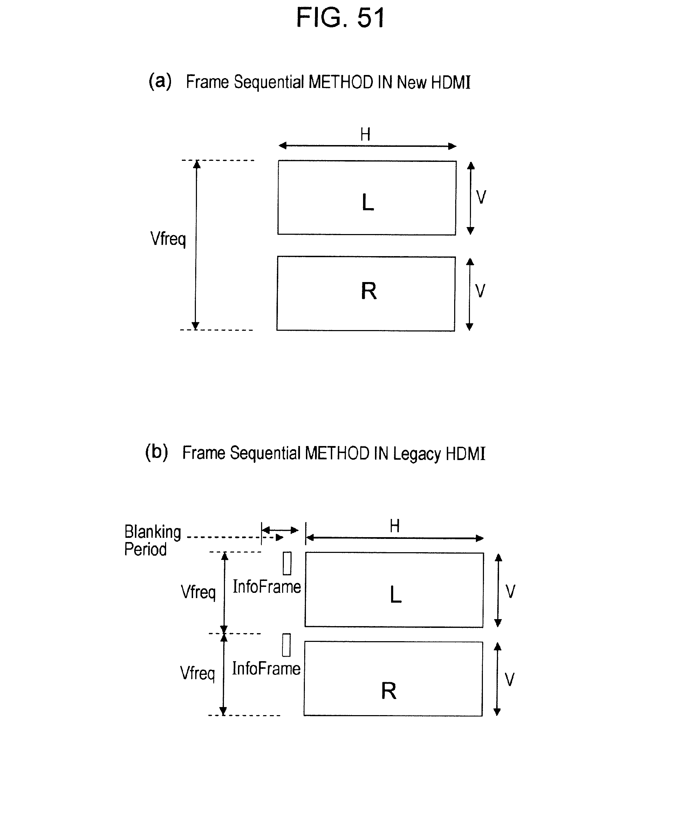

Note that the example of TMDS transmission data in the "Frame Sequential" method illustrated in Fig. 50 indicates the "Frame Sequential" method in the HDMI 1.4 (New HDMI). In this case, as illustrated in Fig. 51(a), in each frame period Vfreq, the left-eye image data is arranged in the odd field, and the right-eye image data is arranged in the even field.

However, in the case of the "Frame Sequential" method in the HDMI 1.3 (Legacy HDMI), as illustrated in Fig. 51(b), the left-eye image data and the right-eye image data are alternately transmitted every frame period Vfreq. In this case, it is necessary to send information (L/R signaling information) indicating which of the left-eye image data and the right-eye image data the image data to be transmitted every frame is from the source device to the sink device.

In a case where stereo image data of the "Top & Bottom" method, the "Side By Side" method, and the "Frame Sequential" method is transmitted to the sink device, a method is specified on the source device side, and furthermore in the case of the "Frame Sequential" method, L/R signaling is performed every frame.

For example, the following syntax is transmitted by newly defining Vendor Specific defined in the Legacy HDMI-specific blanking, AVI InfoFrame, or one of Reserved.

In the case of HDMI 1.3, the following information is defined as information that is transmitted in the blanking periods.

### InfoFrame Type # (8bits)

--------------------------
0x01: Vendor Specific
0x02: AVI InfoFrame
0x03: Source Product Description
0x04: Audio InfoFrame
0x05: MPEG Source
0x06 - 0xFF Reserved

Among them, Vendor Specific, AVI InfoFrame, or one of unused areas is newly defined and is set as follows.

```
 3DVideoFlag 1bit (0: 2D, 1: 3D)
 if (3DVideoFlag) {
       3DVideoFormat 3bits (0×0: Frame Packing Left View
                     0x1: Frame Packing Right View
                     0x2: Side by Side
                     0x4: Top & Bottom by Frame
                     0x6: Top & Bottom by Field
                     0x3,5,7: Reserved)
       Reserved 4bits (0x0)
 }
 else {
       Reserved 7bits (0x0)
 }
```

The information described above contains information (1-bit 3DVideoFlag information) about switching between three-dimensional image data and two-dimensional image data, and information (3-bit 3DVideoFormat information) about the specification of the format of the three-dimensional image data or switching between left-eye image data and right-eye image data.

Note that the above information is to be defined in the picture header or in auxiliary information that is sent at the timing corresponding to that of the picture header in a bit stream for which similar content is broadcast. In this case, this bit stream alternatively contains either three-dimensional image data (stereo image data formed of left-eye image data and right-eye image data) or two-dimensional image data. When receiving the stream, the receiver (set-top box 200) sends the signaling information to a digital interface in the subsequent stage so that accurate 3D conversion can be performed in the display (television receiver 300).

Also, when the switching information (1-bit 3DVideoFlag information) indicates three-dimensional image data, that is, when the data stream includes three-dimensional image data, the receiver may be configured to download software for processing the three-dimensional image data from an external device such as a broadcast server and may install it therein.

For example, in order to transmit the 3D information described above, additional supporting on an HDMI-1.3 compatible system or update of software of an HDMI-1.4 compatible system is necessary. Thus, on the occasion of update of software, for example, software relating to firmware or middleware necessary for transmitting the 3D information described above is to be updated.

Note that, in many cases, the control attribute of a display object having a stationary pattern, such as subtitle (Subtitle) or caption (Caption) that is not described above, does not change from the time of start of display to the time of end of display. However, even in such cases, on the receiver side, for example, in the bit stream processing unit of the set-top box 200 described above, an offset of the display position of a pattern representation can be dynamically controlled using disparity information received at finer intervals, for example, in units of pictures. In this case, it is possible to allow an object to be perceived to be at a position that is always the closest in the depth of video image (image) that changes every picture. Also, it is also possible to allow data in which superimpose such as subtitle or caption to be displayed with an offset corresponding to the maximum disparity during the target period by pre-reading received disparity information for a predetermined period.

As described above, in the stereo image display system 10 illustrated in Fig. 1, disparity is given to the same superimposition information (such as subtitle information, graphics information, or text information) to be superimposed on a left-eye image and a right-eye image on the basis of disparity information about one of the left-eye image and the right-eye image with respect to the other. Thus, superimposition information that has been subjected to disparity adjustment in accordance with the perspective of each object in an image can be used as the same superimposition information to be superimposed on the left-eye image and the right-eye image, and it is possible to maintain the consistency in perspective, in the display of the superimposition information, between the superimposition information and each object in the image.

### <2. Example Modifications>

Note that in the foregoing embodiment, a disparity vector at a predetermined position in an image is transmitted from the broadcast station 100 side to the set-top box 200. In this case, the set-top box 200 does not require the obtaining of the disparity vector based on left-eye image data and right-eye image data included in received stereo image data, and the process of the set-top box 200 is made easy.

However, it is also conceivable that a disparity vector detection unit equivalent to the disparity vector detection unit 114 in the transmission data generation unit 110 in Fig. 2 is arranged on the receiving side of stereo image data, in the embodiment described above, in the set-top box 200. In this case, even if no disparity vector is sent, it is possible to perform a process using a disparity vector.

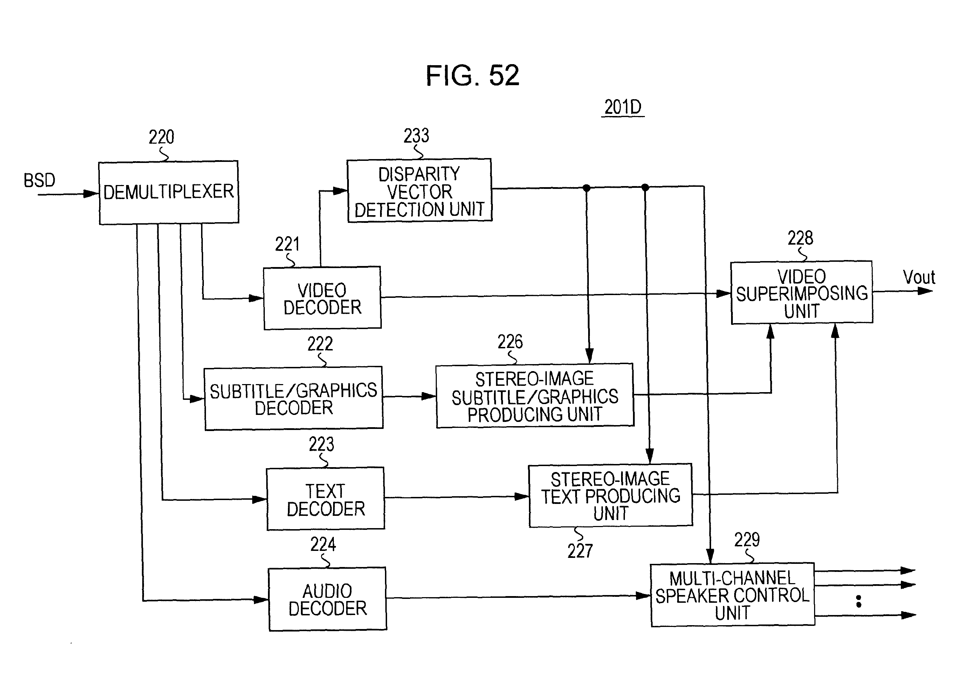

Fig. 52 illustrates an example configuration of a bit stream processing unit 201D provided in, for example, the set-top box 200. In Fig. 52, portions corresponding to those in Fig. 38 are assigned the same numerals, and the detailed description thereof is omitted. In the bit stream processing unit 201D, a disparity vector detection unit 233 is arranged in place of the disparity vector decoder 225 in the bit stream processing unit 201 illustrated in Fig. 38.

The disparity vector detection unit 233 detects a disparity vector at a predetermined position in an image on the basis of left-eye image data and right-eye image data that form stereo image data obtained by the video decoder 221. Then, the disparity vector detection unit 233 supplies the detected disparity vector to the stereo-image subtitle/graphics producing unit 206, the stereo-image text producing unit 227, and the multi-channel speaker control unit 229.

The other elements of the bit stream processing unit 201D illustrated in Fig. 52 are configured in a manner similar to that of the transmission data generation unit 110 illustrated in Fig. 38, and operate in a similar manner although the detailed description is omitted.

Also, in the foregoing embodiment, data of superimposition information (subtitle information, graphics information, text information) is transmitted from the broadcast station 100 side to the set-top box 200. It is also conceivable that the data of the superimposition information is produced in the set-top box 200.

For example, in the bit stream processing unit 201 in Fig. 38, the subtitle data or graphics data obtained by the subtitle/graphics decoder 222 is supplied to the stereo-image subtitle/graphics producing unit 226. Instead of or together with this, a configuration in which graphics data (bitmap data) produced in the set-top box 200 is supplied is also conceivable. A similar operation is performed on text data.

Also, in the embodiment described above, in the transmission data generation units 110 and 110A to 110C (see Figs. 2, 13, 18, and 19), the left-eye image data and right-eye image data output from the cameras 111L and 111R are used. Also, in the transmission data generation units 110 and 110A to 110C, audio data output from the microphone 116 is used.

Also, in the transmission data generation units 110 and 110A to 110C, data of superimposition information produced by the subtitle/graphics producing unit 118 and the text producing unit 120 is used. Furthermore, in the transmission data generation units 110 and 110A to 110C, disparity vectors detected by the disparity vector detection unit 114 are used.

However, a configuration in which left-eye image data, right-eye image data, audio data, data of superimposition information, and disparity vectors are retrieved from a data recording medium having them recorded thereon and are used is also conceivable. A disk-shaped recording medium, a semiconductor memory, or the like is conceivable as the data recording medium.

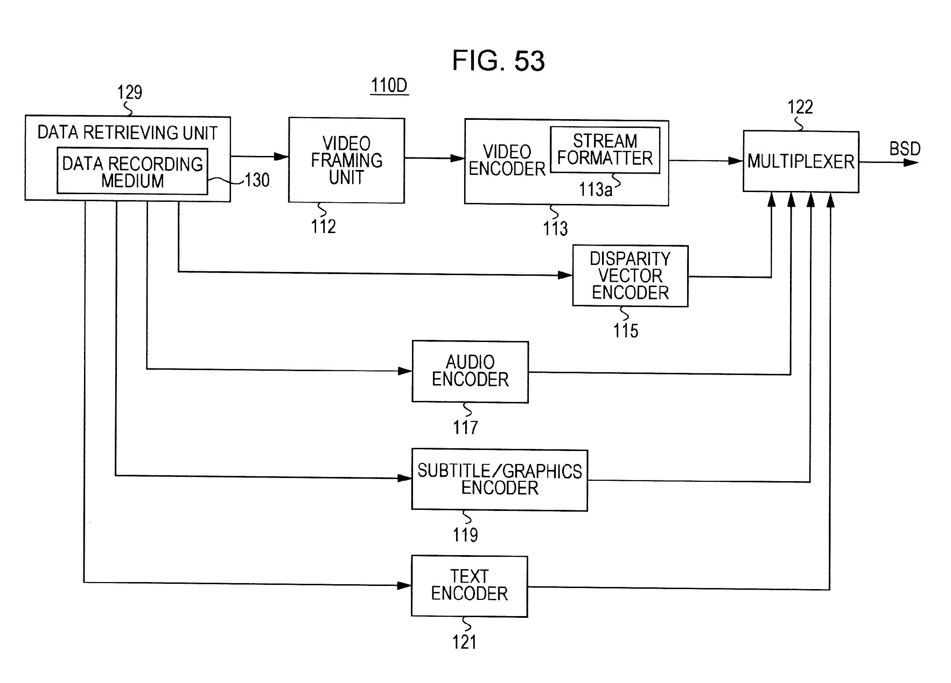

Fig. 53 illustrates an example configuration of, for example, the transmission data generation unit 110D in the broadcast station 100 that generates bit stream data. The transmission data generation unit 110D includes a data retrieving unit 129, a video framing unit 112, a video encoder 113, and a disparity vector encoder 115. Also, the transmission data generation unit 110D includes an audio encoder 117, a subtitle/graphic encoder 119, a text encoder 121, and a multiplexer 122.

A data recording medium 130 is attached to the data retrieving unit 129 in, for example, a removable manner. The data recording medium 130 has recorded thereon, together with left-eye image data and right-eye image data, audio data, data of superimposition information, and disparity vectors in association therewith. The data retrieving unit 129 retrieves the left-eye image data and the right-eye image data from the data recording medium 130, and supplies them to the video framing unit 112. Also, the data retrieving unit 129 retrieves the disparity vector from the data recording medium 130, and supplies it to the disparity vector encoder 115.

Also, the data retrieving unit 129 retrieves the audio data from the data recording medium 130, and supplies it to the audio encoder 117. Also, the data retrieving unit 129 retrieves the subtitle data or graphics data from the data recording medium 130, and supplies it to the subtitle/graphic encoder 119. Furthermore, the data retrieving unit 129 retrieves the text data from the data recording medium 130, and supplies it to the text encoder 121.

The other elements of the transmission data generation unit 110D illustrated in Fig. 53 are configured in a manner similar to that of the transmission data generation unit 110 illustrated in Fig. 2, and operate in a similar manner although the detailed description is omitted.

Also, in the foregoing embodiment, the stereo image display system 10 that is composed of the broadcast station 100, the set-top box 200, and the television receiver 300 has been illustrated. However, as illustrated in Fig. 43, the television receiver 300 includes the bit stream processing unit 306 that functions in a manner equivalent to that of the bit stream processing unit 201 in the set-top box 200. Therefore, as illustrated in Fig. 54, a stereo image display system 10A composed of a broadcast station 100 and a television receiver 300 is also conceivable.

Also, in the foregoing exemplary embodiment, an example in which a data stream (bit stream data) including stereo image data is broadcast from the broadcast station 100 has been illustrated. However, of course, the present invention can also be similarly applied to a system having a configuration in which the data stream is distributed to a receiving terminal by utilizing a network such as the Internet.

Note that this application refers to Japanese Patent Application No. 2009-153686.

### Industrial Applicability

The present invention can be applied to a stereo image display system or the like that superimposes superimposition information such as subtitle information, graphics information, or text information on an image and that displays a resulting image. Reference Signs List

10, 10A stereo image display system, 100 broadcast station, 110, 110A to 110C transmission data generation unit, 111L, 111R camera, 112 video framing unit, 113 video encoder, 113a stream formatter, 114 disparity vector detection unit, 115 disparity vector encoder, 116 microphone, 117 audio encoder, 118 subtitle/graphics producing unit, 119 subtitle/graphic encoder, 120 text producing unit, 121 text encoder, 122 multiplexer, 124 subtitle/graphics processing unit, 125 text processing unit, 126 controller, 127 Z data unit, 129 data retrieving unit, 130 data recording medium, 200 set-top box, 201, 201A to 201D bit stream processing unit, 202 HDMI terminal, 203 antenna terminal, 204 digital tuner, 205 video signal processing circuit, 206 HDMI transmitting unit, 207 audio signal processing circuit, 211 CPU, 212 flash ROM, 213 DRAM, 214 internal bus, 215 remote control receiving unit, 216 remote control transmitter, 220 demultiplexer, 221 video decoder, 222 subtitle/graphics decoder, 223 text decoder, 224 audio decoder, 225 disparity vector decoder, 226 stereo-image subtitle/graphics producing unit, 227 stereo-image text producing unit, 228 video superimposing unit, 229 multi-channel speaker control unit, 231 disparity vector retrieving unit, 232 disparity information retrieving unit, 233 disparity vector detection unit, 300 television receiver, 301 3D signal processing unit, 302 HDMI terminal, 303 HDMI receiving unit, 304 antenna terminal, 305 digital tuner, 306 bit stream processing unit, 307 video signal processing circuit, 308 panel driving circuit, 309 display panel, 310 audio signal processing circuit, 311 audio amplification circuit, 312 speakers, 321 CPU, 322 flash ROM, 323 DRAM, 324 internal bus, 325 remote control receiving unit, 326 remote control transmitter, 400 HDMI cable

## Claims

1. A stereo image data transmitting apparatus comprising:
a first data stream generation unit that generates a first data stream including left-eye image data and right-eye image data for displaying a stereo image;
a disparity information output unit that outputs disparity information for giving disparity to superimposition information to be superimposed on an image that is based on the left-eye image data and the right-eye image data;
a second data stream generation unit that generates a second data stream including data of the superimposition information and having embedded therein the disparity information output from the disparity information output unit; and
a data transmitting unit that multiplexes the first data stream generated by the first data stream generation unit and the second data stream generated by the second data stream generation unit and that transmits a multiplexed stream.

2. The stereo image data transmitting apparatus according to Claim 1,
wherein the disparity information output unit
includes a disparity information determination unit that determines the disparity information for each piece of data of the superimposition information in accordance with content of the image that is based on the left-eye image data and the right-eye image data, and
outputs the disparity information determined by the disparity information determination unit.

3. The stereo image data transmitting apparatus according to Claim 2,
wherein the disparity information determination unit
includes a disparity information detection unit that detects disparity information about one of a left-eye image and a right-eye image with respect to the other at a plurality of positions in an image on the basis of the left-eye image data and the right-eye image data, and
determines, for each piece of data of the superimposition information, disparity information detected at a detection position corresponding to a superimposed position among a plurality of pieces of disparity information detected by the disparity information detection unit.

4. The stereo image data transmitting apparatus according to Claim 1,
wherein the disparity information output unit
includes a disparity information setting unit that sets the disparity information for each piece of data of the superimposition information, and
outputs the disparity information set by the disparity information setting unit.

5. The stereo image data transmitting apparatus according to Claim 1,
wherein the disparity information output unit
includes a disparity information determination unit that determines, for each piece of data of the superimposition information, the disparity information in accordance with content of the image that is based on the left-eye image data and the right-eye image data, and a disparity information setting unit that sets the disparity information for each piece of data of the superimposition information, and
selectively outputs the disparity information determined by the disparity information determination unit or the disparity information set by the disparity information setting unit.

6. The stereo image data transmitting apparatus according to Claim 1,
wherein the data of the superimposition information is bitmap data for displaying a subtitle or graphics.

7. A stereo image data transmitting method comprising:
a first data stream generating step of generating a first data stream including left-eye image data and right-eye image data for displaying a stereo image;
a disparity information outputting step of outputting disparity information for giving disparity to superimposition information to be superimposed on an image that is based on the left-eye image data and the right-eye image data;
a second data stream generating step of generating a second data stream including data of the superimposition information and having embedded therein the disparity information output in the disparity information outputting step; and
a data transmitting step of multiplexing the first data stream generated in the first data stream generating step and the second data stream generated in the second data stream generating step, and transmitting a multiplexed stream.

8. A stereo image data receiving apparatus comprising:
a data receiving unit that receives multiplexed data of a first data stream and a second data stream, the first data stream including left-eye image data and right-eye image data for displaying stereo image data, the second data stream including data of superimposition information to be superimposed on an image that is based on the left-eye image data and the right-eye image data and having embedded therein disparity information for giving disparity to the superimposition information to be superimposed on the image that is based on the left-eye image data and the right-eye image data;
an image data acquisition unit that acquires the left-eye image data and the right-eye image data from the first data stream received by the data receiving unit;
a superimposition information data acquisition unit that acquires the data of the superimposition information from the second data stream received by the data receiving unit;
a disparity information acquisition unit that acquires the disparity information from the second data stream received by the data receiving unit; and
an image data processing unit that gives disparity to the same superimposition information to be superimposed on a left-eye image and right-eye image using the left-eye image data and the right-eye image data acquired by the image data acquisition unit, the data of the superimposition information acquired by the superimposition information data acquisition unit, and the disparity information acquired by the disparity information acquisition unit, and that obtains left-eye image data on which the superimposition information has been superimposed and data of a right-eye image on which the superimposition information has been superimposed.

9. The stereo image data receiving apparatus according to Claim 8, further comprising:
an image data transmitting unit that transmits to an external device stereo image data including the left-eye image data and the right-eye image data obtained by the image data processing unit.

10. The stereo image data receiving apparatus according to Claim 8, further comprising:
an image display unit that displays an image for stereo image display based on the left-eye image data and the right-eye image data obtained by the image data processing unit.

11. A stereo image data receiving method comprising:
a data receiving step of receiving multiplexed data of a first data stream and a second data stream, the first data stream including left-eye image data and right-eye image data for displaying stereo image data, the second data stream including data of superimposition information to be superimposed on an image that is based on the left-eye image data and the right-eye image data and having embedded therein disparity information for giving disparity to the superimposition information to be superimposed on the image that is based on the left-eye image data and the right-eye image data;
an image data acquiring step of acquiring the left-eye image data and the right-eye image data from the first data stream received in the data receiving step;
a superimposition information data acquiring step of acquiring the data of the superimposition information from the second data stream received in the data receiving step;
a disparity information acquiring step of acquiring the disparity information from the second data stream receive in the data receiving step; and
an image data processing step of giving disparity to the same superimposition information to be superimposed on a left-eye image and right-eye image using the left-eye image data and the right-eye image data acquired in the image data acquiring step, the data of the superimposition information acquired in the superimposition information data acquiring step, and the disparity information acquired in the disparity information acquiring step, and obtaining left-eye image data on which the superimposition information has been superimposed and data of a right-eye image on which the superimposition information has been superimposed.

12. A stereo image data transmitting apparatus comprising:
an image data acquisition unit that acquires left-eye image data and right-eye image data for displaying a stereo image;
a disparity information acquisition unit that acquires disparity information about one of a left-eye image and a right-eye image with respect to the other at a predetermined position in the image; and
a data transmitting unit that transmits the disparity information acquired by the disparity information acquisition unit together with stereo image data including the left-eye image data and the right-eye image data acquired by the image data acquisition unit.

13. The stereo image data transmitting apparatus according to Claim 12, further comprising:
a superimposition information data acquisition unit that acquires data of superimposition information to be superimposed on an image that is based on the left-eye image data and the right-eye image data,
wherein the data transmitting unit transmits the disparity information acquired by the disparity information acquisition unit and the data of the superimposition information acquired by the superimposition information data acquisition unit together with the stereo image data including the left-eye image data and the right-eye image data acquired by the image data acquisition unit.

14. The stereo image data transmitting apparatus according to Claim 12,
wherein the image data acquisition unit acquires the left-eye image data and the right-eye image data from a data recording medium on which the left-eye image data, the right-eye image data, and the disparity information are recorded in association with one another, and
wherein the disparity information acquisition unit acquires the disparity information from the data recording medium.

15. A stereo image data transmitting method comprising:
acquiring disparity information about one of left-eye image data and right-eye image data with respect to the other at a predetermined position in an image; and
transmitting the acquired disparity information together with stereo image data including the left-eye image data and the right-eye image data.

16. A stereo image data receiving apparatus comprising:
a data receiving unit that receives disparity information about one of a left-eye image and a right-eye image with respect to the other at a predetermined position in an image, together with stereo image data including left-eye image data and right-eye image data; and
an image data processing unit that gives disparity to the same superimposition information to be superimposed on the left-eye image and the right-eye image using the left-eye image data and the right-eye image data included in the stereo image data and the disparity information, which are received by the data receiving unit, and that obtains left-eye image data on which the superimposition information has been superimposed and right-eye image data on which the superimposition information has been superimposed.

17. A stereo image data receiving method comprising:
a data receiving step of receiving disparity information about one of a left-eye image and a right-eye image with respect to the other at a predetermined position in an image, together with stereo image data including left-eye image data and right-eye image data; and
an image data processing step of giving disparity to the same superimposition information to be superimposed on the left-eye image and the right-eye image using the left-eye image data and the right-eye image data included in the stereo image data and the disparity information, which are received in the data receiving step, and obtaining left-eye image data on which the superimposition information has been superimposed and right-eye image data on which the superimposition information has been superimposed.

18. A data recording medium having stored therein left-eye image data and right-eye image data for displaying a stereo image, and having recorded thereon disparity information about one of a left-eye image and a right-eye image with respect to the other at a predetermined position in an image in association with the left-eye image data and the right-eye image data.

19. The data recording medium according to Claim 18,
wherein data of superimposition information to be superimposed on an image that is based on the left-eye image data and the right-eye image data is further recorded in association with the left-eye image data and the right-eye image data.
